(19) Europäisches Patentamt / European Patent Office / Office européen des brevets

(11) **EP 4 648 485 A1**

(12) **EUROPEAN PATENT APPLICATION**
published in accordance with Art. 153(4) EPC

(43) Date of publication:
**12.11.2025 Bulletin 2025/46**

(21) Application number: **23920838.2**

(22) Date of filing: **28.11.2023**

(51) International Patent Classification (IPC):
**H04W 48/16** (2009.01)   **H04W 48/10** (2009.01)
**H04W 12/06** (2021.01)

(52) Cooperative Patent Classification (CPC):
**H04W 8/00; H04W 12/06; H04W 12/08;**
**H04W 12/60; H04W 28/20; H04W 28/22;**
**H04W 28/24; H04W 48/10; H04W 48/16;**
**H04W 48/20; H04W 52/02**

(86) International application number:
**PCT/CN2023/134780**

(87) International publication number:
**WO 2024/164647 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.02.2023 CN 202310153434**

(71) Applicant: **Huawei Technologies Co., Ltd.**
**Shenzhen, Guangdong 518129 (CN)**

(72) Inventors:
- **LI, Huikang**
  **Shenzhen, Guangdong 518129 (CN)**
- **LI, Shijun**
  **Shenzhen, Guangdong 518129 (CN)**
- **LI, Jie**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD AND COMMUNICATION DEVICE**

(57) Embodiments of this application provide a communication method and a communication apparatus. The communication method is applied to a first STA. The communication method includes: obtaining first information by using a communication technology other than a Wi-Fi communication technology, where the first information includes an identifier of a first AP, a sending moment of a first message or time that has elapsed since last transmission of the first message, a channel occupied by the first message, and a sending interval of the first message, the first message is used to enable the first AP to be discoverable, and the first message is broadcast by the first AP by using the Wi-Fi communication technology; and scanning the first message based on the first information by using the Wi-Fi communication technology. In this way, the first STA can obtain, through scanning based on the first information in a timely manner, the first message on the channel occupied by the first message, thereby reducing overall scanning time of the first STA for the first message.

FIG. 6

## Description

This application claims priority to Chinese Patent Application No. 202310153434.4, filed with the China National Intellectual Property Administration on February 9, 2023 and entitled "COMMUNICATION METHOD AND COMMUNICATION APPARATUS", which is incorporated herein by reference in its entirety.

## TECHNICAL FIELD

Embodiments of this application relate to the field of communication technologies, and more specifically, to a communication method and a communication apparatus.

## BACKGROUND

With rapid development of wireless communication technologies, wireless local area networks (wireless local area network, WLAN) are deployed in many residential areas and public places (such as restaurants, coffee shops, shopping malls, airports, conference centers, and libraries) currently. A wireless fidelity (wireless fidelity, Wi-Fi) device (such as a mobile phone, a notebook computer, or a tablet) may access a WLAN provided by an access point (access point, AP) (such as a router) or another Wi-Fi device (such as a smart screen), so that the Wi-Fi device can use the WLAN and implement communication with another device that has been connected to the WLAN.

According to the IEEE 802.11 wireless local area network standard, a Wi-Fi device that provides a wireless network service periodically sends a Wi-Fi beacon (Beacon) frame. Before a Wi-Fi device joins a WLAN, to enable the Wi-Fi device to scan a Wi-Fi beacon frame broadcast by another Wi-Fi device, the Wi-Fi device needs to stay for at least one Wi-Fi beacon frame sending interval on each channel of a band in which the Wi-Fi device is located. This increases overall time of scanning the Wi-Fi beacon frame by the Wi-Fi device. In addition, the Wi-Fi beacon frame sending interval is usually relatively long. In this case, the overall time of scanning the Wi-Fi beacon frame by the Wi-Fi device is further increased, reducing efficiency of discovering and accessing the WLAN by the Wi-Fi device, and causing poor user experience.

## SUMMARY

Embodiments of this application provide a communication method and a communication apparatus. According to the communication method, a first STA can obtain, through scanning in a timely manner, a first message on a channel occupied by the first message, so that overall scanning time of the first STA for the first message is reduced, thereby helping improve user experience.

According to a first aspect, a communication method is provided. The communication method may be performed by a first STA, or may be performed by a component (for example, a chip or a circuit) of a first STA. This is not limited. For ease of description, the following uses an example in which the method is performed by a first STA for description.

The communication method includes: obtaining first information by using a first communication technology, where the first information includes an identifier of a first AP, a sending moment of a first message or time that has elapsed since last transmission of the first message, a channel occupied by the first message, and a sending interval of the first message, the first communication technology is a communication technology other than a Wi-Fi communication technology, the first message is used to enable the first AP to be discoverable, and the first message is broadcast by the first AP by using the Wi-Fi communication technology; and scanning the first message based on the first information by using the Wi-Fi communication technology.

In this embodiment of this application, the first STA obtains, by using the first communication technology, the first information related to a Wi-Fi beacon frame (that is, the first message) broadcast by the first AP. In this way, the first STA does not need to switch each channel to scan the first message, but can directly obtain, through scanning based on the first information in a timely manner, the first message on the channel occupied by the first message, thereby reducing overall scanning time of the first STA for the first message, and helping improve user experience.

With reference to the first aspect, in some implementations of the first aspect, the first communication technology is a low-power wireless communication technology.

In this embodiment of this application, the first STA obtains, by using the low-power wireless communication technology, the first information related to a Wi-Fi beacon frame (that is, the first message) broadcast by the first AP. In this way, power consumption of the first STA can be reduced.

With reference to the first aspect, in some implementations of the first aspect, the first information further includes at least one of the following: quality of service QoS information of the first AP and information related to establishing a connection and/or communication with the first AP; and before scanning the first message based on the first information by using the Wi-Fi communication technology, the communication method further includes: determining, based on the first information, that the first AP meets a first condition, where the first condition includes at least one of the following: belonging to a trusted device group of the first STA, belonging to a public reliable infrastructure, meeting a QoS requirement of the first STA, and being capable of providing a connection mode and/or a communication mode supported by the first STA.

In the foregoing technical solution, the first STA needs to select, based on the first information, the first AP that meets the first condition, thereby ensuring that the first AP can provide good quality of service for the first STA, or ensuring that the first AP can establish a connection and/or communicate with the first STA, or ensuring communication security of the first STA.

With reference to the first aspect, in some implementations of the first aspect, when the first information includes the time that has elapsed since last transmission of the first message, scanning the first message based on the first information by using the Wi-Fi communication technology includes: estimating the sending moment of the first message based on the time that has elapsed since last transmission of the first message, the sending interval of the first message, current local time of the first STA, and a moment at which the first information is obtained; and scanning the first message based on the estimated sending moment of the first message by using the Wi-Fi communication technology and the channel occupied by the first message.

In the foregoing technical solution, the first STA estimates the sending moment of the first message based on the first information and the current local time of the first STA. In this way, impact of a clock offset of the first STA and the first AP on scanning for the first message can be reduced, thereby reducing overheads of clock synchronization.

With reference to the first aspect, in some implementations of the first aspect, the communication method further includes: obtaining second information by using a second communication technology, where the second information includes an identifier of a second AP, a sending moment of a second message or time that has elapsed since last transmission of the second message, a channel occupied by the second message, and a sending interval of the second message, the second information further includes at least one of the following: QoS information of the second AP and information related to establishing a connection and/or communication with the second AP, the second communication technology is a communication technology other than the Wi-Fi communication technology, the second message is used to enable the second AP to be discoverable, and the second message is broadcast by the second AP by using the Wi-Fi communication technology; determining, based on the second information, whether the second AP meets the first condition; and when the second AP meets the first condition, scanning the second message based on the second information by using the Wi-Fi communication technology; or when the second AP does not meet the first condition, determining that the second message does not need to be scanned by using the Wi-Fi communication technology.

In the foregoing technical solution, the first STA needs to select, based on the second information, the second AP that meets the first condition, thereby ensuring that the second AP can provide good quality of service for the first STA, or ensuring that the second AP can establish a connection and/or communicate with the first STA, or ensuring communication security of the first STA.

With reference to the first aspect, in some implementations of the first aspect, when the second information includes the time that has elapsed since last transmission of the second message, scanning the second message based on the second information by using the Wi-Fi communication technology includes: estimating the sending moment of the second message based on the time that has elapsed since last transmission of the second message, the sending interval of the second message, the current local time of the first STA, and a moment at which the second information is obtained; and scanning the second message based on the estimated sending moment of the second message by using the Wi-Fi communication technology and the channel occupied by the second message.

In the foregoing technical solution, the first STA estimates the sending moment of the second message based on the second information and the current local time of the first STA. In this way, impact of a clock offset of the first STA and the second AP on scanning for the second message can be reduced, thereby reducing overheads of clock synchronization.

With reference to the first aspect, in some implementations of the first aspect, scanning the first message based on the first information by using the Wi-Fi communication technology, and scanning the second message based on the second information by using the Wi-Fi communication technology include: generating a channel scan sequence {A1, A2}, where Al is the channel occupied by the first message, A2 is the channel occupied by the second message, a first delay is less than a second delay, the first delay includes a delay, from a first moment, of first switching to the channel occupied by the first message to scan the first message and then switching to the channel occupied by the second message to scan the second message, and the second delay includes a delay, from the first moment, of first switching to the channel occupied by the second message to scan the second message and then switching to the channel occupied by the first message to scan the first message; and sequentially scanning the first message and the second message based on the channel scan sequence by using the Wi-Fi communication technology.

In the foregoing technical solution, the first STA compares the delay, from the first moment, of first switching to the channel occupied by the first message to scan the first message and then switching to the channel occupied by the second message to scan the second message (one scanning manner) with the delay, from the first moment, of first switching to the channel occupied by the second message to scan the second message and then switching to the channel occupied by the first message to scan the first message (another scanning manner), and generates the channel scan sequence {A1, A2} based on a scanning manner corresponding to a shorter delay, thereby further reducing overall scanning time of the first STA for the first message and the second message and power consumption of the first STA, and helping further improve user experience.

With reference to the first aspect, in some implementations of the first aspect, the method further includes: stopping scanning a message by using the Wi-Fi communication technology in a gap of switching from the channel occupied by the first message to the channel occupied by the second message.

In the foregoing technical solution, in the gap of switching from the channel occupied by the first message to the channel occupied by the second message, the first STA stops scanning a message by using the Wi-Fi communication technology. The first STA may enable a Wi-Fi radio frequency module of the first STA to be in a sleep state. In this way, power consumption of the first STA can be further reduced. In addition, the first STA may exchange common data instead of scanning a message by using the Wi-Fi radio frequency module. In this way, impact of a Wi-Fi scanning operation on normal service communication can be reduced.

With reference to the first aspect, in some implementations of the first aspect, the first communication technology is the same as the second communication technology; and when the first AP supports the first communication technology and the second AP does not support the first communication technology, both the first information and the second information are broadcast by the first AP; or when the first AP does not support the first communication technology and the second AP supports the first communication technology, both the first information and the second information are broadcast by the second AP.

In the foregoing technical solution, an AP supporting the first communication technology may help an AP not supporting the first communication technology send, to the first STA, related information (for example, the first information and the second information) used to enable the AP not supporting the first communication technology to be discoverable. In this way, the first STA can discover more APs. In addition, the first STA may choose to establish communication with more APs that meet the first condition.

With reference to the first aspect, in some implementations of the first aspect, the first information and the second information are carried in a same message or different messages.

With reference to the first aspect, in some implementations of the first aspect, a message broadcast interval of the first AP is related to quality of service or a performance status of the first AP; or a message broadcast interval of the second AP is related to quality of service or a performance status of the second AP. The message is a message that carries the first information and/or the second information.

With reference to the first aspect, in some implementations of the first aspect, the first AP or the second AP broadcasts a message through at least one channel corresponding to the first communication technology. The message is a message that carries the first information and/or the second information.

In the foregoing technical solution, the first AP or the second AP may broadcast a message (a broadcast message carrying the first information or the second information) through a channel corresponding to the first communication technology. That is, a channel through which the first AP or the second AP broadcasts a message is a fixed channel. In this way, the first STA does not need to switch a channel corresponding to the first communication technology, but can obtain a message through scanning by using only the fixed channel corresponding to the first communication technology, thereby further reducing a delay in scanning a message by the first STA by using the first communication technology and power consumption of the first STA.

With reference to the first aspect, in some implementations of the first aspect, when the first information includes the information related to establishing a connection and/or communication with the first AP, the communication method further includes: based on the identifier of the first AP, determining whether a logged-in account on the first STA and a logged-in account on the first AP belong to a same domain account, or determining that the first AP belongs to the trusted device group of the first STA; and when the logged-in account on the first STA and the logged-in account on the first AP belong to the same domain account, or the first AP belongs to the trusted device group of the first STA, establishing a session connection with the first AP based on the first information; or when the logged-in account on the first STA and the logged-in account on the first AP do not belong to the same domain account, or the first AP does not belong to the trusted device group of the first STA, performing authentication on a session between the first STA and the first AP based on the first information, and establishing a session connection with the first AP based on the first information when the authentication on the session succeeds.

In the foregoing technical solution, because the logged-in account on the first STA and the logged-in account on the first AP belong to the same domain account, or the first AP belongs to the trusted device group of the first STA, it may be considered that a trust relationship exists between the first STA and the first AP. In this case, a session connection may be directly established between the first STA and the first AP without session authentication. This not only ensures that the session connection between the first STA and the first AP is established in a trusted environment, but also accelerates a process of establishing a session between the first STA and the first AP. Because the logged-in account on the first STA and the logged-in account on the first AP do not belong to the same domain account, or the first AP does not belong to the trusted device group of the first STA, it may be considered that no trust relationship exists between the first STA and the first AP. In this case, session authentication needs to be performed between the first STA and the first AP, and the session connection is established after the session authentication succeeds. This ensures that the session connection between the first STA and the first AP is established in a trusted environment.

In addition, in an embodiment in which the first information further includes the information related to establishing a connection and/or communication with the first AP, the first STA can directly establish a connection and communicate with the first AP based on the first information without performing complex bidirectional interaction (such as permission authentication, channel selection, and session negotiation) with the first AP, thereby accelerating a process of connection establishment and communication between the first STA and the first AP.

With reference to the first aspect, in some implementations of the first aspect, establishing the session connection with the first AP based on the first information includes: establishing the session connection with the first AP based on the first information and a first performance status, where the first performance status includes a current performance status of the first STA and/or a current performance status of the first AP.

With reference to the first aspect, in some implementations of the first aspect, establishing the session connection with the first AP based on the first information and the first performance status includes: when the first performance status meets a second condition, creating a transmission channel corresponding to a service based on the first information; or when the first performance status does not meet a second condition, creating a transmission channel of a target type based on the first information, where the second condition includes at least one of the following: communication quality of the first STA is greater than a first threshold, communication quality of the first AP is greater than a second threshold, resource usage of the first STA is less than a third threshold, and resource usage of the first AP is less than a fourth threshold.

In the foregoing solution, when the first performance status meets the second condition, the transmission channel corresponding to the service is created. In this way, resource utilization can be improved while service transmission performance of the first STA is ensured, thereby improving overall quality of service of a system.

With reference to the first aspect, in some implementations of the first aspect, when the second AP meets the first condition, and the second information includes the information related to establishing a connection and/or communication with the second AP, the communication method further includes: based on the identifier of the second AP, determining whether a logged-in account on the first STA and a logged-in account on the second AP belong to a same domain account, or determining whether the second AP belongs to the trusted device group of the first STA; and when the logged-in account on the first STA and the logged-in account on the second AP belong to the same domain account, or the second AP belongs to the trusted device group of the first STA, establishing a session connection with the second AP based on the second information; or when the logged-in account on the first STA and the logged-in account on the second AP do not belong to the same domain account, or the second AP does not belong to the trusted device group of the first STA, performing authentication on a session between the first STA and the second AP based on the second information, and establishing a session connection with the second AP based on the second information when the authentication on the session succeeds.

In the foregoing technical solution, because the logged-in account on the first STA and the logged-in account on the second AP belong to the same domain account, or the second AP belongs to the trusted device group of the first STA, it may be considered that a trust relationship exists between the first STA and the second AP. In this case, a session connection may be directly established between the first STA and the second AP without session authentication. This not only ensures that the session connection between the first STA and the second AP is established in a trusted environment, but also accelerates a process of establishing a session between the first STA and the second AP. Because the logged-in account on the first STA and the logged-in account on the second AP do not belong to the same domain account, or the second AP does not belong to the trusted device group of the first STA, it may be considered that no trust relationship exists between the first STA and the second AP. In this case, session authentication needs to be performed between the first STA and the second AP, and the session connection is established after the session authentication succeeds. This ensures that the session connection between the first STA and the second AP is established in a trusted environment.

In addition, in an embodiment in which the second information further includes the information related to establishing a connection and/or communication with the second AP, the first STA can directly establish a connection and communicate with the second AP based on the second information without performing a complex bidirectional interaction procedure (such as permission authentication, channel selection, and session negotiation) with the second AP, thereby accelerating a process of connection establishment and communication between the first STA and the second AP.

With reference to the first aspect, in some implementations of the first aspect, establishing the session connection with the second AP based on the second information includes: establishing the session connection with the second AP based on the second information and a second performance status, where the second performance status includes a current performance status of the first STA and/or a current performance status of the second AP.

With reference to the first aspect, in some implementations of the first aspect, establishing the session connection with the second AP based on the second information and the second performance status includes: when the second performance status meets a third condition, creating a transmission channel corresponding to a service based on the second information; or when the second performance status does not meet a third condition, creating a transmission channel of a target type based on the second information, where the third condition includes: communication quality of the first STA is greater than a fifth threshold, communication quality of the second AP is greater than a sixth threshold, resource usage of the first STA is less than a seventh threshold, and resource usage of the second AP is less than an eighth threshold.

In the foregoing solution, when the second performance status meets the third condition, the transmission channel corresponding to the service is created. In this way, resource utilization can be improved while service transmission performance of the first STA is ensured, thereby improving overall quality of service of a system.

With reference to the first aspect, in some implementations of the first aspect, the communication method further includes: adjusting, based on a moving speed of the first STA, an interval for obtaining the first information by using the first communication technology and/or an interval for obtaining the second information by using the second communication technology.

In the foregoing technical solution, the first STA adjusts, based on the moving speed of the first STA, the interval for obtaining the first information by using the first communication technology and/or the interval for obtaining the second information by using the second communication technology. In this way, when network connection quality of the first STA is ensured, unnecessary operations of listening by using the first communication technology and/or the second communication technology are reduced, and power consumption of the first STA is further reduced.

With reference to the first aspect, in some implementations of the first aspect, the QoS information of the first AP is carried in N1 attribute fields of a third message; and/or the information related to establishing a connection and/or communication with the first AP is carried in N2 attribute fields of the third message, where the third message carries the first information; and at least one of a value of each of the N1 attribute fields, a value of N1, a value of each of the N2 attribute fields, and a value of N2 is determined based on a real-time running status of the first AP, a real-time connection mode of the first AP, and/or a real-time communication mode of the first AP.

In the foregoing technical solution, the first AP may dynamically adjust, based on a status of the first AP, content specifically included in the QoS information of the first AP and/or content specifically included in the information related to establishing a connection and/or communication with the first AP in the first information. In this way, the first AP can provide differentiated services for the first STA in different time periods, and network transmission security is improved.

With reference to the first aspect, in some implementations of the first aspect, the QoS information of the first AP includes a performance indicator of the first AP and/or a network change status of the first AP; and/or the information related to establishing a connection and/or communication with the first AP includes: information related to at least one type of service supported by the first AP, and/or at least one access and authentication type supported by the first AP.

With reference to the first aspect, in some implementations of the first aspect, the information related to the at least one type of service supported by the first AP includes: a transmission parameter of the at least one type of service supported by the first AP, and/or a service policy of the at least one type of service supported by the first AP.

With reference to the first aspect, in some implementations of the first aspect, the QoS information of the second AP is carried in M1 attribute fields of a fourth message; and/or the information related to establishing a connection and/or communication with the second AP is carried in M2 attribute fields of the fourth message, where the fourth message carries the second information; and at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

In the foregoing technical solution, the second AP may dynamically adjust, based on a status of the second AP, content specifically included in the QoS information of the second AP and/or content specifically included in the information related to establishing a connection and/or communication with the second AP in the second information. In this way, the second AP can provide differentiated services for the first STA in different time periods, and network transmission security is improved.

With reference to the first aspect, in some implementations of the first aspect, the QoS information of the second AP includes a performance indicator of the second AP and/or a network change status of the second AP; and/or the information related to establishing a connection and/or communication with the second AP includes: information related to at least one type of service supported by the second AP, and/or at least one access and authentication type supported by the second AP.

With reference to the first aspect, in some implementations of the first aspect, the information related to the at least one type of service supported by the second AP includes: a transmission parameter of the at least one type of service supported by the second AP, and/or a service policy of the at least one type of service supported by the second AP.

According to a second aspect, a communication method is provided. The communication method may be performed by a first AP, or may be performed by a component (for example, a chip or a circuit) of a first AP. This is not limited. For ease of description, the following uses an example in which the method is performed by a first AP for description.

The communication method includes: sending first information by using a first communication technology, where the first information includes an identifier of the first AP, a sending moment of a first message or time that has elapsed since last transmission of the first message, a channel occupied by the first message, and a sending interval of the first message, the first communication technology is a communication technology other than a Wi-Fi communication technology, and the first message is used to enable the first AP to be discoverable; and broadcasting the first message by using the Wi-Fi communication technology.

With reference to the second aspect, in some implementations of the second aspect, the first information further includes at least one of the following: quality of service QoS information of the first AP and information related to establishing a connection and/or communication with the first AP.

With reference to the second aspect, in some implementations of the second aspect, the method further includes: obtaining second information from a second AP by using the Wi-Fi communication technology, where the second information includes an identifier of the second AP, a sending moment of a second message or time that has elapsed since last transmission of the second message, a channel occupied by the second message, and a sending interval of the second message, the second message is used to enable the second AP to be discoverable, and the second message is broadcast by the second AP by using the Wi-Fi communication technology; and sending the second information by using a second communication technology, where the second communication technology is a communication technology other than the Wi-Fi communication technology.

With reference to the second aspect, in some implementations of the second aspect, the second information further includes at least one of the following: QoS information of the second AP, and information related to establishing a connection and/or communication with the second AP.

With reference to the second aspect, in some implementations of the second aspect, the second AP does not support the first communication technology.

With reference to the second aspect, in some implementations of the second aspect, the second information and the first information are carried in a same message or different messages for sending.

With reference to the second aspect, in some implementations of the second aspect, an interval at which the first AP sends the first information or the second information is related to quality of service or a performance status of the first AP.

With reference to the second aspect, in some implementations of the second aspect, the first information or the second information is sent by the first AP through at least one channel corresponding to the first communication technology.

With reference to the second aspect, in some implementations of the second aspect, the QoS information of the first AP is carried in N1 attribute fields of a third message; and/or the information related to establishing a connection and/or communication with the first AP is carried in N2 attribute fields of the third message, where the third message carries the first information; and at least one of a value of each of the N1 attribute fields, a value of N1, a value of each of the N2 attribute fields, and a value of N2 is determined based on a real-time running status of the first AP, a real-time connection mode of the first AP, and/or a real-time communication mode of the first AP.

With reference to the second aspect, in some implementations of the second aspect, the QoS information of the first AP includes a performance indicator of the first AP and/or a network change status of the first AP; and/or the information related to establishing a connection and/or communication with the first AP includes: information related to at least one type of service supported by the first AP, and/or at least one access and authentication type supported by the first AP.

With reference to the second aspect, in some implementations of the second aspect, the information related to the at least one type of service supported by the first AP includes: a transmission parameter of the at least one type of service supported by the first AP, and/or a service policy of the at least one type of service supported by the first AP.

With reference to the second aspect, in some implementations of the second aspect, the QoS information of the second AP is carried in M1 attribute fields of a fourth message; and/or the information related to establishing a connection and/or communication with the second AP is carried in M2 attribute fields of the fourth message, where the fourth message carries the second information; and at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

With reference to the second aspect, in some implementations of the second aspect, the QoS information of the second AP includes a performance indicator of the second AP and/or a network change status of the second AP; and/or the information related to establishing a connection and/or communication with the second AP includes: information related to at least one type of service supported by the second AP, and/or at least one access and authentication type supported by the second AP.

With reference to the second aspect, in some implementations of the second aspect, the information related to the at least one type of service supported by the second AP includes: a transmission parameter of the at least one type of service supported by the second AP, and/or a service policy of the at least one type of service supported by the second AP.

For technical effects of the second aspect and the possible implementations, refer to the related descriptions of the first aspect. Details are not described herein again.

According to a third aspect, a communication method is provided. The communication method may be performed by a first Wi-Fi device, or may be performed by a component (for example, a chip or a circuit) of a first Wi-Fi device. This is not limited. For ease of description, the following uses an example in which the method is performed by a first Wi-Fi device for description.

The communication method includes: obtaining third information by using a first communication technology, where the third information includes an identifier of a second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, and the first request message is used to request to discover a device that can provide a Wi-Fi network service; sending the first request message to the second Wi-Fi device based on the third information by using the Wi-Fi communication technology; and scanning a first response message from the second Wi-Fi device by using the Wi-Fi communication technology, where the first response message is used to enable the second Wi-Fi device to be discoverable.

In this embodiment of this application, the first Wi-Fi device obtains, by using the first communication technology, the third information related to listening to the first request message by the second Wi-Fi device, and directly sends, based on the third information, the first request message on the first target channel on which the second Wi-Fi device listens. In this way, the second Wi-Fi device can detect the first request message in a timely manner, and feed back the first response message to the first Wi-Fi device, thereby reducing scanning time of the second Wi-Fi device for the first request message. In addition, the first Wi-Fi device does not need to switch each channel to scan the first response message, but can directly obtain the first response message on the first target channel through scanning in a timely manner based on the first target channel. This reduces overall scanning time of the first Wi-Fi device for the first response message, thereby helping improve user experience.

With reference to the third aspect, in some implementations of the third aspect, the first communication technology is a low-power wireless communication technology.

In this embodiment of this application, the first Wi-Fi device obtains, by using the low-power wireless communication technology, first information related to a Wi-Fi beacon frame (that is, a first message) broadcast by a first AP. In this way, power consumption of the first Wi-Fi device can be reduced.

With reference to the third aspect, in some implementations of the third aspect, the third information further includes at least one of the following: quality of service QoS information of the second Wi-Fi device and information related to establishing a connection and/or communication with the second Wi-Fi device; and before sending the first request message to the second Wi-Fi device based on the third information by using the Wi-Fi communication technology, the communication method further includes: determining, based on the third information, that the second Wi-Fi device meets a fourth condition, where the fourth condition includes at least one of the following: belonging to a trusted device group of the first Wi-Fi device, belonging to a public reliable infrastructure, meeting a QoS requirement of the first Wi-Fi device, and being capable of providing a connection mode and/or a communication mode supported by the first Wi-Fi device.

In the foregoing technical solution, the first Wi-Fi device needs to select, based on the third information, the second Wi-Fi device that meets the fourth condition, thereby ensuring that the second Wi-Fi device can provide good quality of service for the first Wi-Fi device, or ensuring that the second Wi-Fi device can establish a connection and/or communicate with the first Wi-Fi device, or ensuring communication security of the first Wi-Fi device.

With reference to the third aspect, in some implementations of the third aspect, when the third information includes the time that has elapsed since the second Wi-Fi device starts listening on the first target channel last time, sending the first request message to the second Wi-Fi device based on the third information by using the Wi-Fi communication technology includes: estimating a listening start moment of the second Wi-Fi device on the first target channel based on the time that has elapsed since the second Wi-Fi device starts listening on the first target channel last time, the interval at which the second Wi-Fi device listens on the first target channel, current local time of the first Wi-Fi device, and a moment at which the third information is obtained; and sending the first request message based on the estimated listening start moment of the second Wi-Fi device on the first target channel by using the Wi-Fi communication technology and the first target channel.

In the foregoing technical solution, the first Wi-Fi device estimates the listening start moment of the second Wi-Fi device on the first target channel based on the third information and the current local time of the first Wi-Fi device. In this way, impact of a clock offset of the first Wi-Fi device and the second Wi-Fi device on scanning for the first message can be reduced, thereby reducing overheads of clock synchronization.

With reference to the third aspect, in some implementations of the third aspect, the communication method further includes: obtaining fourth information by using a second communication technology, where the fourth information includes an identifier of a third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, the fourth information further includes quality of service QoS information of the third Wi-Fi device and information related to establishing a connection and/or communication with the third Wi-Fi device, the second communication technology is a communication technology other than the Wi-Fi communication technology, and the second request message is used to request to discover a device that can provide a Wi-Fi network service; determining, based on the fourth information, whether the third Wi-Fi device meets the fourth condition; and when the third Wi-Fi device meets the fourth condition, sending the second request message to the third Wi-Fi device based on the fourth information by using the Wi-Fi communication technology, and scanning a second response message from the third Wi-Fi device by using the Wi-Fi communication technology, where the second response message is used to enable the third Wi-Fi device to be discoverable; or when the third Wi-Fi device does not meet the fourth condition, determining that the second request message does not need to be sent to the third Wi-Fi device by using the Wi-Fi communication technology.

In the foregoing technical solution, the first Wi-Fi device needs to select, based on the fourth information, the third Wi-Fi device that meets the fourth condition, thereby ensuring that the third Wi-Fi device can provide good quality of service for the first Wi-Fi device, or ensuring that the third Wi-Fi device can establish a connection and/or communicate with the first Wi-Fi device, or ensuring communication security of the first Wi-Fi device.

With reference to the third aspect, in some implementations of the third aspect, when the fourth information includes the time that has elapsed since the third Wi-Fi device starts listening on the second target channel last time, sending the second request message to the third Wi-Fi device based on the fourth information by using the Wi-Fi communication technology includes: estimating a listening start moment of the third Wi-Fi device on the second target channel based on the time that has elapsed since the third Wi-Fi device starts listening on the second target channel last time, the interval at which the third Wi-Fi device listens on the second target channel, the current local time of the first Wi-Fi device, and a moment at which the fourth information is obtained; and sending the second request message based on the estimated listening start moment of the third Wi-Fi device on the second target channel by using the Wi-Fi communication technology and the second target channel.

In the foregoing technical solution, the first Wi-Fi device estimates the listening start moment of the third Wi-Fi device on the second target channel based on the fourth information and the current local time of the first Wi-Fi device. In this way, impact of a clock offset of the first Wi-Fi device and the third Wi-Fi device on scanning for the first message can be reduced, thereby reducing overheads of clock synchronization.

With reference to the third aspect, in some implementations of the third aspect, sending the first request message to the second Wi-Fi device based on the third information by using the Wi-Fi communication technology, and sending the second request message to the third Wi-Fi device based on the fourth information by using the Wi-Fi communication technology include: generating a channel sending sequence {B1, B2}, where B1 is the first target channel, B2 is the second target channel, a third delay is less than a fourth delay, the third delay includes a delay, from a second moment, of first switching to the first target channel to send the first request message and scan the first response message and then switching to the second target channel to send the second request message and scan the second response message, and the fourth delay includes a delay, from the second moment, of first switching to the second target channel to send the second request message and scan the second response message and then switching to the first target channel to send the first request message and scan the first response message; and sequentially sending the first request message and the second request message based on the channel sending sequence by using the Wi-Fi communication technology.

In the foregoing technical solution, the first Wi-Fi device compares the delay, from the second moment, of first switching to the first target channel to send the first request message and scan the first response message and then switching to the second target channel to send the second request message and scan the second response message (one manner of sending a request message and scanning a response message) with the delay, from the second moment, of first switching to the second target channel to send the second request message and scan the second response message and then switching to the first target channel to send the first request message and scan the first response message (another manner of sending a request message and scanning a response message), and generates the channel sending sequence {B1, B2} based on a sending manner corresponding to a shorter delay. This reduces a delay in obtaining, by the first Wi-Fi device through scanning, response messages of all Wi-Fi devices (such as the second Wi-Fi device and the third Wi-Fi device) that can provide a Wi-Fi network service, and reduces power consumption of the first Wi-Fi device, thereby helping further improve user experience.

With reference to the third aspect, in some implementations of the third aspect, the method further includes: stopping sending a request message and scanning a response message by using the Wi-Fi communication technology in a gap of switching from the first target channel to the second target channel.

In the foregoing technical solution, in the gap of switching from the first target channel to the second target channel, the first Wi-Fi device stops sending a request message and scanning a response message by using the Wi-Fi communication technology. The first Wi-Fi device may enable a Wi-Fi radio frequency module of the first Wi-Fi device to be in a sleep state. In this way, power consumption of the first Wi-Fi device can be further reduced. In addition, the first Wi-Fi device exchanges common data instead of sending a request message and scanning a response message by using the Wi-Fi radio frequency module. In this way, impact of a Wi-Fi scanning operation on normal service communication can be reduced.

With reference to the third aspect, in some implementations of the third aspect, the first communication technology is the same as the second communication technology; and when the second Wi-Fi device supports the first communication technology and the third Wi-Fi device does not support the first communication technology, both the third information and the fourth information are broadcast by the second Wi-Fi device; or when the second Wi-Fi device does not support the first communication technology and the third Wi-Fi device supports the first communication technology, both the third information and the fourth information are broadcast by the third Wi-Fi device.

In the foregoing technical solution, a Wi-Fi device supporting the first communication technology may help a Wi-Fi device not supporting the first communication technology send, to the first Wi-Fi device, information (for example, the third information and the fourth information) related to listening to a request message by the Wi-Fi device. In this way, the first Wi-Fi device can discover more Wi-Fi devices. In addition, the first Wi-Fi device may choose to establish communication with more Wi-Fi devices that meet the fourth condition.

With reference to the third aspect, in some implementations of the third aspect, the third information and the fourth information are carried in a same message or different messages.

With reference to the third aspect, in some implementations of the third aspect, a message broadcast interval of the second Wi-Fi device is related to quality of service or a performance status of the second Wi-Fi device; or a message broadcast interval of the third Wi-Fi device is related to quality of service or a performance status of the third Wi-Fi device.

With reference to the third aspect, in some implementations of the third aspect, the second Wi-Fi device or the third Wi-Fi device broadcasts a message through at least one channel corresponding to the first communication technology.

In the foregoing technical solution, the second Wi-Fi device or the third Wi-Fi device may broadcast a message (a broadcast message carrying the third information or the fourth information) through a channel corresponding to the first communication technology. That is, a channel through which the second Wi-Fi device or the third Wi-Fi device broadcasts a message is a fixed channel. In this way, the first Wi-Fi device does not need to switch a channel corresponding to the first communication technology, but can obtain a message through scanning by using only the fixed channel corresponding to the first communication technology, thereby further reducing a delay in scanning a message by the first Wi-Fi device by using the first communication technology and power consumption of the first Wi-Fi device.

With reference to the third aspect, in some implementations of the third aspect, when the third information includes the information related to establishing a connection and/or communication with the second Wi-Fi device, the communication method further includes: based on the identifier of the second Wi-Fi device, determining whether a logged-in account on the first Wi-Fi device and a logged-in account on the second Wi-Fi device belong to a same domain account, or determining that the second Wi-Fi device does not belong to the trusted device group of the first Wi-Fi device; and when the logged-in account on the first Wi-Fi device and the logged-in account on the second Wi-Fi device belong to the same domain account, or the second Wi-Fi device belongs to the trusted device group of the first Wi-Fi device, establishing a session connection with the second Wi-Fi device based on the third information; or when the logged-in account on the first Wi-Fi device and the logged-in account on the second Wi-Fi device do not belong to the same domain account, or the second Wi-Fi device does not belong to the trusted device group of the first Wi-Fi device, performing authentication on a session between the first Wi-Fi device and the second Wi-Fi device based on the third information, and establishing a session connection with the second Wi-Fi device based on the third information when the authentication on the session succeeds.

In the foregoing technical solution, because the logged-in account on the first Wi-Fi device and the logged-in account on the second Wi-Fi device belong to the same domain account, or the second Wi-Fi device belongs to the trusted device group of the first Wi-Fi device, it may be considered that a trust relationship exists between the first Wi-Fi device and the second Wi-Fi device. In this case, a session connection may be directly established between the first Wi-Fi device and the second Wi-Fi device without session authentication. This not only ensures that the session connection between the first Wi-Fi device and the second Wi-Fi device is established in a trusted environment, but also accelerates a process of establishing a session between the first Wi-Fi device and the second Wi-Fi device. Because the logged-in account on the first Wi-Fi device and the logged-in account on the second Wi-Fi device do not belong to the same domain account, or the second Wi-Fi device does not belong to the trusted device group of the first Wi-Fi device, it may be considered that no trust relationship exists between the first Wi-Fi device and the second Wi-Fi device. In this case, session authentication needs to be performed between the first Wi-Fi device and the second Wi-Fi device, and the session connection is established after the session authentication succeeds. This ensures that the session connection between the first Wi-Fi device and the second Wi-Fi device is established in a trusted environment.

In addition, in an embodiment in which the third information further includes the information related to establishing a connection and/or communication with the second Wi-Fi device, the first Wi-Fi device can directly establish a connection and communicate with the second Wi-Fi device based on the third information without performing complex bidirectional interaction (such as permission authentication, channel selection, and session negotiation) with the second Wi-Fi device, thereby accelerating a process of connection establishment and communication between the first Wi-Fi device and the second Wi-Fi device.

With reference to the third aspect, in some implementations of the third aspect, establishing the session connection with the second Wi-Fi device based on the third information includes: establishing the session connection with the second Wi-Fi device based on the third information and a third performance status, where the third performance status includes a current performance status of the first Wi-Fi device and/or a current performance status of the second Wi-Fi device.

With reference to the third aspect, in some implementations of the third aspect, establishing the session connection with the second Wi-Fi device based on the third information and the third performance status includes: when the third performance status meets a fifth condition, creating a transmission channel corresponding to a service based on the third information; or when the third performance status does not meet a fifth condition, creating a transmission channel of a target type based on the third information, where the fifth condition includes at least one of the following: communication quality of the first Wi-Fi device is greater than a ninth threshold, communication quality of the second Wi-Fi device is greater than a tenth threshold, resource usage of the first Wi-Fi device is less than an eleventh threshold, and resource usage of the second Wi-Fi device is less than a twelfth threshold.

In the foregoing solution, when the third performance status meets the fifth condition, the transmission channel corresponding to the service is created. In this way, resource utilization can be improved while service transmission performance of the first Wi-Fi device is ensured, thereby improving overall quality of service of a system.

With reference to the third aspect, in some implementations of the third aspect, when the third Wi-Fi device meets the fourth condition and the fourth information includes the information related to establishing a connection and/or communication with the third Wi-Fi device, the communication method further includes: based on the identifier of the third Wi-Fi device, determining whether a logged-in account on the first Wi-Fi device and a logged-in account on the third Wi-Fi device belong to a same domain account, or determining whether the third Wi-Fi device belongs to the trusted device group of the first Wi-Fi device; and when the logged-in account on the first Wi-Fi device and the logged-in account on the third Wi-Fi device belong to the same domain account, or the third Wi-Fi device belongs to the trusted device group of the first Wi-Fi device, establishing a session connection with the third Wi-Fi device based on the fourth information; or when the logged-in account on the first Wi-Fi device and the logged-in account on the third Wi-Fi device do not belong to the same domain account, or the third Wi-Fi device does not belong to the trusted device group of the first Wi-Fi device, performing authentication on a session between the first Wi-Fi device and the third Wi-Fi device based on the fourth information, and establishing a session connection with the third Wi-Fi device based on the fourth information when the authentication on the session succeeds.

In the foregoing technical solution, because the logged-in account on the first Wi-Fi device and the logged-in account on the third Wi-Fi device belong to the same domain account, or the third Wi-Fi device belongs to the trusted device group of the first Wi-Fi device, it may be considered that a trust relationship exists between the first Wi-Fi device and the third Wi-Fi device. In this case, a session connection may be directly established between the first Wi-Fi device and the third Wi-Fi device without session authentication. This not only ensures that the session connection between the first Wi-Fi device and the third Wi-Fi device is established in a trusted environment, but also accelerates a process of establishing a session between the first Wi-Fi device and the third Wi-Fi device. Because the logged-in account on the first Wi-Fi device and the logged-in account on the third Wi-Fi device do not belong to the same domain account, or the third Wi-Fi device does not belong to the trusted device group of the first Wi-Fi device, it may be considered that no trust relationship exists between the first Wi-Fi device and the third Wi-Fi device. In this case, session authentication needs to be performed between the first Wi-Fi device and the third Wi-Fi device, and the session connection is established after the session authentication succeeds. This ensures that the session connection between the first Wi-Fi device and the third Wi-Fi device is established in a trusted environment.

In addition, in an embodiment in which the third information further includes the information related to establishing a connection and/or communication with the third Wi-Fi device, the first Wi-Fi device can directly establish a connection and communicate with the third Wi-Fi device based on the third information without performing complex bidirectional interaction (such as permission authentication, channel selection, and session negotiation) with the third Wi-Fi device, thereby accelerating a process of connection establishment and communication between the first Wi-Fi device and the third Wi-Fi device.

With reference to the third aspect, in some implementations of the third aspect, establishing the session connection with the third Wi-Fi device based on the fourth information includes: establishing the session connection with the third Wi-Fi device based on the fourth information and a fourth performance status, where the fourth performance status includes a current performance status of the first Wi-Fi device and/or a current performance status of the third Wi-Fi device.

With reference to the third aspect, in some implementations of the third aspect, establishing the session connection with the third Wi-Fi device based on the fourth information and the fourth performance status includes: when the fourth performance status meets a sixth condition, creating a transmission channel corresponding to a service based on the fourth information; or when the fourth performance status does not meet a sixth condition, creating a transmission channel of a target type based on the fourth information, where the sixth condition includes: communication quality of the first Wi-Fi device is greater than a thirteenth threshold, communication quality of the third Wi-Fi device is greater than a fourteenth threshold, resource usage of the first Wi-Fi device is less than a fifteenth threshold, and resource usage of the third Wi-Fi device is less than a sixteenth threshold.

In the foregoing solution, when the fourth performance status meets the sixth condition, the transmission channel corresponding to the service is created. In this way, resource utilization can be improved while service transmission performance of the first Wi-Fi device is ensured, thereby improving overall quality of service of a system.

With reference to the third aspect, in some implementations of the third aspect, the communication method further includes: adjusting, based on a moving speed of the first Wi-Fi device, an interval for obtaining the third information by using the first communication technology and/or an interval for obtaining the fourth information by using the second communication technology.

In the foregoing technical solution, the first Wi-Fi device adjusts, based on the moving speed of the first Wi-Fi device, the interval for obtaining the third information by using the first communication technology and/or the interval for obtaining the fourth information by using the second communication technology. In this way, when network connection quality of the first Wi-Fi device is ensured, unnecessary operations of listening by using the first communication technology are reduced, and power consumption of the first Wi-Fi device is further reduced.

With reference to the third aspect, in some implementations of the third aspect, the QoS information of the second Wi-Fi device is carried in P1 attribute fields of a fifth message; and/or the information related to establishing a connection and/or communication with the second Wi-Fi device is carried in P2 attribute fields of the fifth message, where the fifth message carries the third information; and at least one of a value of each of the P1 attribute fields, a value of P1, a value of each of the P2 attribute fields, and a value of P2 is determined based on a real-time running status of the second Wi-Fi device, a real-time connection mode of the second Wi-Fi device, and/or a real-time communication mode of the second Wi-Fi device.

In the foregoing technical solution, the second Wi-Fi device may dynamically adjust, based on a status of the second Wi-Fi device, content specifically included in the QoS information of the second Wi-Fi device and/or content specifically included in the information related to establishing a connection and/or communication with the second Wi-Fi device in the third information. In this way, the second Wi-Fi device can provide differentiated services for the first Wi-Fi device in different time periods, and network transmission security is improved.

With reference to the third aspect, in some implementations of the third aspect, the QoS information of the second Wi-Fi device includes a performance indicator of the second Wi-Fi device and/or a network change status of the second Wi-Fi device; and/or the information related to establishing a connection and/or communication with the second Wi-Fi device includes: information related to at least one type of service supported by the second Wi-Fi device, and/or at least one access and authentication type supported by the second Wi-Fi device.

With reference to the third aspect, in some implementations of the third aspect, the information related to the at least one type of service supported by the second Wi-Fi device includes: a transmission parameter of the at least one type of service supported by the second Wi-Fi device, and/or a service policy of the at least one type of service supported by the second Wi-Fi device.

With reference to the third aspect, in some implementations of the third aspect, the QoS information of the third Wi-Fi device is carried in R1 attribute fields of a sixth message, and/or the information related to establishing a connection and/or communication with the third Wi-Fi device is carried in R2 attribute fields of the sixth message, where the sixth message carries the fourth information; and at least one of a value of each of the R1 attribute fields, a value of R1, a value of each of the R2 attribute fields, and a value of R2 is determined based on a real-time running status of the third Wi-Fi device, a real-time connection mode of the third Wi-Fi device, and/or a real-time communication mode of the third Wi-Fi device.

In the foregoing technical solution, the third Wi-Fi device may dynamically adjust, based on a status of the third Wi-Fi device, content specifically included in the QoS information of the third Wi-Fi device and/or content specifically included in the information related to establishing a connection and/or communication with the third Wi-Fi device in the fourth information. In this way, the third Wi-Fi device can provide differentiated services for the first Wi-Fi device in different time periods, and network transmission security is improved.

With reference to the third aspect, in some implementations of the third aspect, the QoS information of the third Wi-Fi device includes a performance indicator of the third Wi-Fi device and/or a network change status of the third Wi-Fi device; and/or the information related to establishing a connection and/or communication with the third Wi-Fi device includes: information related to at least one type of service supported by the third Wi-Fi device, and/or at least one access and authentication type supported by the third Wi-Fi device.

With reference to the third aspect, in some implementations of the third aspect, the information related to the at least one type of service supported by the third Wi-Fi device includes: a transmission parameter of the at least one type of service supported by the third Wi-Fi device, and/or a service policy of the at least one type of service supported by the third Wi-Fi device.

According to a fourth aspect, a communication method is provided. The communication method may be performed by a second Wi-Fi device, or may be performed by a component (for example, a chip or a circuit) of a second Wi-Fi device. This is not limited. For ease of description, the following uses an example in which the method is performed by a second Wi-Fi device for description.

The communication method includes: sending third information by using a first communication technology, where the third information includes an identifier of the second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, and the first request message is used to request to discover a device that can provide a Wi-Fi network service; listening to the first request message from a first Wi-Fi device on the first target channel by using the Wi-Fi communication technology; and sending a first response message to the first Wi-Fi device based on the first request message by using the Wi-Fi communication technology, where the first response message is used to enable the second Wi-Fi device to be discoverable.

With reference to the fourth aspect, in some implementations of the fourth aspect, the third information further includes at least one of the following: quality of service QoS information of the second Wi-Fi device and information related to establishing a connection and/or communication with the second Wi-Fi device.

With reference to the fourth aspect, in some implementations of the fourth aspect, the method further includes: obtaining fourth information from a third Wi-Fi device by using the Wi-Fi communication technology, where the fourth information includes an identifier of the third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, and the second request message is used to request to discover a device that can provide a Wi-Fi network service; and sending the fourth information by using a second communication technology, where the second communication technology is a communication technology other than the Wi-Fi communication technology.

With reference to the fourth aspect, in some implementations of the fourth aspect, the fourth information further includes at least one of the following: QoS information of the third Wi-Fi device and information related to establishing a connection and/or communication with the third Wi-Fi device.

With reference to the fourth aspect, in some implementations of the fourth aspect, the third Wi-Fi device does not support the first communication technology.

With reference to the fourth aspect, in some implementations of the fourth aspect, the third information and the fourth information are carried in a same message or different messages for sending.

With reference to the fourth aspect, in some implementations of the fourth aspect, an interval at which the second Wi-Fi device sends the third information or the fourth information is related to quality of service or a performance status of the second Wi-Fi device.

With reference to the fourth aspect, in some implementations of the fourth aspect, the third information or the fourth information is sent by the second Wi-Fi device through at least one channel corresponding to the first communication technology.

With reference to the fourth aspect, in some implementations of the fourth aspect, the QoS information of the second Wi-Fi device is carried in P1 attribute fields of a fifth message; and/or the information related to establishing a connection and/or communication with the second Wi-Fi device is carried in P2 attribute fields of the fifth message, where the fifth message carries the third information; and at least one of a value of each of the P1 attribute fields, a value of P1, a value of each of the P2 attribute fields, and a value of P2 is determined based on a real-time running status of the second Wi-Fi device, a real-time connection mode of the second Wi-Fi device, and/or a real-time communication mode of the second Wi-Fi device.

With reference to the fourth aspect, in some implementations of the fourth aspect, the QoS information of the second Wi-Fi device includes a performance indicator of the second Wi-Fi device and/or a network change status of the second Wi-Fi device; and/or the information related to establishing a connection and/or communication with the second Wi-Fi device includes: information related to at least one type of service supported by the second Wi-Fi device, and/or at least one access and authentication type supported by the second Wi-Fi device.

With reference to the fourth aspect, in some implementations of the fourth aspect, the information related to the at least one type of service supported by the second Wi-Fi device includes: a transmission parameter of the at least one type of service supported by the second Wi-Fi device, and/or a service policy of the at least one type of service supported by the second Wi-Fi device.

With reference to the fourth aspect, in some implementations of the fourth aspect, the QoS information of the third Wi-Fi device is carried in R1 attribute fields of a sixth message, and/or the information related to establishing a connection and/or communication with the third Wi-Fi device is carried in R2 attribute fields of the sixth message, where the sixth message carries the fourth information; and at least one of a value of each of the R1 attribute fields, a value of R1, a value of each of the R2 attribute fields, and a value of R2 is determined based on a real-time running status of the third Wi-Fi device, a real-time connection mode of the third Wi-Fi device, and/or a real-time communication mode of the third Wi-Fi device.

With reference to the fourth aspect, in some implementations of the fourth aspect, the QoS information of the third Wi-Fi device includes a performance indicator of the third Wi-Fi device and/or a network change status of the third Wi-Fi device; and/or the information related to establishing a connection and/or communication with the third Wi-Fi device includes: information related to at least one type of service supported by the third Wi-Fi device, and/or at least one access and authentication type supported by the third Wi-Fi device.

With reference to the fourth aspect, in some implementations of the fourth aspect, the information related to the at least one type of service supported by the third Wi-Fi device includes: a transmission parameter of the at least one type of service supported by the third Wi-Fi device, and/or a service policy of the at least one type of service supported by the third Wi-Fi device.

For technical effects of the fourth aspect and the possible implementations, refer to the related descriptions of the third aspect. Details are not described herein again.

According to a fifth aspect, a communication apparatus is provided. The communication apparatus is configured to perform the method provided in the first aspect.

The communication apparatus includes a transceiver unit, configured to: obtain first information by using a first communication technology, where the first information includes an identifier of a first AP, a sending moment of a first message or time that has elapsed since last transmission of the first message, a channel occupied by the first message, and a sending interval of the first message, the first communication technology is a communication technology other than a Wi-Fi communication technology, the first message is used to enable the first AP to be discoverable, and the first message is broadcast by the first AP by using the Wi-Fi communication technology; and scan the first message based on the first information by using the Wi-Fi communication technology.

With reference to the fifth aspect, in some implementations of the fifth aspect, the first information further includes at least one of the following: quality of service QoS information of the first AP and information related to establishing a connection and/or communication with the first AP; and the communication apparatus further includes a processing unit, configured to determine, based on the first information, that the first AP meets a first condition, where the first condition includes at least one of the following: belonging to a trusted device group of the communication apparatus, belonging to a public reliable infrastructure, meeting a QoS requirement of the communication apparatus, and being capable of providing a connection mode and/or a communication mode supported by the communication apparatus.

With reference to the fifth aspect, in some implementations of the fifth aspect, when the first information includes the time that has elapsed since last transmission of the first message, the processing unit is further configured to estimate the sending moment of the first message based on the time that has elapsed since last transmission of the first message, the sending interval of the first message, current local time of the communication apparatus, and a moment at which the first information is obtained; and the transceiver unit is further configured to scan the first message based on the estimated sending moment of the first message by using the Wi-Fi communication technology and the channel occupied by the first message.

With reference to the fifth aspect, in some implementations of the fifth aspect, the transceiver unit is further configured to obtain second information by using a second communication technology, where the second information includes an identifier of a second AP, a sending moment of a second message or time that has elapsed since last transmission of the second message, a channel occupied by the second message, and a sending interval of the second message, the second information further includes at least one of the following: QoS information of the second AP and information related to establishing a connection and/or communication with the second AP, the second communication technology is a communication technology other than the Wi-Fi communication technology, the second message is used to enable the second AP to be discoverable, and the second message is broadcast by the second AP by using the Wi-Fi communication technology; the processing unit is further configured to determine, based on the second information, whether the second AP meets the first condition; and the transceiver unit is further configured to: when the second AP meets the first condition, scan the second message based on the second information by using the Wi-Fi communication technology; or when the second AP does not meet the first condition, determine that the second message does not need to be scanned by using the Wi-Fi communication technology.

With reference to the fifth aspect, in some implementations of the fifth aspect, when the second information includes the time that has elapsed since last transmission of the second message, the processing unit is further configured to estimate the sending moment of the second message based on the time that has elapsed since last transmission of the second message, the sending interval of the second message, the current local time of the communication apparatus, and a moment at which the second information is obtained; and the transceiver unit is further configured to scan the second message based on the estimated sending moment of the second message by using the Wi-Fi communication technology and the channel occupied by the second message.

With reference to the fifth aspect, in some implementations of the fifth aspect, the processing unit is further configured to generate a channel scan sequence {A1, A2}, where AI is the channel occupied by the first message, A2 is the channel occupied by the second message, a first delay is less than a second delay, the first delay includes a delay, from a first moment, of first switching to the channel occupied by the first message to scan the first message and then switching to the channel occupied by the second message to scan the second message, and the second delay includes a delay, from the first moment, of first switching to the channel occupied by the second message to scan the second message and then switching to the channel occupied by the first message to scan the first message; and the transceiver unit is further configured to sequentially scan the first message and the second message based on the channel scan sequence by using the Wi-Fi communication technology.

With reference to the fifth aspect, in some implementations of the fifth aspect, the processing unit is further configured to stop scanning a message by using the Wi-Fi communication technology in a gap of switching from the channel occupied by the first message to the channel occupied by the second message.

With reference to the fifth aspect, in some implementations of the fifth aspect, the first communication technology is the same as the second communication technology; and when the first AP supports the first communication technology and the second AP does not support the first communication technology, both the first information and the second information are broadcast by the first AP; or when the first AP does not support the first communication technology and the second AP supports the first communication technology, both the first information and the second information are broadcast by the second AP.

With reference to the fifth aspect, in some implementations of the fifth aspect, the first information and the second information are carried in a same message or different messages.

With reference to the fifth aspect, in some implementations of the fifth aspect, a message broadcast interval of the first AP is related to quality of service or a performance status of the first AP; or a message broadcast interval of the second AP is related to quality of service or a performance status of the second AP.

With reference to the fifth aspect, in some implementations of the fifth aspect, the first AP or the second AP broadcasts a message through at least one channel corresponding to the first communication technology.

With reference to the fifth aspect, in some implementations of the fifth aspect, when the first information includes the information related to establishing a connection and/or communication with the first AP, the processing unit is further configured to: based on the identifier of the first AP, determine whether a logged-in account on the communication apparatus and a logged-in account on the first AP belong to a same domain account, or determine whether the first AP belongs to the trusted device group of the first STA; and when the logged-in account on the communication apparatus and the logged-in account on the first AP belong to the same domain account, or the first AP belongs to the trusted device group of the first STA, establish a session connection with the first AP based on the first information; or when the logged-in account on the communication apparatus and the logged-in account on the first AP do not belong to the same domain account, or the first AP does not belong to the trusted device group of the first STA, perform authentication on a session between the communication apparatus and the first AP based on the first information, and establish a session connection with the first AP based on the first information when the authentication on the session succeeds.

With reference to the fifth aspect, in some implementations of the fifth aspect, the processing unit is further specifically configured to establish the session connection with the first AP based on the first information and a first performance status, where the first performance status includes a current performance status of the communication apparatus and/or a current performance status of the first AP.

With reference to the fifth aspect, in some implementations of the fifth aspect, the processing unit is further specifically configured to: when the first performance status meets a second condition, create a transmission channel corresponding to a service based on the first information; or when the first performance status does not meet a second condition, create a transmission channel of a target type based on the first information, where the second condition includes at least one of the following: communication quality of the communication apparatus is greater than a first threshold, communication quality of the first AP is greater than a second threshold, resource usage of the communication apparatus is less than a third threshold, and resource usage of the first AP is less than a fourth threshold.

With reference to the fifth aspect, in some implementations of the fifth aspect, when the second AP meets the first condition, and the second information includes the information related to establishing a connection and/or communication with the second AP, the processing unit is further configured to: based on the identifier of the second AP, determine whether a logged-in account on the communication apparatus and a logged-in account on the second AP belong to a same domain account, or determine whether the second AP belongs to the trusted device group of the first STA; and when the logged-in account on the communication apparatus and the logged-in account on the second AP belong to the same domain account, or the second AP belongs to the trusted device group of the first STA, establish a session connection with the second AP based on the second information; or when the logged-in account on the communication apparatus and the logged-in account on the second AP do not belong to the same domain account, or the second AP does not belong to the trusted device group of the first STA, perform authentication on a session between the communication apparatus and the second AP based on the second information, and establish a session connection with the second AP based on the second information when the authentication on the session succeeds.

With reference to the fifth aspect, in some implementations of the fifth aspect, the processing unit is further specifically configured to establish the session connection with the second AP based on the second information and a second performance status, where the second performance status includes a current performance status of the communication apparatus and/or a current performance status of the second AP.

With reference to the fifth aspect, in some implementations of the fifth aspect, the processing unit is further specifically configured to: when the second performance status meets a third condition, create a transmission channel corresponding to a service based on the second information; or when the second performance status does not meet a third condition, create a transmission channel of a target type based on the second information, where the third condition includes: communication quality of the communication apparatus is greater than a fifth threshold, communication quality of the second AP is greater than a sixth threshold, resource usage of the communication apparatus is less than a seventh threshold, and resource usage of the second AP is less than an eighth threshold.

With reference to the fifth aspect, in some implementations of the fifth aspect, the processing unit is further configured to adjust, based on a moving speed of the communication apparatus, an interval for obtaining the first information by using the first communication technology and/or an interval for obtaining the second information by using the second communication technology.

With reference to the fifth aspect, in some implementations of the fifth aspect, the QoS information of the first AP is carried in N1 attribute fields of a third message; and/or the information related to establishing a connection and/or communication with the first AP is carried in N2 attribute fields of the third message, where the third message carries the first information; and at least one of a value of each of the N1 attribute fields, a value of N1, a value of each of the N2 attribute fields, and a value of N2 is determined based on a real-time running status of the first AP, a real-time connection mode of the first AP, and/or a real-time communication mode of the first AP.

With reference to the fifth aspect, in some implementations of the fifth aspect, the QoS information of the first AP includes a performance indicator of the first AP and/or a network change status of the first AP; and/or the information related to establishing a connection and/or communication with the first AP includes: information related to at least one type of service supported by the first AP, and/or at least one access and authentication type supported by the first AP.

With reference to the fifth aspect, in some implementations of the fifth aspect, the information related to the at least one type of service supported by the first AP includes: a transmission parameter of the at least one type of service supported by the first AP, and/or a service policy of the at least one type of service supported by the first AP.

With reference to the fifth aspect, in some implementations of the fifth aspect, the QoS information of the second AP is carried in M1 attribute fields of a fourth message; and/or the information related to establishing a connection and/or communication with the second AP is carried in M2 attribute fields of the fourth message, where the fourth message carries the second information; and at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

With reference to the fifth aspect, in some implementations of the fifth aspect, the QoS information of the second AP includes a performance indicator of the second AP and/or a network change status of the second AP; and/or the information related to establishing a connection and/or communication with the second AP includes: information related to at least one type of service supported by the second AP, and/or at least one access and authentication type supported by the second AP.

With reference to the fifth aspect, in some implementations of the fifth aspect, the information related to the at least one type of service supported by the second AP includes: a transmission parameter of the at least one type of service supported by the second AP, and/or a service policy of the at least one type of service supported by the second AP.

For technical effects of the fifth aspect and the possible implementations, refer to the related descriptions of the first aspect. Details are not described herein again.

According to a sixth aspect, a communication apparatus is provided. The communication apparatus is configured to perform the method provided in the second aspect.

The communication apparatus includes a transceiver unit, configured to send first information by using a first communication technology, where the first information includes an identifier of the communication apparatus, a sending moment of a first message or time that has elapsed since last transmission of the first message, a channel occupied by the first message, and a sending interval of the first message, the first communication technology is a communication technology other than a Wi-Fi communication technology, and the first message is used to enable the communication apparatus to be discoverable. The transceiver unit is further configured to broadcast the first message by using the Wi-Fi communication technology.

With reference to the sixth aspect, in some implementations of the sixth aspect, the first information further includes at least one of the following: quality of service QoS information of the communication apparatus and information related to establishing a connection and/or communication with the communication apparatus.

With reference to the sixth aspect, in some implementations of the sixth aspect, the transceiver unit is further configured to: obtain second information from a second AP by using the Wi-Fi communication technology, where the second information includes an identifier of the second AP, a sending moment of a second message or time that has elapsed since last transmission of the second message, a channel occupied by the second message, and a sending interval of the second message, the second message is used to enable the second AP to be discoverable, and the second message is broadcast by the second AP by using the Wi-Fi communication technology; and send the second information by using a second communication technology, where the second communication technology is a communication technology other than the Wi-Fi communication technology.

With reference to the sixth aspect, in some implementations of the sixth aspect, the second information further includes at least one of the following: QoS information of the second AP, and information related to establishing a connection and/or communication with the second AP.

With reference to the sixth aspect, in some implementations of the sixth aspect, the second AP does not support the first communication technology.

With reference to the sixth aspect, in some implementations of the sixth aspect, the second information and the first information are carried in a same message or different messages for sending.

With reference to the sixth aspect, in some implementations of the sixth aspect, an interval at which the communication apparatus sends the first information or the second information is related to quality of service or a performance status of the communication apparatus.

With reference to the sixth aspect, in some implementations of the sixth aspect, the first information or the second information is sent by the communication apparatus through at least one channel corresponding to the first communication technology.

With reference to the sixth aspect, in some implementations of the sixth aspect, the QoS information of the communication apparatus is carried in N1 attribute fields of a third message; and/or the information related to establishing a connection and/or communication with the communication apparatus is carried in N2 attribute fields of the third message, where the third message carries the first information; and at least one of a value of each of the N1 attribute fields, a value of N1, a value of each of the N2 attribute fields, and a value of N2 is determined based on a real-time running status of the communication apparatus, a real-time connection mode of the communication apparatus, and/or a real-time communication mode of the communication apparatus.

With reference to the sixth aspect, in some implementations of the sixth aspect, the QoS information of the communication apparatus includes a performance indicator of the communication apparatus and/or a network change status of the communication apparatus; and/or the information related to establishing a connection and/or communication with the communication apparatus includes: information related to at least one type of service supported by the communication apparatus, and/or at least one access and authentication type supported by the communication apparatus.

With reference to the sixth aspect, in some implementations of the sixth aspect, the information related to the at least one type of service supported by the communication apparatus includes: a transmission parameter of the at least one type of service supported by the communication apparatus, and/or a service policy of the at least one type of service supported by the communication apparatus.

With reference to the sixth aspect, in some implementations of the sixth aspect, the QoS information of the second AP is carried in M1 attribute fields of a fourth message; and/or the information related to establishing a connection and/or communication with the second AP is carried in M2 attribute fields of the fourth message, where the fourth message carries the second information; and at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

With reference to the sixth aspect, in some implementations of the sixth aspect, the QoS information of the second AP includes a performance indicator of the second AP and/or a network change status of the second AP; and/or the information related to establishing a connection and/or communication with the second AP includes: information related to at least one type of service supported by the second AP, and/or at least one access and authentication type supported by the second AP.

With reference to the sixth aspect, in some implementations of the sixth aspect, the information related to the at least one type of service supported by the second AP includes: a transmission parameter of the at least one type of service supported by the second AP, and/or a service policy of the at least one type of service supported by the second AP.

For technical effects of the sixth aspect and the possible implementations, refer to the related descriptions of the first aspect. Details are not described herein again.

According to a seventh aspect, a communication apparatus is provided. The communication apparatus is configured to perform the method provided in the third aspect.

The communication apparatus includes: a processing unit, configured to obtain third information by using a first communication technology, where the third information includes an identifier of a second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, and the first request message is used to request to discover a device that can provide a Wi-Fi network service; and a transceiver unit, configured to: send the first request message to the second Wi-Fi device based on the third information by using the Wi-Fi communication technology; and scan a first response message from the second Wi-Fi device by using the Wi-Fi communication technology, where the first response message is used to enable the second Wi-Fi device to be discoverable.

With reference to the seventh aspect, in some implementations of the seventh aspect, the third information further includes at least one of the following: quality of service QoS information of the second Wi-Fi device and information related to establishing a connection and/or communication with the second Wi-Fi device; and the processing unit is further configured to determine, based on the third information, that the second Wi-Fi device meets a fourth condition, where the fourth condition includes at least one of the following: belonging to a trusted device group of the first Wi-Fi device, belonging to a public reliable infrastructure, meeting a QoS requirement of the first Wi-Fi device, and being capable of providing a connection mode and/or a communication mode supported by the first Wi-Fi device.

With reference to the seventh aspect, in some implementations of the seventh aspect, when the third information includes the time that has elapsed since the second Wi-Fi device starts listening on the first target channel last time, the processing unit is further configured to estimate a listening start moment of the second Wi-Fi device on the first target channel based on the time that has elapsed since the second Wi-Fi device starts listening on the first target channel last time, the interval at which the second Wi-Fi device listens on the first target channel, current local time of the first Wi-Fi device, and a moment at which the third information is obtained; and the transceiver unit is further configured to send the first request message based on the estimated listening start moment of the second Wi-Fi device on the first target channel by using the Wi-Fi communication technology and the first target channel.

With reference to the seventh aspect, in some implementations of the seventh aspect, the processing unit is further configured to obtain fourth information by using a second communication technology, where the fourth information includes an identifier of a third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, the fourth information further includes quality of service QoS information of the third Wi-Fi device and information related to establishing a connection and/or communication with the third Wi-Fi device, the second communication technology is a communication technology other than the Wi-Fi communication technology, and the second request message is used to request to discover a device that can provide a Wi-Fi network service; the processing unit is further configured to determine, based on the fourth information, whether the third Wi-Fi device meets the fourth condition; and the transceiver unit is further configured to: when the third Wi-Fi device meets the fourth condition, send the second request message to the third Wi-Fi device based on the fourth information by using the Wi-Fi communication technology, and scan a second response message from the third Wi-Fi device by using the Wi-Fi communication technology, where the second response message is used to enable the third Wi-Fi device to be discoverable; or when the third Wi-Fi device does not meet the fourth condition, determine that the second request message does not need to be sent to the third Wi-Fi device by using the Wi-Fi communication technology.

With reference to the seventh aspect, in some implementations of the seventh aspect, when the fourth information includes the time that has elapsed since the third Wi-Fi device starts listening on the second target channel last time, the processing unit is further configured to estimate a listening start moment of the third Wi-Fi device on the second target channel based on the time that has elapsed since the third Wi-Fi device starts listening on the second target channel last time, the interval at which the third Wi-Fi device listens on the second target channel, the current local time of the first Wi-Fi device, and a moment at which the fourth information is obtained; and the transceiver unit is further configured to send the second request message based on the estimated listening start moment of the third Wi-Fi device on the second target channel by using the Wi-Fi communication technology and the second target channel.

With reference to the seventh aspect, in some implementations of the seventh aspect, the processing unit is further configured to generate a channel sending sequence {B1, B2}, where B1 is the first target channel, B2 is the second target channel, a third delay is less than a fourth delay, the third delay includes a delay, from a second moment, of first switching to the first target channel to send the first request message and scan the first response message and then switching to the second target channel to send the second request message and scan the second response message, and the fourth delay includes a delay, from the second moment, of first switching to the second target channel to send the second request message and scan the second response message and then switching to the first target channel to send the first request message and scan the first response message; and the transceiver unit is further configured to sequentially send the first request message and the second request message based on the channel sending sequence by using the Wi-Fi communication technology.

With reference to the seventh aspect, in some implementations of the seventh aspect, the method further includes: the processing unit is further configured to stop sending a request message and scanning a response message by using the Wi-Fi communication technology in a gap of switching from the first target channel to the second target channel.

With reference to the seventh aspect, in some implementations of the seventh aspect, the first communication technology is the same as the second communication technology; and when the second Wi-Fi device supports the first communication technology and the third Wi-Fi device does not support the first communication technology, both the third information and the fourth information are broadcast by the second Wi-Fi device; or when the second Wi-Fi device does not support the first communication technology and the third Wi-Fi device supports the first communication technology, both the third information and the fourth information are broadcast by the third Wi-Fi device.

With reference to the seventh aspect, in some implementations of the seventh aspect, the third information and the fourth information are carried in a same message or different messages.

With reference to the seventh aspect, in some implementations of the seventh aspect, a message broadcast interval of the second Wi-Fi device is related to quality of service or a performance status of the second Wi-Fi device; or a message broadcast interval of the third Wi-Fi device is related to quality of service or a performance status of the third Wi-Fi device.

With reference to the seventh aspect, in some implementations of the seventh aspect, the second Wi-Fi device or the third Wi-Fi device broadcasts a message through at least one channel corresponding to the first communication technology.

With reference to the seventh aspect, in some implementations of the seventh aspect, when the third information includes the information related to establishing a connection and/or communication with the second Wi-Fi device, the processing unit is further configured to: based on the identifier of the second Wi-Fi device, determine whether a logged-in account on the first Wi-Fi device and a logged-in account on the second Wi-Fi device belong to a same domain account, or determine that the second Wi-Fi device does not belong to the trusted device group of the first Wi-Fi device; and when the logged-in account on the first Wi-Fi device and the logged-in account on the second Wi-Fi device belong to the same domain account, or the second Wi-Fi device belongs to the trusted device group of the first Wi-Fi device, establish a session connection with the second Wi-Fi device based on the third information; or when the logged-in account on the first Wi-Fi device and the logged-in account on the second Wi-Fi device do not belong to the same domain account, or the second Wi-Fi device does not belong to the trusted device group of the first Wi-Fi device, perform authentication on a session between the first Wi-Fi device and the second Wi-Fi device based on the third information, and establish a session connection with the second Wi-Fi device based on the third information when the authentication on the session succeeds.

With reference to the seventh aspect, in some implementations of the seventh aspect, the processing unit is further specifically configured to establish the session connection with the second Wi-Fi device based on the third information and a third performance status, where the third performance status includes a current performance status of the first Wi-Fi device and/or a current performance status of the second Wi-Fi device.

With reference to the seventh aspect, in some implementations of the seventh aspect, the processing unit is further specifically configured to: when the third performance status meets a fifth condition, create a transmission channel corresponding to a service based on the third information; or when the third performance status does not meet a fifth condition, create a transmission channel of a target type based on the third information, where the fifth condition includes at least one of the following: communication quality of the first Wi-Fi device is greater than a ninth threshold, communication quality of the second Wi-Fi device is greater than a tenth threshold, resource usage of the first Wi-Fi device is less than an eleventh threshold, and resource usage of the second Wi-Fi device is less than a twelfth threshold.

With reference to the seventh aspect, in some implementations of the seventh aspect, when the third Wi-Fi device meets the fourth condition and the fourth information includes the information related to establishing a connection and/or communication with the third Wi-Fi device, the processing unit is further configured to: based on the identifier of the third Wi-Fi device, determine whether a logged-in account on the first Wi-Fi device and a logged-in account on the third Wi-Fi device belong to a same domain account, or determine whether the third Wi-Fi device belongs to the trusted device group of the first Wi-Fi device; and when the logged-in account on the first Wi-Fi device and the logged-in account on the third Wi-Fi device belong to the same domain account, or the third Wi-Fi device belongs to the trusted device group of the first Wi-Fi device, establish a session connection with the third Wi-Fi device based on the fourth information; or when the logged-in account on the first Wi-Fi device and the logged-in account on the third Wi-Fi device do not belong to the same domain account, or the third Wi-Fi device does not belong to the trusted device group of the first Wi-Fi device, perform authentication on a session between the first Wi-Fi device and the third Wi-Fi device based on the fourth information, and establish a session connection with the third Wi-Fi device based on the fourth information when the authentication on the session succeeds.

With reference to the seventh aspect, in some implementations of the seventh aspect, the processing unit is further specifically configured to establish the session connection with the third Wi-Fi device based on the fourth information and a fourth performance status, where the fourth performance status includes a current performance status of the first Wi-Fi device and/or a current performance status of the third Wi-Fi device.

With reference to the seventh aspect, in some implementations of the seventh aspect, the processing unit is further specifically configured to: when the fourth performance status meets a sixth condition, create a transmission channel corresponding to a service based on the fourth information; or when the fourth performance status does not meet a sixth condition, create a transmission channel of a target type based on the fourth information, where the sixth condition includes: communication quality of the first Wi-Fi device is greater than a thirteenth threshold, communication quality of the third Wi-Fi device is greater than a fourteenth threshold, resource usage of the first Wi-Fi device is less than a fifteenth threshold, and resource usage of the third Wi-Fi device is less than a sixteenth threshold.

With reference to the seventh aspect, in some implementations of the seventh aspect, the processing unit is further configured to adjust, based on a moving speed of the first Wi-Fi device, an interval for obtaining the third information by using the first communication technology and/or an interval for obtaining the fourth information by using the second communication technology.

With reference to the seventh aspect, in some implementations of the seventh aspect, the QoS information of the second Wi-Fi device is carried in P1 attribute fields of a fifth message; and/or the information related to establishing a connection and/or communication with the second Wi-Fi device is carried in P2 attribute fields of the fifth message, where the fifth message carries the third information; and at least one of a value of each of the P1 attribute fields, a value of P1, a value of each of the P2 attribute fields, and a value of P2 is determined based on a real-time running status of the second Wi-Fi device, a real-time connection mode of the second Wi-Fi device, and/or a real-time communication mode of the second Wi-Fi device.

With reference to the seventh aspect, in some implementations of the seventh aspect, the QoS information of the second Wi-Fi device includes a performance indicator of the second Wi-Fi device and/or a network change status of the second Wi-Fi device; and/or the information related to establishing a connection and/or communication with the second Wi-Fi device includes: information related to at least one type of service supported by the second Wi-Fi device, and/or at least one access and authentication type supported by the second Wi-Fi device.

With reference to the seventh aspect, in some implementations of the seventh aspect, the information related to the at least one type of service supported by the second Wi-Fi device includes: a transmission parameter of the at least one type of service supported by the second Wi-Fi device, and/or a service policy of the at least one type of service supported by the second Wi-Fi device.

With reference to the seventh aspect, in some implementations of the seventh aspect, the QoS information of the third Wi-Fi device is carried in R1 attribute fields of a sixth message, and/or the information related to establishing a connection and/or communication with the third Wi-Fi device is carried in R2 attribute fields of the sixth message, where the sixth message carries the fourth information; and at least one of a value of each of the R1 attribute fields, a value of R1, a value of each of the R2 attribute fields, and a value of R2 is determined based on a real-time running status of the third Wi-Fi device, a real-time connection mode of the third Wi-Fi device, and/or a real-time communication mode of the third Wi-Fi device.

With reference to the seventh aspect, in some implementations of the seventh aspect, the QoS information of the third Wi-Fi device includes a performance indicator of the third Wi-Fi device and/or a network change status of the third Wi-Fi device; and/or the information related to establishing a connection and/or communication with the third Wi-Fi device includes: information related to at least one type of service supported by the third Wi-Fi device, and/or at least one access and authentication type supported by the third Wi-Fi device.

With reference to the seventh aspect, in some implementations of the seventh aspect, the information related to the at least one type of service supported by the third Wi-Fi device includes: a transmission parameter of the at least one type of service supported by the third Wi-Fi device, and/or a service policy of the at least one type of service supported by the third Wi-Fi device.

For technical effects of the seventh aspect and the possible implementations, refer to the related descriptions of the third aspect. Details are not described herein again.

According to an eighth aspect, a communication apparatus is provided. The communication apparatus is configured to perform the method provided in the fourth aspect.

The communication apparatus includes a transceiver unit, configured to: send third information by using a first communication technology, where the third information includes an identifier of the second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, and the first request message is used to request to discover a device that can provide a Wi-Fi network service; listen to the first request message from a first Wi-Fi device on the first target channel by using the Wi-Fi communication technology; and send a first response message to the first Wi-Fi device based on the first request message by using the Wi-Fi communication technology, where the first response message is used to enable the second Wi-Fi device to be discoverable.

With reference to the eighth aspect, in some implementations of the eighth aspect, the third information further includes at least one of the following: quality of service QoS information of the second Wi-Fi device and information related to establishing a connection and/or communication with the second Wi-Fi device.

With reference to the eighth aspect, in some implementations of the eighth aspect, the transceiver unit is further configured to: obtain fourth information from a third Wi-Fi device by using the Wi-Fi communication technology, where the fourth information includes an identifier of the third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, and the second request message is used to request to discover a device that can provide a Wi-Fi network service; and send the fourth information by using a second communication technology, where the second communication technology is a communication technology other than the Wi-Fi communication technology.

With reference to the eighth aspect, in some implementations of the eighth aspect, the fourth information further includes at least one of the following: QoS information of the third Wi-Fi device and information related to establishing a connection and/or communication with the third Wi-Fi device.

With reference to the eighth aspect, in some implementations of the eighth aspect, the third Wi-Fi device does not support the first communication technology.

With reference to the eighth aspect, in some implementations of the eighth aspect, the third information and the fourth information are carried in a same message or different messages for sending.

With reference to the eighth aspect, in some implementations of the eighth aspect, an interval at which the second Wi-Fi device sends the third information or the fourth information is related to quality of service or a performance status of the second Wi-Fi device.

With reference to the eighth aspect, in some implementations of the eighth aspect, the third information or the fourth information is sent by the second Wi-Fi device through at least one channel corresponding to the first communication technology.

With reference to the eighth aspect, in some implementations of the eighth aspect, the QoS information of the second Wi-Fi device is carried in P1 attribute fields of a fifth message; and/or the information related to establishing a connection and/or communication with the second Wi-Fi device is carried in P2 attribute fields of the fifth message, where the fifth message carries the third information; and at least one of a value of each of the P1 attribute fields, a value of P1, a value of each of the P2 attribute fields, and a value of P2 is determined based on a real-time running status of the second Wi-Fi device, a real-time connection mode of the second Wi-Fi device, and/or a real-time communication mode of the second Wi-Fi device.

With reference to the eighth aspect, in some implementations of the eighth aspect, the QoS information of the second Wi-Fi device includes a performance indicator of the second Wi-Fi device and/or a network change status of the second Wi-Fi device; and/or the information related to establishing a connection and/or communication with the second Wi-Fi device includes: information related to at least one type of service supported by the second Wi-Fi device, and/or at least one access and authentication type supported by the second Wi-Fi device.

With reference to the eighth aspect, in some implementations of the eighth aspect, the information related to the at least one type of service supported by the second Wi-Fi device includes: a transmission parameter of the at least one type of service supported by the second Wi-Fi device, and/or a service policy of the at least one type of service supported by the second Wi-Fi device.

With reference to the eighth aspect, in some implementations of the eighth aspect, the QoS information of the third Wi-Fi device is carried in R1 attribute fields of a sixth message, and/or the information related to establishing a connection and/or communication with the third Wi-Fi device is carried in R2 attribute fields of the sixth message, where the sixth message carries the fourth information; and at least one of a value of each of the R1 attribute fields, a value of R1, a value of each of the R2 attribute fields, and a value of R2 is determined based on a real-time running status of the third Wi-Fi device, a real-time connection mode of the third Wi-Fi device, and/or a real-time communication mode of the third Wi-Fi device.

With reference to the eighth aspect, in some implementations of the eighth aspect, the QoS information of the third Wi-Fi device includes a performance indicator of the third Wi-Fi device and/or a network change status of the third Wi-Fi device; and/or the information related to establishing a connection and/or communication with the third Wi-Fi device includes: information related to at least one type of service supported by the third Wi-Fi device, and/or at least one access and authentication type supported by the third Wi-Fi device.

With reference to the eighth aspect, in some implementations of the eighth aspect, the information related to the at least one type of service supported by the third Wi-Fi device includes: a transmission parameter of the at least one type of service supported by the third Wi-Fi device, and/or a service policy of the at least one type of service supported by the third Wi-Fi device.

For technical effects of the eighth aspect and the possible implementations, refer to the related descriptions of the third aspect. Details are not described herein again.

According to a ninth aspect, a communication apparatus is provided. The apparatus is configured to perform the method provided in the first aspect. Specifically, the communication apparatus may include units and/or modules, for example, a processing unit and an obtaining unit, configured to perform the method provided in any one of the foregoing implementations of the first aspect.

In an implementation, the communication apparatus is a station. When the communication apparatus is a station, the transceiver unit may be a transceiver or an input/output interface, and the processing unit may be at least one processor. Optionally, the transceiver may be a transceiver circuit. Optionally, the input/output interface may be an input/output circuit.

In another implementation, when the communication apparatus is a chip, a chip system, or a circuit in a station, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a tenth aspect, a communication apparatus is provided. The apparatus is configured to perform the method provided in the second aspect. Specifically, the communication apparatus may include units and/or modules, for example, a processing unit and an obtaining unit, configured to perform the method provided in the second aspect.

In an implementation, the communication apparatus is an AP. When the communication apparatus is an AP, the transceiver unit may be a transceiver or an input/output interface, and the processing unit may be at least one processor. Optionally, the transceiver may be a transceiver circuit. Optionally, the input/output interface may be an input/output circuit.

In another implementation, when the communication apparatus is a chip, a chip system, or a circuit in an AP, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eleventh aspect, a communication apparatus is provided. The apparatus is configured to perform the method provided in the third aspect. Specifically, the communication apparatus may include units and/or modules, for example, a processing unit and an obtaining unit, configured to perform the method provided in any one of the foregoing implementations of the third aspect.

In an implementation, the communication apparatus is a first Wi-Fi device. When the communication apparatus is a first Wi-Fi device, the transceiver unit may be a transceiver or an input/output interface, and the processing unit may be at least one processor. Optionally, the transceiver may be a transceiver circuit. Optionally, the input/output interface may be an input/output circuit.

In another implementation, when the communication apparatus is a chip, a chip system, or a circuit in a first Wi-Fi device, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a twelfth aspect, a communication apparatus is provided. The apparatus is configured to perform the method provided in the fourth aspect. Specifically, the communication apparatus may include units and/or modules, for example, a processing unit and an obtaining unit, configured to perform the method provided in the fourth aspect.

In an implementation, the communication apparatus is a second Wi-Fi device. When the communication apparatus is a second Wi-Fi device, the transceiver unit may be a transceiver or an input/output interface, and the processing unit may be at least one processor. Optionally, the transceiver may be a transceiver circuit. Optionally, the input/output interface may be an input/output circuit.

In another implementation, when the communication apparatus is a chip, a chip system, or a circuit in a second Wi-Fi device, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a thirteenth aspect, a communication apparatus is provided, including one or more processors, one or more memories, and one or more computer programs. The one or more computer programs are stored in the one or more memories, the one or more computer programs include instructions, and when the instructions are executed by the one or more processors, the communication apparatus is enabled to perform the communication method according to any one of the implementations of the first aspect.

According to a fourteenth aspect, a communication apparatus is provided, including one or more processors, one or more memories, and one or more computer programs. The one or more computer programs are stored in the one or more memories, the one or more computer programs include instructions, and when the instructions are executed by the one or more processors, the communication apparatus is enabled to perform the communication method according to any one of the implementations of the second aspect.

According to a fifteenth aspect, a communication apparatus is provided, including one or more processors, one or more memories, and one or more computer programs. The one or more computer programs are stored in the one or more memories, the one or more computer programs include instructions, and when the instructions are executed by the one or more processors, the communication apparatus is enabled to perform the communication method according to any one of the implementations of the third aspect.

According to a sixteenth aspect, a communication apparatus is provided, including one or more processors, one or more memories, and one or more computer programs. The one or more computer programs are stored in the one or more memories, the one or more computer programs include instructions, and when the instructions are executed by the one or more processors, the communication apparatus is enabled to perform the communication method according to any one of the implementations of the fourth aspect.

According to a seventeenth aspect, this application provides a processor, configured to perform the communication method provided in any one of the implementations of the first aspect to the fourth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighteenth aspect, a computer-readable storage medium is provided, including computer instructions. When the computer instructions are run on a communication apparatus, the communication apparatus is enabled to perform the communication method provided in any one of the implementations of the first aspect to the fourth aspect.

According to a nineteenth aspect, a computer program product including instructions is provided. The computer program product includes computer instructions, and when some or all of the computer instructions are run on a computer, the communication method provided in any one of the implementations of the first aspect to the fourth aspect is performed.

According to a twentieth aspect, a chip is provided, including at least one processor and an interface circuit. The interface circuit is configured to provide program instructions or data for the at least one processor. The at least one processor is configured to execute the program instructions, to implement the communication method provided in any one of the implementations of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the communication method provided in any one of the implementations of the first aspect and the second aspect.

According to a twenty-first aspect, a communication system is provided, and includes the communication apparatus according to the fifth aspect and the communication apparatus according to the sixth aspect, or includes the communication apparatus according to the seventh aspect and the communication apparatus according to the eighth aspect.

## BRIEF DESCRIPTION OF DRAWINGS

FIG. 1 is a diagram of an example communication system applicable to an embodiment of this application;

FIG. 2 is a diagram of an internal structure of an example station according to an embodiment of this application;

FIG. 3 is a diagram of a structure of an example terminal device according to an embodiment of this application;

FIG. 4 is a diagram of an internal structure of an example access point according to an embodiment of this application;

FIG. 5 is a diagram of a structure of another example access point according to an embodiment of this application;

FIG. 6 is a schematic flowchart of an example communication method according to an embodiment of this application;

FIG. 7 is a diagram of a structure of an example broadcast message according to an embodiment of this application;

FIG. 8(a) and FIG. 8(b) are a diagram of a group of GUIs of a mobile phone according to an embodiment of this application;

FIG. 9 is a schematic flowchart of another example communication method according to an embodiment of this application;

FIG. 10(a) to FIG. 10(c) are a diagram of another group of GUIs of a mobile phone according to an embodiment of this application;

FIG. 11 is a diagram of a group of GUIs of a first AP according to an embodiment of this application;

FIG. 12A and FIG. 12B are a schematic flowchart of another example communication method according to an embodiment of this application;

FIG. 13 is a diagram of a structure of another example broadcast message according to an embodiment of this application;

FIG. 14 is a diagram of an example broadcast time sequence of a first message and a second message according to an embodiment of this application;

FIG. 15 is a schematic flowchart of an example in which a STA obtains basic information of an AP according to an embodiment of this application;

FIG. 16 is a schematic flowchart of an example P2P device discovery process according to an embodiment of this application;

FIG. 17 to FIG. 19A and FIG. 19B each are a schematic flowchart of another example communication method according to an embodiment of this application;

FIG. 20 is a block diagram of an example communication apparatus according to an embodiment of this application; and

FIG. 21 is a block diagram of another example communication apparatus according to an embodiment of this application.

## DESCRIPTION OF EMBODIMENTS

The following describes the technical solutions in embodiments of this application with reference to the accompanying drawings.

For ease of understanding embodiments of this application, the following points are first described.

First, in this application, "indicate" may include "directly indicate" and "indirectly indicate". When a piece of indication information is described as indicating A, the indication information may directly indicate A or indirectly indicate A, but it does not mean that the indication information necessarily carries A.

Information indicated by indication information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of information may be identified and indicated in a unified manner, to reduce indication overheads caused by separately indicating same information.

Second, "first", "second", and various numeric numbers (for example, "#1" and "#2") shown in this application are merely intended to distinguish between objects for ease of description, but not to limit the scope of embodiments of this application, for example, distinguish between different messages, distinguish between different information, distinguish between different STAs, distinguish between different APs, or distinguish between different Wi-Fi devices, rather than describing a particular order or sequence. It should be understood that objects described in such a way are interchangeable in an appropriate circumstance, so that a solution other than embodiments of this application can be described.

Third, in embodiments of this application, "preset" may include being indicated by a device by using signaling, or being predefined, for example, being defined in a protocol. "Predefine" may be implemented by prestoring, in a device (for example, including a station and an access point), corresponding code or a data structure, or may be implemented in another manner that may be used for indicating related information. A specific implementation of "predefine" is not limited in this application. For example, "predefine" may mean being defined in a protocol.

Fourth, in embodiments of this application, the "protocol" may be a standard protocol in the communication field, for example, may include a WLAN protocol and a related protocol applied to a future communication system. This is not limited in this application.

Fifth, in embodiments of this application, "of (of)", "corresponding or relevant (corresponding, relevant)", "corresponding (corresponding)", and "associate (associate)" may sometimes be used interchangeably. It should be noted that meanings expressed by the terms are consistent when differences between the terms are not emphasized.

The technical solutions in embodiments of this application may be applied to various communication systems, for example, a wireless local area network (wireless local area network, WLAN) communication system or a future communication system.

For example, the following describes an application scenario in embodiments of this application and a method in embodiments of this application by using a WLAN system as an example.

Specifically, embodiments of this application may be applied to a WLAN, and embodiments of this application may be applied to any protocol in the IEEE 802.11 series protocols currently used by the WLAN, a ZigBee protocol, a Bluetooth protocol, an ultra-wideband (Ultra-Wideband, UWB) protocol, and the like. The WLAN may include one or more basic service sets (basic service set, BSS), and network nodes of the BSS include a wireless AP and a STA. Each BSS may include one AP and a plurality of STAs associated with the AP.

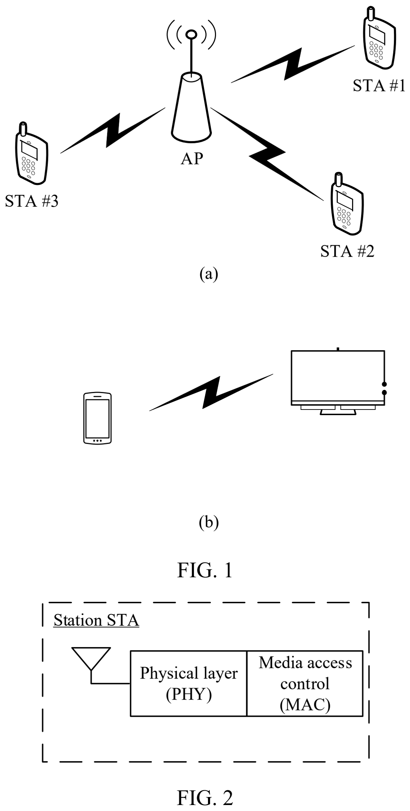

For ease of understanding of embodiments of this application, a communication system shown in FIG. 1 is used as an example to first describe in detail a communication system applicable to embodiments of this application.

For example, a system in a scenario shown in (a) in FIG. 1 may be a WLAN system, and the WLAN system in (a) in FIG. 1 may include one or more APs and one or more STAs.

For example, the AP and the STA may form a communication system. In (a) in FIG. 1, communication between one AP (such as an AP shown in (a) in FIG. 1) and three STAs (such as a STA #1, a STA #2, and a STA #3 shown in (a) in FIG. 1) is used as an example.

Wireless communication may be performed between the AP and the STA using various standards. For example, an uplink transmission manner between the AP and the STA includes but is not limited to a direct sequence spread spectrum (Direct Sequence Spread Spectrum, DSSS) manner, an orthogonal frequency division multiple access (orthogonal frequency division multiple access, OFDMA) manner, a single-user multiple-input multiple-output (single-user multiple-input multiple-output, SU-MIMO) manner, a multi-station channel multiple-input multiple-output (multi-user multiple-input multiple-output, MU-MIMO) manner, a massive multiple-input multiple-output (massive multiple-input multiple-output, Massive MIMO) manner, a coordinated multipoint (Coordinated Multiple Points Transmission/Reception, CoMP) manner, or an OFDMA and MIMO hybrid transmission manner.

The AP is also referred to as a wireless access point, a hotspot, or the like. The AP is an access point for mobile users to access wired networks, and are mainly deployed in homes, buildings, and campuses, or may be deployed outdoors. The AP is equivalent to a bridge that connects a wired network and a wireless network, and a main function of the AP is to connect wireless network clients together, and then connect the wireless network to the Ethernet.

For example, a system in a scenario shown in (b) in FIG. 1 may be a WLAN system, and the WLAN system is a WLAN system in a Wi-Fi peer-to-peer (peer-to-peer, P2P) architecture.

A Wi-Fi P2P technology enables a plurality of Wi-Fi devices to form a network (P2P Network, also referred to as P2P Group) and communicate with each other when there is no AP. In the P2P architecture, there are three concepts: (1) P2P device: may be considered as a Wi-Fi device; (2) P2P network owner (group owner, GO): is a Wi-Fi device that provides a Wi-Fi network service, and has a function similar to that of the AP in the BSS; and (3) P2P client (client): is a Wi-Fi device that requests or entrusts to provide a Wi-Fi network service, and has a function similar to that of the STA in the BSS. Before the P2P network is established, each terminal device is a P2P device. After P2P negotiation is completed between these P2P devices, only one P2P device plays a role of the GO (that is, acts as the AP), and the other P2P devices play a role of P2P clients (that is, act as STAs).

As shown in (b) in FIG. 1, a plurality of Wi-Fi devices may form a communication system. In (b) in FIG. 1, communication between two Wi-Fi devices (such as a mobile phone and a smart screen shown in (b) in FIG. 1) is used as an example.

Wireless communication may be performed between the plurality of Wi-Fi devices using various standards. For an example of a communication manner between the plurality of Wi-Fi devices, refer to the foregoing example of the communication manner between the STA and the AP. Details are not described herein again.

For example, the STA or the Wi-Fi device in embodiments of this application may be a terminal device. The terminal device includes user equipment, an access terminal, a subscriber unit, a subscriber station, a mobile station, a mobile console, a remote station, a remote terminal, a mobile device, a user terminal, a terminal, a wireless communication device, a user agent, or a user apparatus. The STA or the Wi-Fi device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5th generation (5th Generation, 5G) network, a terminal device in a future evolved public land mobile network (public land mobile network, PLMN), or the like. The STA or the Wi-Fi device may alternatively be a media device such as a smart screen, a set-top box, an augmented reality/virtual reality (augmented reality/virtual reality, AR/VR) device, or the like. This is not limited in embodiments of this application.

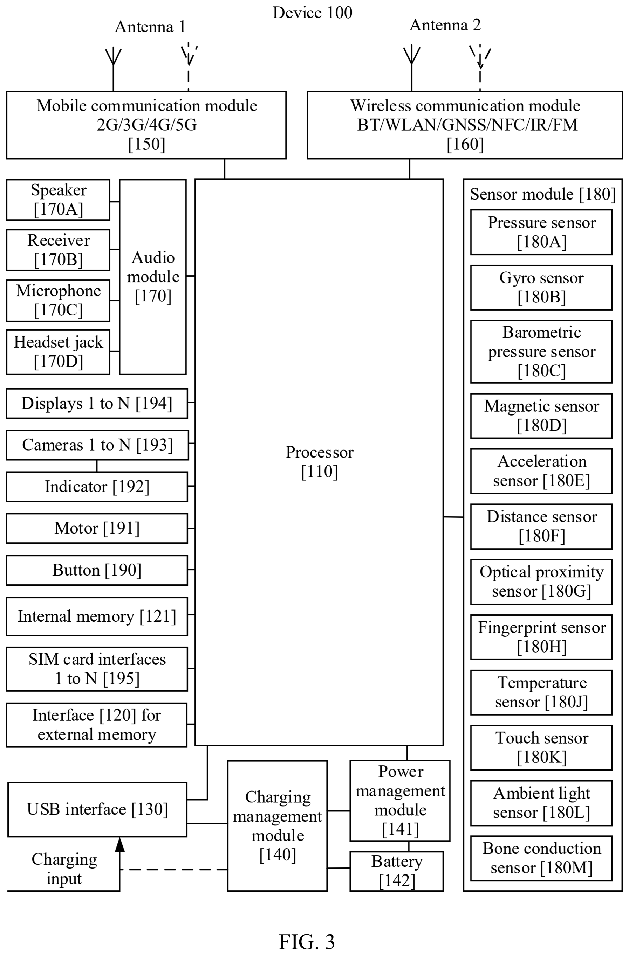

The following describes a structure of a STA with reference to FIG. 2 and FIG. 3.

For example, FIG. 2 is a diagram of a software structure of an example of a STA according to an embodiment of this application.

As shown in FIG. 2, the STA may include a physical layer (physical layer, PHY) processing circuit and a media access control (media access control, MAC) processing circuit. The physical layer processing circuit may be configured to process a physical layer signal, and the MAC processing circuit may be configured to process a MAC signal.

For example, FIG. 3 is a diagram of a structure of an example of a device 100 according to an embodiment of this application.

For example, as shown in FIG. 3, the device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the device 100. In some other embodiments of this application, the device 100 may include more or fewer components than those shown in the figure, or combine some components, or split some components, or have different component arrangements. For example, the device 100 may further include another communication module, and the another communication module may provide a communication technology other than the communication technologies that can be provided by the mobile communication module 150 and the wireless communication module 160 (for details, refer to the following corresponding descriptions, and details are not described herein), for example, long range radio (long range radio, LoRa), UWB, and worldwide interoperability for microwave access (worldwide interoperability for microwave access, WiMAX). The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules shown in this embodiment of this application is merely an example, and does not constitute a limitation on the structure of the device 100. In other embodiments of this application, the device 100 may alternatively use an interface connection manner that is different from the manner in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the device 100. When charging the battery 142, the charging management module 140 may further supply power to the device through the power management module 141. The power management module 141 is configured to connect the battery 142, the charging management module 140, and the processor 110.

A wireless communication function of the device 100 may be implemented by using the antenna 1, the antenna 2, the mobile communication module 150, the wireless communication module 160, the modem processor, the baseband processor, and the like.

The mobile communication module 150 may provide a solution for wireless communication, including 2G/3G/4G/5G and the like, that is applied to the device 100.

In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like.

In some embodiments, in the device 100, the antenna 1 is coupled to the mobile communication module 150, and the antenna 2 is coupled to the wireless communication module 160, so that the device 100 can communicate with a network and another device according to a wireless communication technology.

The device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. In some embodiments, the device 100 may include one or N displays 194, where N is a positive integer greater than 1.

The device 100 may implement a photographing function by using the ISP, the camera 193, the video codec, the GPU, the display 194, the application processor, and the like.

The interface 120 for external memory may be configured to connect to an external memory card, such as a micro SD card, to extend a storage capability of the device 100. The internal memory 121 may be configured to store computer executable program code, where the executable program code includes instructions. The processor 110 performs various function applications and data processing of the device 100 by running the instructions stored in the internal memory 121.

The device 100 may implement an audio function, such as music playing and recording, by using the audio module 170, the speaker 170A, the receiver 170B, the microphone 170C, the headset jack 170D, the application processor, and the like. The audio module 170 is configured to convert digital audio information into an analog audio signal for output, and is also configured to convert analog audio input into a digital audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and may convert the pressure signal into an electrical signal. The gyro sensor 180B may be configured to determine a motion gesture of the device 100. The barometric pressure sensor 180C is configured to measure barometric pressure. The acceleration sensor 180E may detect values of acceleration of the device 100 in all directions (usually on three axes). The distance sensor 180F is configured to measure a distance. The fingerprint sensor 180H is configured to collect a fingerprint. The touch sensor 180K is also referred to as a "touch panel". The touch sensor 180K may be disposed on the display 194. The touch sensor 180K and the display 194 form a touchscreen, which is also referred to as a "touch screen". The bone conduction sensor 180M may obtain a vibration signal.

The button 190 includes a power button, a volume button, and the like. The motor 191 may generate a vibration prompt. The indicator 192 may be an indicator light, and may indicate a charging status or a power change, or may indicate a message, a missed call, a notification, or the like. The SIM card interface 195 is configured to connect to a SIM card.

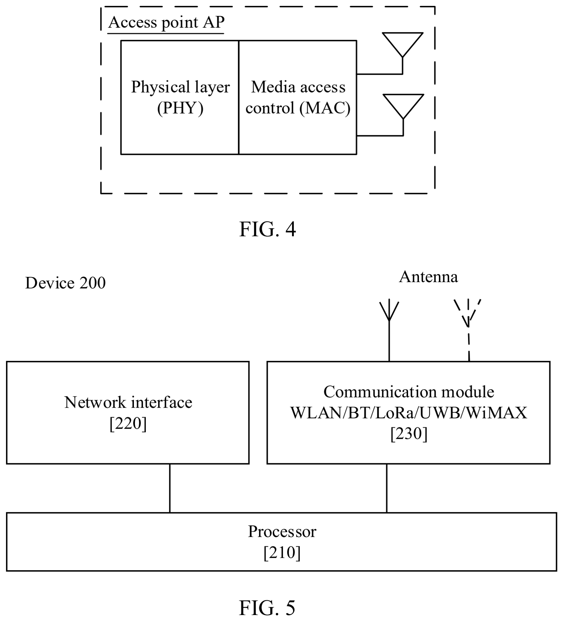

The following describes a structure of an AP with reference to FIG. 4 and FIG. 5.

For example, FIG. 4 is a diagram of a software structure of an example of an AP according to an embodiment of this application.

As shown in FIG. 4, the AP includes a PHY processing circuit and a MAC processing circuit. The PHY processing circuit may be configured to process a PHY signal, and the MAC processing circuit may be configured to process a MAC signal.

For example, FIG. 5 is a diagram of a structure of an example of a device 200 according to an embodiment of this application.

For example, as shown in FIG. 5, the device 200 includes a processor 210, a network interface 220, and a communication module 230. For descriptions of the processor 210, refer to the foregoing related descriptions of the processor 110. Details are not described herein again. The device 200 accesses, through the network interface 220, a network provided by the Internet (internet). The communication module 230 may provide a communication solution that is applied to the device 200 and that includes a WLAN (for example, a Wi-Fi network), Bluetooth (Bluetooth, BT), ZigBee (ZigBee), LoRa, UWB, a WiMAX communication technology, and the like.

In some embodiments, an antenna and the communication module 230 of the device 200 are coupled, so that the device 200 can communicate with a network and another device according to a communication technology.

It should be noted that, first, the AP may have a plurality of antennas, or may have a single antenna. An example in which the AP has two antennas is used in FIG. 4. Second, the STA may have a plurality of antennas, or may have a single antenna. An example in which the STA has a single antenna is used in FIG. 2. Third, FIG. 2 to FIG. 5 are merely simple diagrams, and do not constitute any limitation on the protection scope of this application. For internal structures of the AP and the STA, refer to descriptions of the conventional technology, or refer to internal structures of an AP and a STA after future technology development. The internal structures of the AP and the STA are not limited in this application, and details are not described again.

In a BSS, before a STA accesses a Wi-Fi network provided by an AP, the STA needs to obtain basic information of the AP, for example, a service set identifier (service set identifier, SSID) of the Wi-Fi network provided by the AP, a supported rate, a supported authentication manner, an encryption algorithm, and a power limit.

For example, the STA may obtain the basic information of the AP by passively scanning a Wi-Fi beacon frame. Specifically, the AP periodically sends a Wi-Fi beacon frame (Beacon) to the outside, and the STA may obtain the basic information of the surrounding AP by listening to the Wi-Fi beacon frame on a supported channel. Based on this, passive scanning (passive scanning) is a method used for most mobile electronic products currently. During passive scanning, the STA continuously switches between channels in a frequency band in which the STA is located and waits for arrival of the Wi-Fi beacon frame. Any frame received in a Wi-Fi channel listening process is temporarily stored, so that after the listening ends, the basic information of the AP is obtained based on the detected Wi-Fi beacon frame.

However, to ensure that the STA can successfully obtain the Wi-Fi beacon frame through scanning, the STA needs to stay for at least one wireless fidelity (wireless fidelity, Wi-Fi) beacon frame sending interval on each channel, to scan the Wi-Fi beacon frame broadcast by the AP. This increases overall time of scanning the Wi-Fi beacon frame by the STA. In addition, the AP usually sets a relatively long Wi-Fi beacon frame sending interval. This further increases overall time of scanning the Wi-Fi beacon frame by the STA. Therefore, efficiency of discovering and accessing a WLAN by the STA is reduced, and user experience is poor.

In addition, with diversity of distributed applications and increasing network traffic, APs are deployed more densely, and a quantity of Wi-Fi channels that can be used at the same time also increases. For example, in the IEEE 802.11g standard, there are only 14 20-MHz channels on a 2.4-GHz frequency band, while in the IEEE 802.11ac standard, there are 60 20-MHz channels on a 5-GHz frequency band. This causes a Wi-Fi scan delay (duration) that cannot be ignored, and makes Wi-Fi scanning a heavy work, thereby affecting efficiency of discovering and connecting to a Wi-Fi network by the STA, and causing poor user experience.

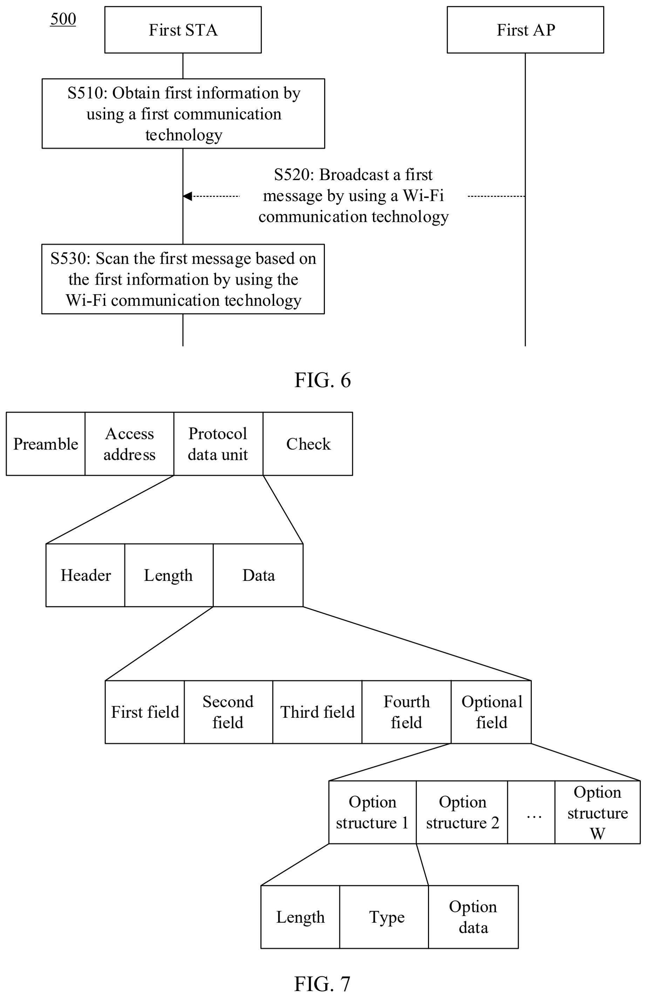

Therefore, embodiments of this application further provide a communication method. The following describes in detail the communication method provided in this application with reference to FIG. 6 to FIG. 14.

Embodiments in FIG. 6 to FIG. 14 may be applied to a communication system including a first STA and a first AP. Optionally, in some embodiments, the communication system may further include another AP, for example, a second AP.

It should be understood that a specific structure of an execution body of a method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a functional module that can invoke and execute a program in a first STA, a first AP, or a second AP.

FIG. 6 is a schematic flowchart of a communication method 500 according to an embodiment of this application.

For example, as shown in FIG. 6, the communication method 500 includes S510 to S530. Both S520 and S530 are performed after S510. An execution sequence between S520 and S530 is not limited. The following describes S510 to S530 in detail.

S510: A first STA obtains first information by using a first communication technology.

The first information is information related to transmitting a Wi-Fi beacon frame (a first message) by a first AP. For example, the first information may include an identifier of the first AP, a sending moment of the first message or time that has elapsed since last transmission of the first message, a channel occupied by the first message, and a sending interval of the first message. The first message is used to enable the first AP to be discoverable, and the first message is broadcast by the first AP by using a Wi-Fi communication technology.

It should be noted that the sending moment of the first message may be understood as a moment at which the first AP starts to broadcast the first message by using the Wi-Fi communication technology after a first target moment. The first target moment is a moment at which a transmitter (a device sending the first information) sends the first information. In addition, the first message may also be referred to as a Wi-Fi beacon frame broadcast by the first AP.

The channel occupied by the first message may be understood as a channel occupied for transmitting the first message, that is, a channel used by the first AP to broadcast the first message.

When the sending interval of the first message is 0, it may be considered that the first message is continuously broadcast, that is, the first AP continuously broadcasts the first message. Optionally, when the sending interval of the first message is 0, the first information may not carry the sending interval of the first message.

Optionally, in some embodiments, the first information further includes transmission duration of the first message, that is, duration for broadcasting the first message by the first AP by using the Wi-Fi communication technology.

The first communication technology is a communication technology other than the Wi-Fi communication technology.

For example, the first communication technology in embodiments of this application may include but is not limited to a low-power wireless communication technology, a UWB communication technology, a WiMAX communication technology, and the like.

For example, the low-power wireless communication technology may be but is not limited to a Bluetooth technology, a ZigBee (ZigBee) technology, a long range radio (long range radio, LoRa) technology, or the like.

In an example, if the first AP supports the first communication technology, the first AP may include the first information in a first broadcast message, and broadcast the first broadcast message by using the first communication technology. In this case, in S510, the first STA may scan the first broadcast message by using the first communication technology, and obtain the first information from the first broadcast message after obtaining the first broadcast message through scanning.

For example, it may be predefined that a first flag bit in an identifier of an AP is used to identify whether a broadcast message carries a broadcast message related to transmitting a Wi-Fi beacon frame. In this way, the first STA may determine, based on content indicated by the first flag bit in the identifier of the AP, whether the broadcast message carries the broadcast message related to transmitting the Wi-Fi beacon frame.

A form of the first flag bit is not limited in this embodiment of this application. For example, the first flag bit may be a digit or a letter.

FIG. 7 is a diagram of a format of an example broadcast message according to an embodiment of this application. For example, the broadcast message may be the first broadcast message described above, or the second broadcast message to the fourth broadcast message described below. It should be understood that the broadcast message shown in FIG. 7 is merely an example, and should not constitute a limitation on this application.

As shown in FIG. 7, the broadcast message includes four parts: a preamble, an access address, a protocol data unit, and a check. The preamble is determined based on a least significant bit of the access address, and the preamble part may be 1 byte. The access address is divided into a broadcast access address and a data access address. The data access address is generated by a device that broadcasts a third message. The access address may be 4 bytes. The check is a check bit for checking a broadcast message, and the check may be 3 bytes. The protocol data unit may be 7 to 39 bytes. As shown in FIG. 7, the protocol data unit includes three parts: a header (header), a length, and data. The header may be 1 byte, the length may be 1 byte, and the data may be 5 to 37 bytes. As shown in FIG. 7, the data includes a first field to a fourth field and an optional field. The first field to the fourth field may be filled with content that needs to be included in the broadcast message, and the optional field may be filled with content that is not necessarily included in the broadcast message. As shown in FIG. 7, the optional field may include W option structures, and each option structure may include a length (a length of a type and option data), a type (a type of option data), and option data. For example, if the broadcast message shown in FIG. 7 is the first broadcast message, the first field may be filled with the identifier of the first AP, the second field may be filled with the sending moment of the first message or the time that has elapsed since last transmission of the first message, the third field may be filled with the channel occupied by the first message, and the third field may be filled with the sending interval of the first message. An option structure 1 in the optional field may be filled with a length and a type that are corresponding to quality of service (quality of service, QoS) information of the first AP, and content indicated by the QoS information of the first AP that are described below. An option structure 2 in the optional field may be filled with a length and a type that are corresponding to information related to establishing a connection and/or communication with the first AP, and content indicated by the information related to establishing a connection and/or communication with the first AP that are described below.

Optionally, in this example, an interval at which the first AP broadcasts the first broadcast message is related to quality of service or a performance status of the first AP.

For example, when quality of service of the first AP at a moment $t_1$ is higher than or equal to quality of service at a moment $t_2$, the first AP may reduce the interval for broadcasting the first broadcast message, so that the first STA can quickly discover the first AP with better quality of service through scanning. When quality of service of the first AP at a moment $t_1$ is lower than quality of service at a moment $t_2$, the first AP may increase the interval for broadcasting the first broadcast message. The moment $t_1$ is later than the moment $t_2$.

For another example, when a performance status of the first AP at a moment $t_3$ is higher than or equal to a performance status at a moment $t_4$, the first AP may reduce the interval for broadcasting the first broadcast message, so that the first STA can quickly discover the first AP with a better performance status through scanning. When a performance status of the first AP at a moment $t_3$ is lower than a performance status at a moment $t_4$, the first AP may increase the interval for broadcasting the first broadcast message. The moment $t_3$ is later than the moment $t_4$.

Optionally, in this example, the first AP may broadcast the first broadcast message through at least one channel.

For example, if the first communication technology is a Bluetooth low energy communication technology, the first AP may broadcast the first broadcast message through at least one of a channel 37, a channel 38, and a channel 39.

For example, if the first communication technology is the Bluetooth low energy communication technology, the first AP may broadcast the first broadcast message through one of the channel 37, the channel 38, or the channel 39. That is, a channel through which the first AP broadcasts the first broadcast message is a fixed channel. In this way, the first STA does not need to switch a channel corresponding to the first communication technology, but can obtain the first broadcast message through scanning by using only the fixed channel corresponding to the first communication technology, thereby further reducing a delay in scanning the first broadcast message by the first STA by using the first communication technology and power consumption of the first STA.

In another example, if the first AP does not support the first communication technology, the first AP may actively broadcast, by using the Wi-Fi communication technology, a message carrying the first information, or after receiving a request of a third AP that supports the first communication technology, the first AP returns, to the third AP by using the Wi-Fi communication technology, a response message carrying the first information. After obtaining, through scanning by using the Wi-Fi communication technology, the message that carries the first information and that is sent by the first AP, the third AP may include the first information in a second broadcast message, and broadcast the second broadcast message by using the first communication technology. In this way, the third AP supporting the first communication technology can help the first AP not supporting the first communication technology send, to the first STA, the first information used to enable the first AP not supporting the first communication technology to be discoverable, so that the first STA can discover more APs. In addition, the first STA may choose to establish communication with more APs that meet the first condition. In this case, in S510, the first STA may scan the second broadcast message by using the first communication technology, and obtain the first information from the second broadcast message after obtaining the second broadcast message through scanning.

Optionally, in this example, an interval at which the third AP broadcasts the second broadcast message is related to quality of service or a performance status of the third AP.

For example, when quality of service of the third AP at a moment $t_5$ is higher than or equal to quality of service at a moment $t_6$, the third AP may reduce the interval for broadcasting the first broadcast message, so that the first STA can quickly discover the third AP with better quality of service through scanning. When quality of service of the third AP at a moment $t_5$ is lower than quality of service at a moment $t_6$, the third AP may increase the interval for broadcasting the second broadcast message. The moment $t_5$ is later than the moment $t_6$.

For another example, when a performance status of the third AP at a moment $t_7$ is higher than or equal to a performance status at a moment $t_8$, the third AP may reduce the interval for broadcasting the second broadcast message, so that the first STA can quickly discover the third AP with a better performance status through scanning. When a performance status of the third AP at a moment $t_7$ is lower than a performance status at a moment $t_8$, the third AP may increase the interval for broadcasting the second broadcast message. The moment $t_7$ is later than the moment $t_8$.

Optionally, in this example, the third AP may broadcast the second broadcast message through at least one channel.

For example, if the first communication technology is a Bluetooth low energy communication technology, the third AP may broadcast the second broadcast message through at least one of a channel 37, a channel 38, and a channel 39.

For example, if the first communication technology is the Bluetooth low energy communication technology, the third AP may broadcast the second broadcast message through one of the channel 37, the channel 38, or the channel 39. That is, a channel through which the third AP broadcasts the second broadcast message is a fixed channel. In this way, the third AP does not need to switch a channel corresponding to the first communication technology, but can obtain the second broadcast message through scanning by using only the fixed channel corresponding to the first communication technology, thereby further reducing a delay in scanning the second broadcast message by the first STA by using the first communication technology and power consumption of the first STA.

In addition, the first STA may further adjust, based on a moving speed of the first STA, an interval for obtaining the first information by using the first communication technology.

For example, when a moving speed of the first STA at a moment $t_9$ is greater than or equal to a moving speed at a moment $t_{10}$, the first STA decreases the interval for obtaining the first information by using the first communication technology. When a moving speed of the first STA at a moment $t_9$ is less than a moving speed at a moment $t_{10}$, the first STA increases the interval for obtaining the first information by using the first communication technology, to reduce unnecessary operations of listening by using the first communication technology while ensuring network connection quality of the first STA, thereby further reducing power consumption of the first STA. The moment $t_9$ is later than the moment $t_{10}$.

Optionally, in some embodiments, if a device (such as the first STA, the first AP, the second AP, or the third AP) supports a plurality of types of communication technologies (the plurality of types of communication technologies are the first communication technology, a second communication technology, and/or another communication technology), a user may further select one type of communication technology from the plurality of types of communication technologies as the first communication technology.

For example, the user may select one type of communication technology from the plurality of types of communication technologies as the first communication technology by using a first target application (for example, a setting application or another application) on the device. The device may further display a configuration parameter and/or a performance indicator of each communication technology. The user may select one type of communication technology as the first communication technology by using the configuration parameter and/or the performance indicator of each communication technology. For example, the configuration parameter of the communication technology may include an energy consumption level, a channel capacity, a security mode, and the like. The performance indicator of the communication technology may include parameters used to indicate communication quality, power consumption, a scan delay improvement rate, and/or the like.

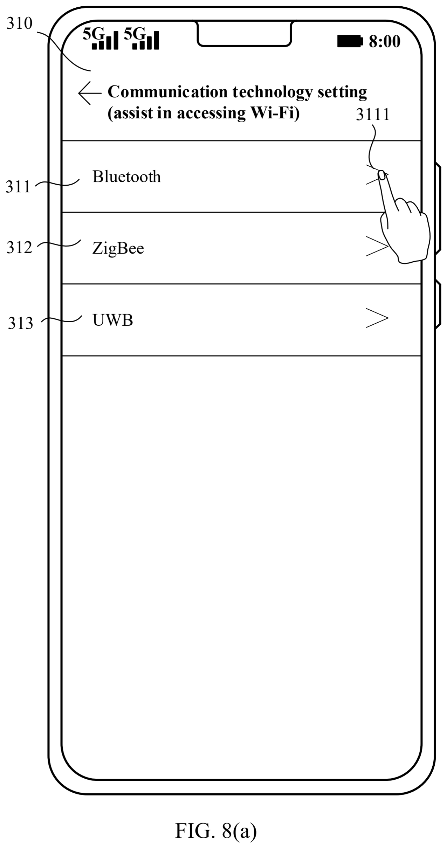

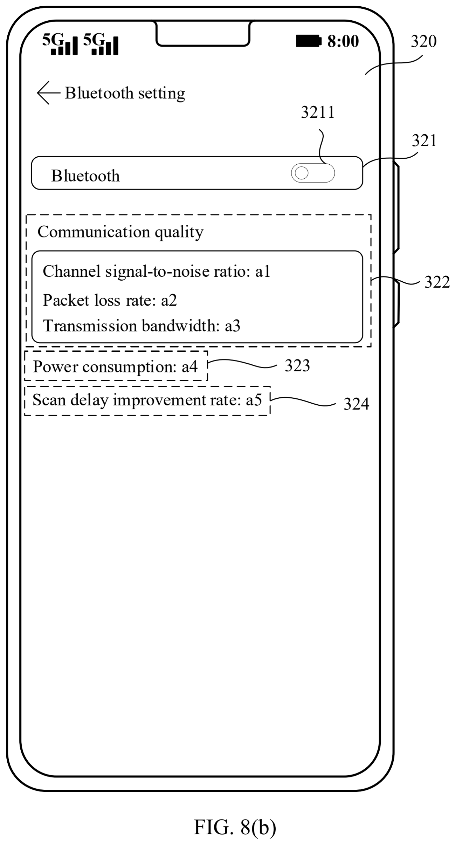

FIG. 8(a) and FIG. 8(b) are a diagram of a group of graphical user interfaces (graphical user interface, GUI) of an example of a mobile phone according to an embodiment of this application.

For example, as shown in FIG. 8(a), the mobile phone displays a communication technology setting interface 310, and the communication technology setting interface 310 displays a Bluetooth setting option 311, a ZigBee setting option 312, and a UWB setting option 313.

After the mobile phone detects that the user taps a control 3111 in the Bluetooth setting option, the mobile phone displays a Bluetooth setting interface 320 shown in FIG. 8(b).

For example, as shown in FIG. 8(b), the Bluetooth setting interface 320 includes a Bluetooth switch bar 321, a communication quality bar 322, a power consumption bar 323, and a scan delay improvement rate bar 324. The Bluetooth switch bar 321 includes a Bluetooth switch control 3221, and the Bluetooth switch control 3221 is configured to enable or disable a Bluetooth communication function. The communication quality bar 322 displays a channel signal-to-noise ratio, a packet loss rate, and a transmission bandwidth. The power consumption bar 323 displays power consumption. The scan delay improvement rate bar 324 displays a scan delay improvement rate.

S520: The first AP broadcasts the first message by using the Wi-Fi communication technology.

S530: The first STA scans the first message based on the first information by using the Wi-Fi communication technology.

In an example, if the first information includes the sending moment of the first message, in S530, the first STA may listen, based on the sending moment of the first message and the sending interval of the first message, to the first message on the channel occupied by the first message.

In another example, regardless of whether the first information includes the sending moment of the first message, in S530, the first STA may estimate the sending moment of the first message, and listen, based on the estimated sending moment of the first message and the sending interval of the first message, to the first message on the channel occupied by the first message. In this way, impact of a clock offset of the first STA and the first AP on scanning for the first message can be reduced, thereby reducing overheads of clock synchronization.

In this example, S530 specifically includes S531 and S532. The following describes S531 and S532 in detail.

S531: The first STA estimates the sending moment of the first message based on the time that has elapsed since last transmission of the first message, the sending interval of the first message, current local time of the first STA, and a moment at which the first information is obtained.

Specifically, the first STA estimates an $i^{th}$ sending moment $t_i$ of the first message according to the following formula:

$$t_i = -(t - t_{r1} + t_{e1}) \bmod t_{b1} + i \times t_{b1}$$

Herein, t is the current local time of the first STA, $t_{r1}$ is a local moment at which the first STA obtains the first information, $t_{e1}$ is the time that has elapsed since last transmission of the first message, $t_{b1}$ is the sending interval of the first message, and i=1, 2, 3....

S532: The first STA scans the first message based on the estimated sending moment of the first message by using the Wi-Fi communication technology and the channel occupied by the first message.

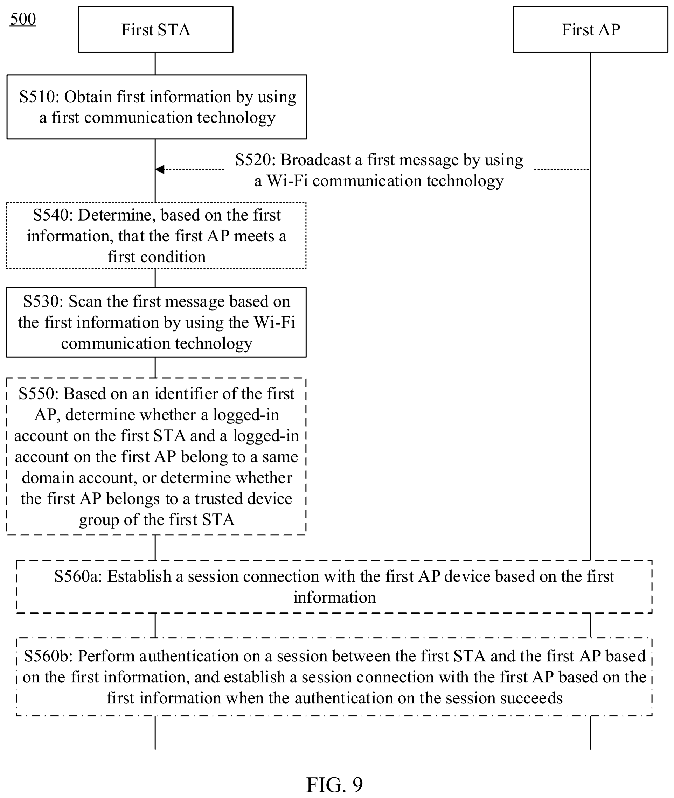

Optionally, in some embodiments, the first information may further include at least one of the following: QoS information of the first AP and information related to establishing a connection and/or communication with the first AP. In this way, as shown in FIG. 9, before S530, the method 500 may further include S540: Determine, based on the first information, that the first AP meets a first condition.

The first condition includes at least one of the following: belonging to a trusted device group of the first STA, belonging to a public reliable infrastructure (which may be understood as a valid device, such as routers of a network service provider and a content provider), meeting a QoS requirement of the first STA, and being capable of providing a connection mode and/or a communication mode supported by the first STA. In this way, the first STA needs to select, based on the first information, the first AP that meets the first condition, thereby ensuring that the first AP can provide good quality of service for the first STA, or ensuring that the first AP can establish a connection and/or communicate with the first STA, or ensuring communication security of the first STA.

For example, it may be predefined that a third flag bit in the identifier of the first AP is used to identify whether the first AP belongs to the trusted device group of the first STA. In this way, the first STA determines, based on the third flag bit in the identifier of the first AP, whether the first AP belongs to the trusted device group of the first STA.

A form of the third flag bit is not limited in this embodiment of this application. For example, the third flag bit may be a digit or a letter.

For example, it may be predefined that a fourth flag bit in the identifier of the first AP is used to identify whether the first AP belongs to the public reliable infrastructure. In this way, the first STA determines, based on the fourth flag bit in the identifier of the first AP, whether the first AP belongs to the public reliable infrastructure. In addition, S530 is performed only when the first AP belongs to the public reliable infrastructure. In this way, the first STA can be prevented from being connected to a fake first AP, thereby avoiding data theft, malware injection, and the like, and reducing a security threat.

A form of the fourth flag bit is not limited in this embodiment of this application. For example, the fourth flag bit may be a digit or a letter.

For example, the connection mode in this embodiment of this application may include an access and authentication type. Access and authentication may be understood as authentication performed when an association connection is established between two devices, and the association connection is a physical connection.

For example, the access and authentication type may include user account access and authentication, system account access and authentication, access and authentication of an application account type, same-account access and authentication, cross-account access and authentication, account-independent access and authentication, a trust relationship sharing and multiplexing authentication information transmission manner (such as a socket (socket), a Bluetooth socket (Bluetooth socket), or a distributed soft bus), a security authentication level (an entity level, a service level, a packet level, or the like), a security authentication algorithm protocol and a protocol credential, and the like.

For example, the communication mode in this embodiment of this application may include communication protocols and algorithms corresponding to different services, a network resource allocation model and a key parameter of the network resource allocation model, a type of a transmission channel, and an interaction mechanism.

It should be noted that if it is determined, based on the first information, that the first AP does not meet the first condition, S530 does not need to be performed.

Optionally, in some embodiments, the user may further select one or more QoS parameters from a plurality of QoS parameters as QoS parameters in the QoS requirement of the first STA.

For example, the user may select one or more QoS parameters from the plurality of QoS parameters as the QoS parameters in the QoS requirement of the first STA by using a second target application (for example, a setting application or another application) on the device. For example, the QoS parameters may include a rate, a throughput, a delay, a packet loss rate, round trip time, and the like.

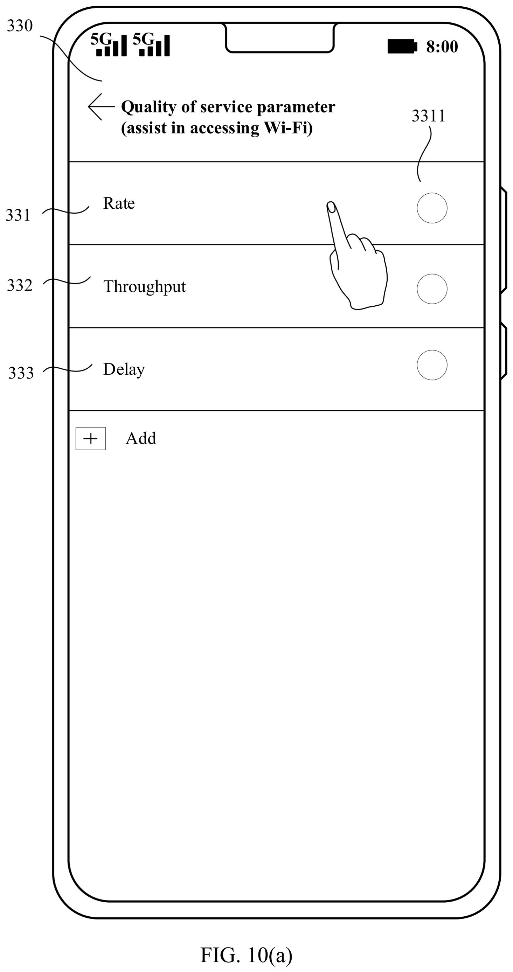

FIG. 10(a) to FIG. 10(c) are a diagram of a group of GUIs of another example of a mobile phone according to an embodiment of this application.

For example, as shown in FIG. 10(a), the mobile phone displays a QoS parameter setting interface 330, and the QoS parameter setting interface 330 displays a rate setting option 331, a throughput setting option 332, and a delay setting option 333. After the mobile phone detects that the user taps a control 3311 in the rate setting option 331, the rate is used as a QoS parameter in the QoS requirement of the first STA.

Optionally, in some embodiments, the user may further add a QoS parameter to the QoS requirement of the first STA. For example, as shown in FIG. 10(a), the QoS parameter setting interface 330 may further display an add control, and the user may add the QoS parameter to the QoS requirement of the first STA by using the add control.

Optionally, in some embodiments, the user may further enable or disable a QoS parameter threshold requirement function.

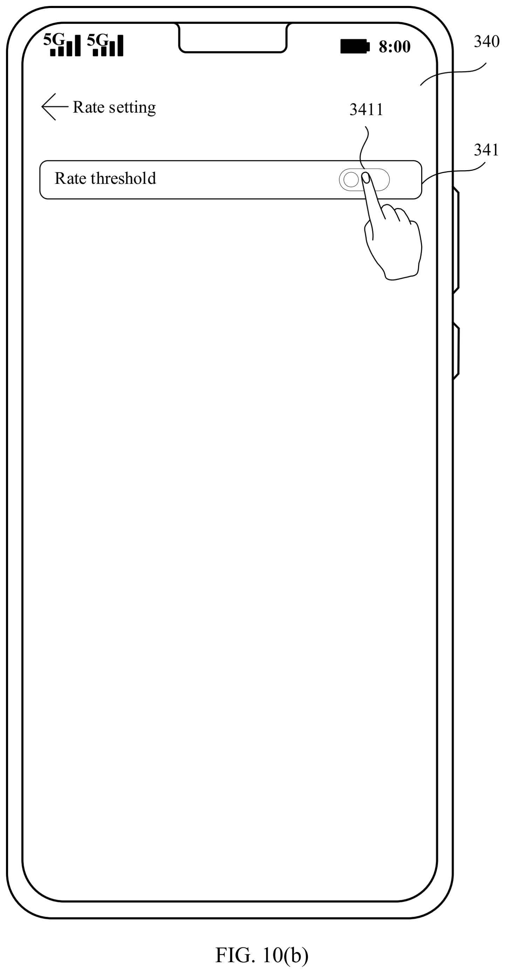

For example, after the mobile phone detects that the user touches and holds the rate setting option 331, the mobile phone displays a rate setting interface 340 shown in FIG. 10(b).

For example, as shown in FIG. 10(b), the rate setting interface 340 includes a rate threshold setting bar 341, the rate threshold setting bar 341 includes a rate threshold switch 3411, and the rate threshold switch 3411 is used to enable or disable a rate threshold requirement function.

Optionally, in some embodiments, the user may further set a threshold requirement of the QoS parameter in the QoS requirement of the first STA.

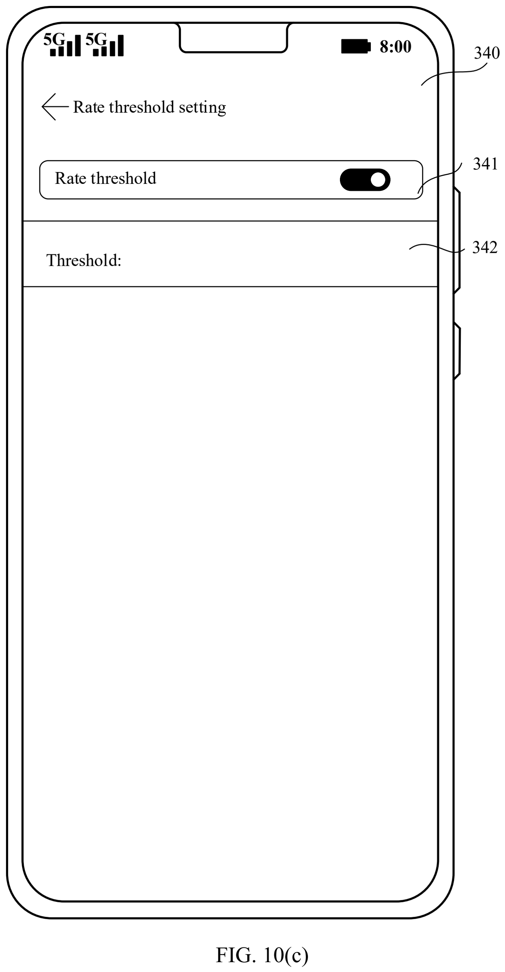

For example, after the mobile phone detects that the user taps the rate threshold switch 3411, as shown in FIG. 10(c), the rate setting interface 340 displays a rate threshold editing bar 342. The user may set a rate threshold by tapping the rate threshold editing bar 342.

For example, the QoS information of the first AP includes a performance indicator of the first AP and/or a network change status of the first AP.

For example, the performance indicator of the first AP includes but is not limited to a bandwidth, a cache, a packet loss rate, a forwarding delay, and a quantity of devices allowed to access.

In an embodiment in which the first information includes the QoS information of the first AP, the QoS information of the first AP is carried in $N_1$ attribute fields (which may be understood as the optional field described above) of a third message. A value of each of the $N_1$ attribute fields and/or a value of $N_1$ are/is determined based on at least one of the following: a real-time running status of the first AP, a real-time connection mode of the first AP, and/or a real-time communication mode of the first AP. For example, when a data service accessed by the first AP is converted from a common text to audio and video streaming media, a QoS information field of the first AP may change from carrying a bandwidth to carrying a bandwidth, a delay, and a frame loss rate. For another example, when the real-time connection mode is changed from a transmission control protocol (transmission control protocol, TCP) to a user datagram protocol (user datagram protocol, UDP), a QoS information field of the first AP may change from carrying a throughput and a delay to carrying a throughput and a packet loss rate. That is, the first AP may dynamically adjust, based on a status of the first AP, content specifically included in the QoS information of the first AP in the first information. In this way, the first AP can provide differentiated services for the first STA in different time periods, and network transmission security is improved.

Optionally, in some embodiments, the user may further select one or more performance indicators from a plurality of performance indicators as performance indicators of the first AP that should be included in the first information.

In an example, if the first AP has a display, the user may select, by using a third target application (for example, a setting application or another application) on the first AP, one or more performance indicators from the plurality of performance indicators as the performance indicators of the first AP that should be included in the first information. A display interface of the third target application on the first AP may display a plurality of performance indicators.

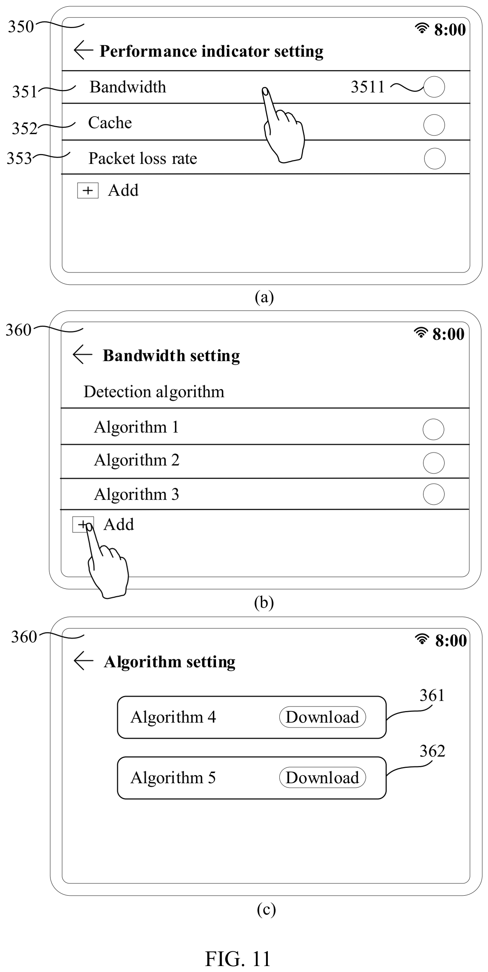

For example, as shown in (a) in FIG. 11, the first AP displays a performance indicator setting interface 350. The performance indicator setting interface 350 includes a bandwidth setting option 35l, a cache setting option 352, and a packet loss rate setting option 353. After the first AP detects that the user taps a control 3511 in the bandwidth setting option 351, a bandwidth is used as a performance indicator of the first AP that should be included in the first information.

Optionally, the user may further add a performance indicator of the first AP that should be included in the first information. For example, as shown in (a) in FIG. 11, the performance indicator setting interface 350 may further display an add control, and the user may add, by using the add control, the performance indicator of the first AP that should be included in the first information.

Optionally, the user may further set a detection algorithm for each performance indicator.

For example, after the first AP detects that the user touches and holds the bandwidth setting option 35l, the first AP displays a bandwidth setting interface 360 shown in (b) in FIG. 11. The bandwidth setting interface 360 includes a plurality of detection algorithms, and the user may select a corresponding algorithm.

Optionally, the user may further add a detection algorithm for a performance indicator.

For example, as shown in (b) in FIG. 11, the bandwidth setting interface 360 may further display an add control, and the user may add a bandwidth detection algorithm by using the add control. For example, after the first AP detects that the user taps the add control shown in (b) in FIG. 11, the first AP may display an algorithm setting interface 360 shown in (c) in FIG. 11. The algorithm setting interface 360 includes a setting bar 361 of an algorithm 4 and a setting bar 362 of an algorithm 5. In this case, if the user wants to add the algorithm 4, the user may tap a download control in the setting bar 361 of the algorithm 4. In this way, after the first AP detects that the user taps the download control in the setting bar 361 of the algorithm 4, the first AP automatically downloads the algorithm 4 from the Internet, or the first AP automatically jumps to a local installation and download entrance, so that the user adds the bandwidth detection algorithm 4.

In another example, if the first AP does not have a display, the user may select, by using a management address of the first AP, one or more performance indicators from the plurality of performance indicators as the performance indicators of the first AP that should be included in the first information; or the user may select, by using a third target application (for example, a setting application or another application) related to the first AP on a terminal device (for example, a mobile phone) that has a screen and that accesses the first AP, one or more performance indicators from the plurality of performance indicators as the performance indicators of the first AP that should be included in the first information.

Optionally, the user may further add, by using a website, a performance indicator of the first AP that should be included in the first information. Alternatively, the user may select a detection algorithm for each performance indicator or add a detection algorithm for a performance indicator by using a website.

For example, the information related to establishing a connection and/or communication with the first AP includes: information related to at least one type of service supported by the first AP, at least one access and authentication type supported by the first AP, and/or a configuration parameter for performing authentication and session transmission with the first AP.

For example, the information related to the at least one type of service supported by the first AP includes a transmission parameter of the at least one type of service supported by the first AP, such as a transmission resource, a bandwidth allocation ratio, and a maximum bandwidth. For another example, the information related to the at least one type of service supported by the first AP may further include a service policy of the at least one type of service supported by the first AP, for example, a preemptable flag, a rate limit, load balancing, an access priority, traffic control, a signature, and encryption.

Optionally, in some embodiments, the user may further select one or more service types from a plurality of service types supported by the first AP, and use the first information to carry information related to the one or more selected services.

In an example, if the first AP has a display, the user may select, by using a fourth target application (for example, a setting application or another application) on the first AP, one or more services from the plurality of services supported by the first AP, and use the first information to carry information related to the one or more selected services. Optionally, the user may further set specific transmission parameters corresponding to the service.

In another example, if the first AP does not have a display, the user may select, by using a management address of the first AP or by using a terminal device that has a screen and that accesses the first AP, one or more services from the plurality of services supported by the first AP, and use the first information to carry information related to the one or more selected services. Optionally, the user may further set, by using the website, a transmission parameter corresponding to the service.

Optionally, in some embodiments, the user may further select one or more access and authentication types from a plurality of access and authentication types, and use the first information to carry the access and authentication types.

In an example, if the first AP has a display, the user may select, by using a fifth target application (for example, a setting application or another application) on the first AP, one or more access and authentication types from the plurality of access and authentication types supported by the first AP, and use the first information to carry the access and authentication types.

In another example, if the first AP does not have a display, the user may select, by using a management address of the first AP or by using a terminal device that has a screen and that accesses the first AP, one or more access and authentication types from the plurality of access and authentication types supported by the first AP, and use the first information to carry the access and authentication types.

For example, the configuration parameter for performing authentication and session transmission with the first AP may include a protocol version, a digital signature, an authentication type, an encryption mode, a shared key, network configuration information, a transmission channel type, an IP address corresponding to a transmission channel, an available port, and the like. The protocol version may be understood as a version of a related protocol used in an authentication and session process. A bound port may be understood as a port number used by a protocol. The network configuration information may be understood as configuration information of a network.

In an embodiment in which the first information includes the information related to establishing a connection and/or communication with the first AP, the information related to establishing a connection and/or communication with the first AP is carried in $N_2$ attribute fields of the third message. A value of each of the $N_2$ attribute fields and/or a value of N2 are/is determined based on at least one of the following: a real-time running status of the first AP, a real-time connection mode of the first AP, and/or a real-time communication mode of the first AP. That is, the first AP may dynamically adjust, based on a status of the first AP, content specifically included in the information related to establishing a connection and/or communication with the first AP in the first information. In this way, the first AP can provide differentiated services for the first STA in different time periods, and network transmission security is improved.

The third message described above is a message carrying the first information. For example, the third message may be the first broadcast message or the second broadcast message described above.

It should be noted that the attribute field in this embodiment of this application may be defined by using type-length-value (type-length-value, TLV). The type field indicates a type, the length field indicates a quantity of bytes included in the "value" field, for example, 8 bytes (Byte), and the value field is used to carry information.

Optionally, in some embodiments, the user may further select one or more configuration parameters from a plurality of configuration parameters, and use the first information to carry the configuration parameters.

In an example, if the first AP has a display, the user may select, by using a sixth target application (for example, a setting application or another application) on the first AP, one or more configuration parameters from the plurality of configuration parameters supported by the first AP, and use the first information to carry the configuration parameters.

In another example, if the first AP does not have a display, the user may select, by using a management address of the first AP or by using a terminal device that has a screen and that accesses the first AP, one or more configuration parameters from the plurality of configuration parameters supported by the first AP, and use the first information to carry the configuration parameters.

In an embodiment in which the first information further includes the information related to establishing a connection and/or communication with the first AP, the first STA can directly establish a connection and communicate with the first AP based on the first information without performing a complex bidirectional interaction procedure (such as permission authentication, channel selection, and session negotiation) with the first AP, thereby accelerating a process of connection establishment and communication between the first STA and the first AP. In this case, as shown in FIG. 9, the method 500 further includes S550 and S560a, or the method 500 further includes S550 and S560b. The following describes S550, S560a, and S560b in detail.

S550: Based on the identifier of the first AP, the first STA determines whether a logged-in account on the first STA and a logged-in account on the first AP belong to a same domain account, or determines whether the first AP belongs to the trusted device group of the first STA.

For example, it may be predefined that an area of the logged-in account on the first AP is identified by using the second flag bit in the identifier of the first AP. In this way, the first STA may match content indicated by a second flag bit in an identifier of the first STA with content indicated by the second flag bit in the identifier of the first AP. If the content matches, the logged-in account on the first STA and the logged-in account on the first AP belong to the same domain account. If the content does not match, the logged-in account on the first STA and the logged-in account on the first AP do not belong to the same domain account.

A form of the second flag bit is not limited in this embodiment of this application. For example, the second flag bit may be a digit or a letter.

For example, the first STA may determine, by using the third flag bit in the identifier of the first AP, whether the first AP belongs to the trusted device group of the first STA.

When the logged-in account on the first STA and the logged-in account on the first AP belong to the same domain account, or the first AP belongs to the trusted device group of the first STA, S560a is performed: The first STA establishes a session connection with the first AP based on the first information. That is, because the logged-in account on the first STA and the logged-in account on the first AP belong to the same domain account, or the first AP belongs to the trusted device group of the first STA, it may be considered that a trust relationship exists between the first STA and the first AP. In this case, a session connection may be directly established between the first STA and the first AP without session authentication (authentication (after association) is performed during session transmission between the two devices, and the connection is a logical connection). This not only ensures that the session connection between the first STA and the first AP is established in a trusted environment, but also accelerates a process of establishing a session between the first STA and the first AP.

When the logged-in account on the first STA and the logged-in account on the first AP do not belong to the same domain account, or the first AP does not belong to the trusted device group of the first STA, S560b is performed: The first STA performs authentication on a session between the first STA and the first AP based on the first information, and establishes a session connection with the first AP based on the first information when the authentication on the session succeeds. That is, because the logged-in account on the first STA and the logged-in account on the first AP do not belong to the same domain account, or the first AP does not belong to the trusted device group of the first STA, it may be considered that no trust relationship exists between the first STA and the first AP. In this case, session authentication needs to be performed between the first STA and the first AP, and the session connection is established after the session authentication succeeds. This ensures that the session connection between the first STA and the first AP is established in a trusted environment.

For example, that the first STA establishes the session connection with the first AP based on the first information includes: The first STA establishes the session connection with the first AP based on the first information and a first performance status.

The first performance status includes a current performance status of the first STA and/or a current performance status of the first AP.

For example, the performance status may include communication quality and/or resource usage.

For example, the current performance status of the first AP may be (directly or indirectly) obtained by the first STA from the first AP. For example, the first information includes the current performance status of the first AP.

When the first performance status meets a second condition, a transmission channel corresponding to a service is created based on the first information. In this way, resource utilization can be improved while service transmission performance of the first STA is ensured, thereby improving overall quality of service of a system.

When the first performance status does not meet a second condition, a transmission channel of a target type is created based on the first information. The second condition includes at least one of the following: communication quality of the first STA is greater than a first threshold, communication quality of the first AP is greater than a second threshold, resource usage of the first STA is less than a third threshold, and resource usage of the first AP is less than a fourth threshold.

For example, the first STA may obtain the transmission channel corresponding to the service or the transmission channel of the target type based on the first information.

For example, the transmission channel corresponding to the service may include a TCP-based transmission channel, a UDP-based transmission channel, a direct transmission channel, a proxy transmission channel, a synchronous transmission channel, an asynchronous transmission channel, or the like.

For example, the transmission channel of the target type may include a UDP-based transmission channel.

Optionally, in some embodiments, in addition to obtaining the first information related to the first AP, the first STA may further obtain information related to another AP. A quantity of other APs is not limited in this embodiment of this application. The following uses an example in which the another AP is a second AP for description.

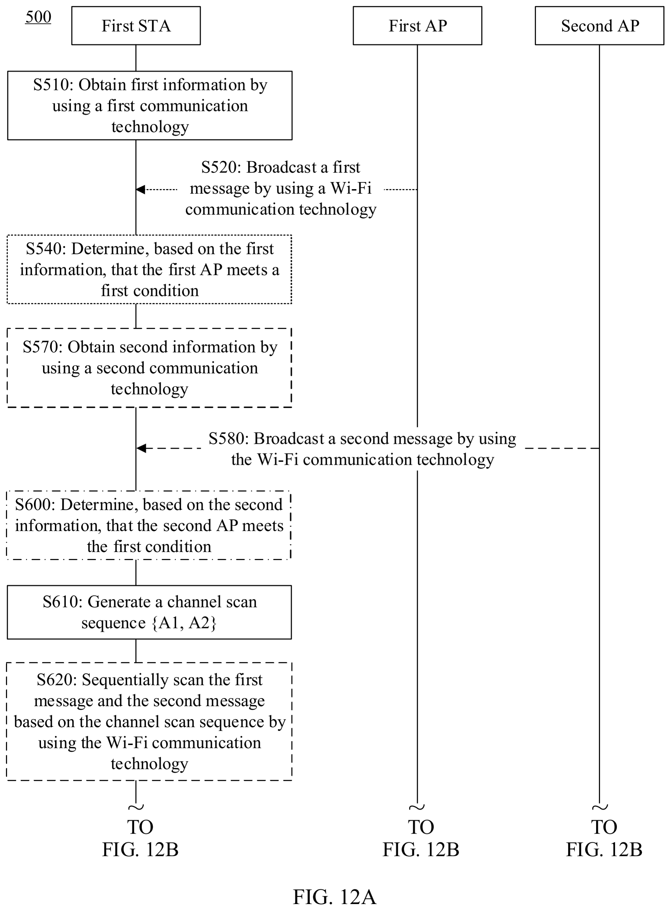

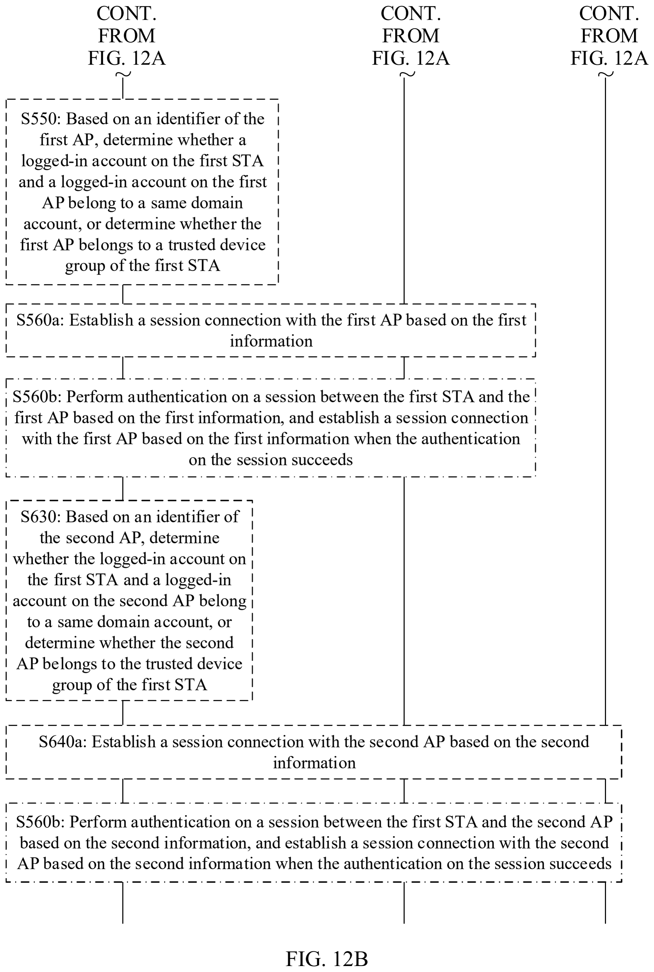

Optionally, as shown in FIG. 12A and FIG. 12B, the method 500 further includes S570 to S590. An execution sequence between S570 to S590 and S510 to S530 is not limited. The following describes S570 to S590 in detail.

S570: The first STA obtains second information by using a second communication technology.

The second information is information related to the second AP. For example, the second information may include an identifier of the second AP, a sending moment of a second message or time that has elapsed since last transmission of the second message, a channel occupied by the second message, and a sending interval of the second message, the second message is used to enable the second AP to be discoverable, and the second message is broadcast by the second AP by using the Wi-Fi communication technology.

It should be noted that the sending moment of the second message may be understood as a moment at which the second AP starts to broadcast the second message by using the Wi-Fi communication technology after a second target moment. The second target moment is a moment at which a transmitter (a device sending the second information) sends the second information.

The second message may also be referred to as a Wi-Fi beacon frame broadcast by the second AP.

When the sending interval of the second message is 0, it may be considered that the second message is continuously broadcast, that is, the second AP continuously broadcasts the second message. Optionally, when the sending interval of the second message is 0, the second information may not carry the sending interval of the second message.

Optionally, in some embodiments, the second information further includes transmission duration of the second message, that is, duration for broadcasting the second message by the second AP by using the Wi-Fi communication technology.

The second communication technology is a communication technology other than the Wi-Fi communication technology.

For example, the second communication technology in embodiments of this application may include but is not limited to a low-power wireless communication technology, a UWB communication technology, a WiMAX communication technology, and the like.

In some embodiments, the second communication technology and the first communication technology may be different communication technologies. For example, the first communication technology may be a Bluetooth low energy technology, and the second communication technology may be a ZigBee technology.

In some other embodiments, the second communication technology and the first communication technology may be a same communication technology. For example, both the first communication technology and the second communication technology are a Bluetooth low energy technology.

With reference to an example, the following describes how the second information is specifically transmitted in this embodiment.

In some embodiments, if the second AP supports the second communication technology, the second AP may include the second information in a third broadcast message, and broadcast the third broadcast message by using the second communication technology. In this case, in S570, the first STA may scan the third broadcast message by using the second communication technology, and obtain the second information from the third broadcast message after obtaining the third broadcast message through scanning.

In this embodiment, if the first AP described above does not support the first communication technology, but the second AP supports the first communication technology, in this case, the second AP may be an example of the third AP described above. In this case, both the first information and the second information are broadcast by the second AP. In this case, in an example, the third broadcast message and the second broadcast message may be one message. In this case, the second AP includes the second information and the first information in one broadcast message for broadcasting. In another example, the third broadcast message and the second broadcast message may alternatively be different messages. In this case, the first AP includes the second information and the first information in different broadcast messages for broadcasting.

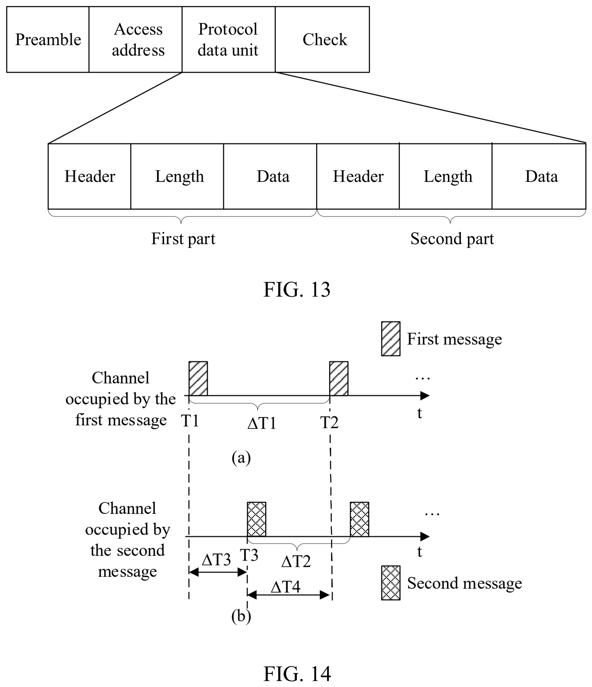

When the first information and the second information are carried in one broadcast message, as shown in FIG. 13, a protocol data unit in the broadcast message includes a first part and a second part, where the first part is used to fill content of the first information, and the second part is used to fill content of the second information.

Optionally, in this embodiment, an interval at which the second AP broadcasts the third broadcast message is related to quality of service or a performance status of the second AP.

For example, when quality of service of the second AP at a moment $t_{11}$ is higher than or equal to quality of service at a moment $t_{12}$, the second AP may reduce the interval for broadcasting the first broadcast message, so that the first STA can quickly discover the first AP with better quality of service through scanning. When quality of service of the second AP at a moment $t_{11}$ is lower than quality of service at a moment $t_{12}$, the second AP may increase the interval for broadcasting the first broadcast message. The moment $t_{11}$ is later than the moment $t_{12}$.

For another example, when a performance status of the second AP at a moment $t_{13}$ is higher than or equal to a performance status at a moment $t_{14}$, the second AP may reduce the interval for broadcasting the first broadcast message, so that the first STA can quickly discover the first AP with a better performance status through scanning. When a performance status of the second AP at a moment $t_{13}$ is lower than a performance status at a moment $t_{14}$, the second AP may increase the interval for broadcasting the first broadcast message. The moment $t_{13}$ is later than the moment $t_{14}$.

Optionally, in this example, the second AP may broadcast the third broadcast message through at least one channel.

For example, if the second communication technology is a Bluetooth low energy communication technology, the second AP may broadcast the third broadcast message through at least one of a channel 37, a channel 38, and a channel 39.

For example, if the second communication technology is the Bluetooth low energy communication technology, the second AP may broadcast the third broadcast message through one of the channel 37, the channel 38, or the channel 39. That is, a channel through which the second AP broadcasts the third broadcast message is a fixed channel. The second AP does not need to switch a channel corresponding to the first communication technology, but can obtain the third broadcast message through scanning by using only the fixed channel corresponding to the first communication technology, thereby further reducing a delay in scanning the third broadcast message by the first STA by using the first communication technology and power consumption of the first STA.

For a structure of the third broadcast message, refer to the foregoing related descriptions of the first broadcast message. Details are not described herein.

It should be noted that, if the second AP also supports the first communication technology, even if the first AP supports the first communication technology, the first information may not be sent by the first AP, but sent by the second AP. For how the second AP transmits the second information to the first AP and how the first AP transmits the second information to the first STA, refer to the foregoing descriptions provided when the first AP does not support the first communication technology. Details are not described herein again.

If the first AP also supports the second communication technology, even if the second AP supports the second communication technology, the second information may not be sent by the second AP, but sent by the first AP. For how the second AP transmits the second information to the first AP and how the first AP transmits the second information to the first STA, refer to the following descriptions of related solutions provided when the second AP does not support the second communication technology. Details are not described herein again.

In some other embodiments, if the second AP does not support the second communication technology, the second AP may actively broadcast, by using the Wi-Fi communication technology, a message carrying the second information, or after receiving a request of a fourth AP that supports the second communication technology, the second AP returns, to the fourth AP by using the Wi-Fi communication technology, a response message carrying the second information. In this way, after obtaining, through scanning by using the Wi-Fi communication technology, the message that carries the second information and that is sent by the second AP, the fourth AP may include the second information in a fourth broadcast message, and broadcast the fourth broadcast message by using the second communication technology. In this way, the first STA may discover more APs (for example, the first AP, the second AP, and the fourth AP), and establish communication with more APs (for example, the first AP, the second AP, or the fourth AP). In this case, in S570, the first STA may scan the fourth broadcast message by using the second communication technology, and obtain the second information from the fourth broadcast message after obtaining the fourth broadcast message through scanning.

In this embodiment, if the fourth AP is the first AP described above, in this case, the first AP supports the second communication technology, that is, both the first information and the second information are broadcast by the first AP. In this case, if the first communication technology and the second communication technology are a same communication technology, in an example, the fourth broadcast message and the first broadcast message may be one message. In this case, the first AP includes the second information and the first information in one broadcast message for broadcasting. In another example, the fourth broadcast message and the first broadcast message may alternatively be different messages. In this case, the first AP includes the second information and the first information in different broadcast messages for broadcasting. In this case, if the first communication technology and the second communication technology are different communication technologies, the fourth broadcast message and the first broadcast message are different messages.

Optionally, in this embodiment, an interval at which the fourth AP broadcasts the fourth broadcast message is related to quality of service or a performance status of the fourth AP.

For example, when quality of service of the fourth AP at a moment $t_{15}$ is higher than or equal to quality of service at a moment $t_{16}$, the fourth AP may reduce the interval for broadcasting the fourth broadcast message, so that the first STA can quickly discover the fourth AP with better quality of service through scanning. When quality of service of the fourth AP at a moment $t_{15}$ is lower than quality of service at a moment $t_{16}$, the fourth AP may increase the interval for broadcasting the fourth broadcast message. The moment $t_{15}$ is later than the moment $t_{16}$.

For another example, when a performance status of the fourth AP at a moment $t_{17}$ is higher than or equal to a performance status at a moment $t_{18}$, the fourth AP may reduce the interval for broadcasting the fourth broadcast message, so that the first STA can quickly discover the fourth AP with a better performance status through scanning. When a performance status of the fourth AP at a moment $t_{17}$ is lower than a performance status at a moment $t_{18}$, the fourth AP may increase the interval for broadcasting the fourth broadcast message. The moment $t_{17}$ is later than the moment $t_{18}$.

Optionally, in this example, the fourth AP may broadcast the fourth broadcast message through at least one channel.

For example, if the second communication technology is a Bluetooth low energy communication technology, the fourth AP may broadcast the fourth broadcast message through at least one of a channel 37, a channel 38, and a channel 39.

For example, if the second communication technology is the Bluetooth low energy communication technology, the fourth AP may broadcast the fourth broadcast message through one of the channel 37, the channel 38, or the channel 39. That is, a channel through which the fourth AP broadcasts the fourth broadcast message is a fixed channel. In this way, the first STA does not need to switch a channel corresponding to the first communication technology, but can obtain the fourth broadcast message through scanning by using only the fixed channel corresponding to the first communication technology, thereby further reducing a delay in scanning the fourth broadcast message by the first STA by using the first communication technology and power consumption of the first STA.

For a structure of the third broadcast message and a structure of the fourth broadcast message, refer to the foregoing related descriptions of the structure of the first broadcast message. Details are not described herein again.

In addition, the first STA may further adjust, based on a moving speed of the first STA, an interval for obtaining the second information by using the second communication technology.

For example, when a moving speed of the first STA at a moment $t_{19}$ is greater than or equal to a moving speed at a moment $t_{20}$, the first STA decreases the interval for obtaining the second information by using the second communication technology. When a moving speed of the first STA at a moment $t_{19}$ is less than a moving speed at a moment $t_{20}$, the first STA increases the interval for obtaining the second information by using the second communication technology, to reduce unnecessary operations of listening by using the second communication technology while ensuring network connection quality of the first STA, thereby further reducing power consumption of the first STA. The moment $t_{19}$ is later than the moment $t_{20}$.

S580: The second AP broadcasts the second message by using the Wi-Fi communication technology.

S590: The first STA scans the second message based on the second information by using the Wi-Fi communication technology.

In an example, if the second information includes the sending moment of the second message, in S590, the first STA may listen, based on the sending moment of the second message and the sending interval of the second message, to the second message on the channel occupied by the second message.

In another example, regardless of whether the second information includes the sending moment of the second message, in S590, the first STA may estimate the sending moment of the second message, and listen, based on the estimated sending moment of the second message and the sending interval of the second message, to the second message on the channel occupied by the second message. In this way, impact of a clock offset of the first STA and the second AP on scanning for the second message can be reduced, thereby reducing overheads of clock synchronization. In addition, accurate and high-precision clock synchronization and frequent clock synchronization operations do not need to be performed between the first STA and the second AP.

In this example, S590 specifically includes S591 and S592. The following describes S591 and S592 in detail.

S591: Estimate the sending moment of the second message based on the time that has elapsed since last transmission of the second message, the sending interval of the second message, the current local time of the first STA, and a moment at which the second information is obtained.

Specifically, the first STA estimates a $j^{th}$ sending moment $t_j$ of the second message according to the following formula:

$$t_j = -(t - t_{r2} + t_{e2}) \bmod t_{b2} + j \times t_{b2}$$

Herein, t is the current local time of the first STA, $t_{r2}$ is a local moment at which the first STA obtains the second information, $t_{e2}$ is the time that has elapsed since last transmission of the second message, $t_{b2}$ is the sending interval of the second message, and j=1, 2, 3....

S592: Scan the second message based on the estimated sending moment of the second message by using the Wi-Fi communication technology and the channel occupied by the second message.

Optionally, in some embodiments, the second information may further include at least one of the following: QoS information of the second AP and information related to establishing a connection and/or communication with the second AP. In this way, as shown in FIG. 12A and FIG. 12B, before S590, the method 500 further includes S600: The first STA determines, based on the second information, that the second AP meets the first condition.

It should be noted that if it is determined, based on the second information, that the second AP does not meet the first condition, S590 does not need to be performed.

For example, the QoS information of the second AP includes a performance indicator of the second AP and/or a network change status of the second AP.

For example, the information related to establishing a connection and/or communication with the second AP includes: information related to at least one type of service supported by the second AP, at least one access and authentication type supported by the second AP, and/or a configuration parameter for performing authentication and session transmission with the second AP.

For example, the information related to the at least one type of service supported by the second AP includes: a transmission parameter of the at least one type of service supported by the second AP, and/or a service policy of the at least one type of service supported by the second AP.

It should be noted that for examples of the configuration parameter, the transmission parameter, and the service policy, refer to the foregoing related descriptions. Details are not described herein again.

In an embodiment in which the second information includes the QoS information of the second AP, the QoS information of the second AP is carried in $M_1$ attribute fields of a fourth message. A value of each of the $M_1$ attribute fields and/or a value of $M_1$ are/is determined based on at least one of the following: a real-time running status of the second AP, a real-time connection mode of the secondAP, and/or a real-time communication mode of the second AP. That is, the second AP may dynamically adjust, based on a status of the second AP, content specifically included in the QoS information of the second AP in the second information. In this way, the second AP can provide differentiated services for the first STA in different time periods, and network transmission security is improved.

In an embodiment in which the second information includes the information related to establishing a connection and/or communication with the second AP, the information related to establishing a connection and/or communication with the second AP is carried in $M_2$ attribute fields of the fourth message. A value of each of the $M_2$ attribute fields and/or a value of $M_2$ are/is determined based on at least one of the following: a real-time running status of the second AP, a real-time connection mode of the secondAP, and/or a real-time communication mode of the second AP. That is, the second AP may dynamically adjust, based on a status of the second AP, content specifically included in the information related to establishing a connection and/or communication with the second AP in the second information. In this way, the second AP can provide differentiated services for the first STA in different time periods, and network transmission security is improved.

The fourth message described above is information carrying the second information. For example, the fourth message may be the third broadcast message or the fourth broadcast message described above.

Optionally, in some embodiments, the user may further select one or more service types from a plurality of service types supported by the second AP, and use the second information to carry information related to the one or more selected services. For a specific example, refer to the foregoing related descriptions of "the user selects one or more service types from a plurality of service types supported by the first AP, and uses the first information to carry information related to the one or more selected services". Details are not described herein again.

Optionally, in some embodiments, the user may further select one or more access and authentication types from a plurality of access and authentication types, and use the second information to carry the access and authentication types. For a specific example, refer to the foregoing related descriptions of "the user selects one or more access and authentication types from a plurality of access and authentication types, and uses the first information to carry the access and authentication types". Details are not described herein again.

Optionally, in some embodiments, the user may further select one or more configuration parameters from a plurality of configuration parameters, and use the second information to carry the configuration parameters. For a specific example, refer to the foregoing related descriptions of "the user selects one or more configuration parameters from a plurality of configuration parameters, and uses the first information to carry the configuration parameters". Details are not described herein again.

Optionally, in some embodiments, as shown in FIG. 12A and FIG. 12B, after S510 and S570 and before S530 and S590, the first STA may further perform S610, and S530 and S590 may be specifically replaced with S620. The following describes S610 and S620 in detail.

S610: The first STA generates a channel scan sequence {A1, A2}.

Specifically, the first STA may first generate broadcast time mapping information of Wi-Fi beacon frames (the first message and the second message) based on the sending moment of the first message (which may be carried in the first information or may be estimated by the first STA), the channel occupied by the first message, the sending moment of the second message (which may be carried in the second information or may be estimated by the first STA), and the channel occupied by the second message, where the broadcast time mapping information of the Wi-Fi beacon frames indicates a specific Wi-Fi beacon frame (the first message or the second message) sequentially broadcast on a specific channel at specific time as time goes on. Then, the first STA generates the channel scan sequence {A1, A2} based on the broadcast time mapping information of the Wi-Fi beacon frames and an optimization algorithm.

For example, the optimization algorithm may include a linear programming algorithm, a branch-and-boundary method, a heuristic algorithm, a neural network algorithm, a genetic algorithm, or the like.

A1 is the channel occupied by the first message, A2 is the channel occupied by the second message, a first delay is less than a second delay, the first delay includes a delay, from a first moment, of first switching to the channel occupied by the first message to scan the first message and then switching to the channel occupied by the second message to scan the second message, and the second delay includes a delay, from the first moment, of first switching to the channel occupied by the second message to scan the second message and then switching to the channel occupied by the first message to scan the first message. That is, the first STA compares the delay, from the first moment, of first switching to the channel occupied by the first message to scan the first message and then switching to the channel occupied by the second message to scan the second message (one scanning manner) with the delay, from the first moment, of first switching to the channel occupied by the second message to scan the second message and then switching to the channel occupied by the first message to scan the first message (another scanning manner), and generates the channel scan sequence {A1, A2} based on a scanning manner corresponding to a shorter delay, thereby further reducing overall scanning time of the first STA for the first message and the second message and power consumption of the first STA, and helping further improve user experience.

The first moment in this embodiment of this application may be any moment, and a specific value of the first moment is not limited in this embodiment of this application.

It should be understood that the delay in this embodiment of this application may also be understood as time.

(a) in FIG. 14 is a diagram of a time sequence of broadcasting, by the first AP, the first message on the channel occupied by the first message. As shown in (a) in FIG. 14, the first AP starts to broadcast the first message from a moment T1, and an interval at which the first AP broadcasts the first message (that is, the sending interval of the first message) is △T1.

(b) in FIG. 14 is a diagram of a time sequence of broadcasting, by the second AP, the second message on the channel occupied by the second message. As shown in (b) in FIG. 14, the second AP starts to broadcast the second message from a moment T3, and an interval at which the second AP broadcasts the second message (that is, the sending interval of the second message) is △T2.

In this case, time, from T1 (an example of the first moment), consumed for first switching to the channel occupied by the first message to scan the first message and then switching to the channel occupied by the second message to scan the second message is △T3 (an example of the first delay), and time, from T1, consumed for first switching to the channel occupied by the second message to scan the second message and then switching to the channel occupied by the first message to scan the first message is △T4 (an example of the second delay). Because △T3 is less than △T4, the generated channel scan sequence is {A1, A2}.

S620: The first STA sequentially scans the first message and the second message based on the channel scan sequence by using the Wi-Fi communication technology.

Specifically, the first STA first switches to the channel A1 occupied by the first message to scan the first message, and then switches to the channel A2 occupied by the second message to scan the second message.

Optionally, in some embodiments, in a gap of switching from the channel occupied by the first message to the channel occupied by the second message, scanning a message by using the Wi-Fi communication technology is stopped, that is, scanning a Wi-Fi beacon frame by using the Wi-Fi communication technology is stopped.

For example, if the first STA includes a Wi-Fi radio frequency module, the first STA enables the Wi-Fi radio frequency module to be in a sleep state in the gap of switching from the channel occupied by the first message to the channel occupied by the second message. In this way, power consumption of the first STA can be further reduced.

For another example, if the first STA includes a Wi-Fi radio frequency module, the first STA exchanges common data instead of scanning a message by using the Wi-Fi radio frequency module in the gap of switching from the channel occupied by the first message to the channel occupied by the second message. In this way, impact of a Wi-Fi scanning operation on normal service communication can be reduced.

In an embodiment in which the second information further includes the information related to establishing a connection and/or communication with the second AP, the first STA can directly establish a connection and communicate with the second AP based on the second information without performing a complex bidirectional interaction procedure (such as permission authentication, channel selection, and session negotiation) with the second AP, thereby accelerating a process of connection establishment and communication between the first STA and the second AP. In this case, the method 500 further includes S630 and S640a, or the method 500 further includes S630 and S640b. The following describes S630, S640a, and S640b in detail.

S630: Based on the identifier of the second AP, the first STA determines whether the logged-in account on the first STA and a logged-in account on the second AP belong to a same domain account, or determines whether the second AP belongs to the trusted device group of the first STA.

When the logged-in account on the first STA and the logged-in account on the second AP belong to the same domain account, or the second AP belongs to the trusted device group of the first STA, S640a is performed: Establish a session connection with the second AP based on the second information.

When the logged-in account on the first STA and the logged-in account on the second AP do not belong to the same domain account, or the second AP does not belong to the trusted device group of the first STA, S640b is performed: Perform authentication on a session between the first STA and the second AP based on the second information, and establish a session connection with the second AP based on the second information when the authentication on the session succeeds.

For example, establishing the session connection with the second AP based on the second information includes: establishing the session connection with the second AP based on the second information and a second performance status, where the second performance status includes a current performance status of the STA and/or a current performance status of the second AP.

When the second performance status meets a third condition, a transmission channel corresponding to a service is created based on the second information. In this way, resource utilization can be improved while service transmission performance of the first STA is ensured, thereby improving overall quality of service of a system.

When the second performance status does not meet a third condition, a transmission channel of a target type is created based on the second information. The third condition includes: communication quality of the first STA is greater than a fifth threshold, communication quality of the second AP is greater than a sixth threshold, resource usage of the first STA is less than a seventh threshold, and resource usage of the second AP is less than an eighth threshold.

It should be noted that, in the method 500, the first STA may not support simultaneous establishment of connections with a plurality of APs in a same time period. For example, the first STA includes only a communication module that can provide one communication technology and one processor. In addition, if the first STA receives, from a plurality of APs, information related to transmitting Wi-Fi beacon frames by the APs, for example, first information related to transmitting a Wi-Fi beacon frame by the first AP and second information related to transmitting a Wi-Fi beacon frame by the second AP, the first STA can establish a session connection with only one AP (the first AP or the second AP) in the plurality of APs in a same time period. For example, in the same time period, the first STA can perform only one of the foregoing steps S560a and S640a, or the first STA can perform only one of the foregoing steps S560a and S640b, or the first STA can perform only one of the foregoing steps S560b and S640a, or the first STA can perform only one of the foregoing steps S560b and S640b.

In the method 500, the first STA may support simultaneous establishment of connections with a plurality of APs in a same time period. For example, the first STA includes a plurality of communication modules that can provide a plurality of communication technologies and a plurality of processors. In addition, if the first STA receives, from a plurality of APs, information related to transmitting Wi-Fi beacon frames by the APs, for example, first information related to transmitting a Wi-Fi beacon frame by the first AP and second information related to transmitting a Wi-Fi beacon frame by the second AP, the first STA may simultaneously establish session connections with the plurality of APs (the first AP and the second AP) in a same time period. For example, in the same time period, the first STA may simultaneously perform S560a and S640a described above, may simultaneously perform S560a and S640b described above, may simultaneously perform S560b and S640a described above, and may simultaneously perform S560b and S640b described above.

According to the method 500, after the user turns on a WLAN switch of a mobile phone (an example of the first STA), the mobile phone scans related information (such as the first information and the second information described above) about transmitting a Wi-Fi beacon frame by an AP (such as the first AP or the second AP) that can provide a Wi-Fi network service near the mobile phone, and obtains, based on the related information about transmitting the Wi-Fi beacon frame by the AP that can provide a Wi-Fi network service, the Wi-Fi beacon frame from the AP that can provide a Wi-Fi network service. In this way, the mobile phone accesses the corresponding AP based on the Wi-Fi beacon frame and the related information about transmitting the Wi-Fi beacon frame by the AP that can provide a Wi-Fi network service. In this way, a function of accessing a network by the mobile phone or a function of communicating with another device can be implemented.

According to the method 500, when the user uses a mobile phone (an example of the first STA) to navigate in a shopping mall, a map application continuously triggers an operation of scanning an AP that can provide geographical location information near the mobile phone, and obtains, based on related information about transmitting a Wi-Fi beacon frame by the AP that can provide geographical location information, the Wi-Fi beacon frame from the AP that can provide geographical location information. In this way, the mobile phone accesses the corresponding AP based on the Wi-Fi beacon frame and the related information about transmitting the Wi-Fi beacon frame by the AP that can provide geographical location information. In this way, a geographical location of the user is updated and calibrated.

According to the method 500, when the user plays a high-definition video on a tablet computer (an example of the first STA) by using Wi-Fi, in a case in which a video may encounter a frame freezing or erratic display phenomenon, a tablet computer system automatically scans related information (such as the first information and the second information described above) about transmitting a Wi-Fi beacon frame by an AP (such as the first AP and the second AP) that can provide a network service near the tablet computer, selects an AP with better communication quality from APs that can provide network services, obtains a Wi-Fi beacon frame from the AP based on related information about transmitting the Wi-Fi beacon frame by the AP. In this way, the tablet computer accesses, based on the Wi-Fi beacon frame and the related information about transmitting the Wi-Fi beacon frame by the AP, the AP with better communication quality, so as to avoid frame freezing or erratic display of the video played on the tablet computer.

It should be understood that the specific examples shown in FIG. 6, FIG. 9, and FIG. 12A and FIG. 12B in embodiments of this application are merely intended to help a person skilled in the art better understand embodiments of this application, but are not intended to limit the scope of embodiments of this application. It should be further understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the first STA, the first AP, and the second AP) may also be implemented by a component (for example, a chip or a circuit) used in the device.

The communication method 500 provided in embodiments of this application is described in detail above with reference to FIG. 6 to FIG. 14. The communication method 500 is mainly described from a perspective of interaction between the first STA, the first AP, and the second AP. It may be understood that, to implement the foregoing functions, the first STA, the first AP, and the second AP include corresponding hardware structures and/or software modules for performing the functions.

In addition, in a BSS, a STA may also obtain basic information of an AP in an active scanning manner. In this case, the STA plays a relatively active role. On each channel, the STA sends a probe request frame to request an AP on the channel to respond. Simply, active scanning is to actively search for a hotspot network, instead of waiting for a wireless network to declare existence of the wireless network.

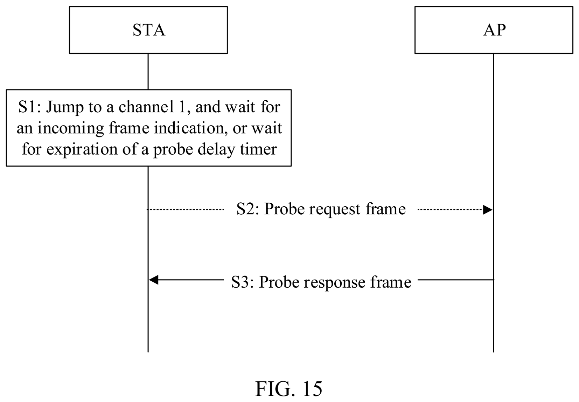

With reference to FIG. 15, the following briefly describes a procedure in which a STA obtains basic information of an AP in an active scanning manner. For example, as shown in FIG. 15, that the STA obtains the basic information of the AP by actively scanning a Wi-Fi beacon frame includes the following steps.

S1: The STA jumps to a channel 1 (any channel), and waits for an incoming frame indication, or waits for a probe delay (probe delay) timer to expire.

On the channel 1, if the STA receives a frame, it indicates that the channel is being used by a user. Therefore, the channel may be detected, and the STA continues to perform S2.

S2: The STA sends a probe request (probe request) frame on the channel 1.

Specifically, the STA may obtain a use right of the channel by using a basic access control mechanism (for example, a distributed coordination function (distributed coordination function, DCF)), and then send a probe request frame.

When receiving the probe request frame sent by the STA, the AP performs S3.

S3: The AP sends a probe response (probe response) frame to the STA, to notify the STA of a Wi-Fi network that can be provided by the AP for the STA.

On the channel 1, if the STA still does not receive any probe response frame after waiting for at least minimum channel time (minchanneltime), it indicates that no AP exists, and therefore the STA may jump to a next channel (for example, a channel 2). If the STA receives at least one probe response frame within minimum channel time, the STA continues to wait for a period of time until maximum channel time (maxchanneltime) expires, and then processes received information, jumps to a next channel, and repeatedly performs S1 to S3.

The STA sequentially performs S1 to S3 on each channel in a frequency band in which the STA is located, and the STA may discover all available access points around and basic service areas of the access points, and then establish, through an authentication and association process, a connection with one of STAs found through scanning, so as to access a Wi-Fi network provided by the AP.

However, when the STA obtains the basic information of the AP by actively scanning the Wi-Fi beacon frame, the STA needs to sequentially send a series of probe request frames on different channels. This causes extra energy overheads, brings burdens that cannot be ignored to a plurality of terminal devices with limited power supply, and affects endurance of the terminal devices. In addition, transmission of control frames such as a probe request frame and a probe response frame occupies radio air interface resources, causing scarcity of air interface resources for normal service data. When a quantity of deployed Wi-Fi devices (STAs and APs) increases, transmission of a normal data packet is easily affected, and an effective network throughput is reduced.

In a Wi-Fi P2P process, a Wi-Fi P2P discovery (discovery) process is used to enable a plurality of P2P devices to discover each other and construct a network. Although the P2P discovery process also uses the probe request frame and the probe response frame in 802.11 to search for a surrounding P2P device, steps of the P2P discovery process are more complex than wireless network search in the BSS. For example, in addition to sending a probe request frame, a P2P device further needs to receive a probe request frame from another device and return a probe response frame. In the BSS, only the STA sends a probe request frame.

To speed up the search, P2P defines two states and two phases for the P2P discovery process. The two states include: (1) Search state (Search State): In this state, a P2P device separately sends a probe request frame on channels 1, 6, and 11 of a 2.4 GHz frequency band. (2) Listen state (listen state): In this state, a P2P device randomly selects one channel (the selected channel is referred to as a listen channel (listen channel)) from channels 1, 6, and 11 to listen to a probe request frame and return a probe response frame. The two phases include: (1) Scan phase (scan phase): A P2P device sends a probe request frame on each channel (active scanning). After this phase, the P2P device enters a next phase, that is, a find phase (find phase). In this phase, the P2P device switches between the search state and the listen state. In the search state, the P2P device sends a probe request frame. In the listen state, the P2P device receives a probe request frame from another device and returns a probe response frame.

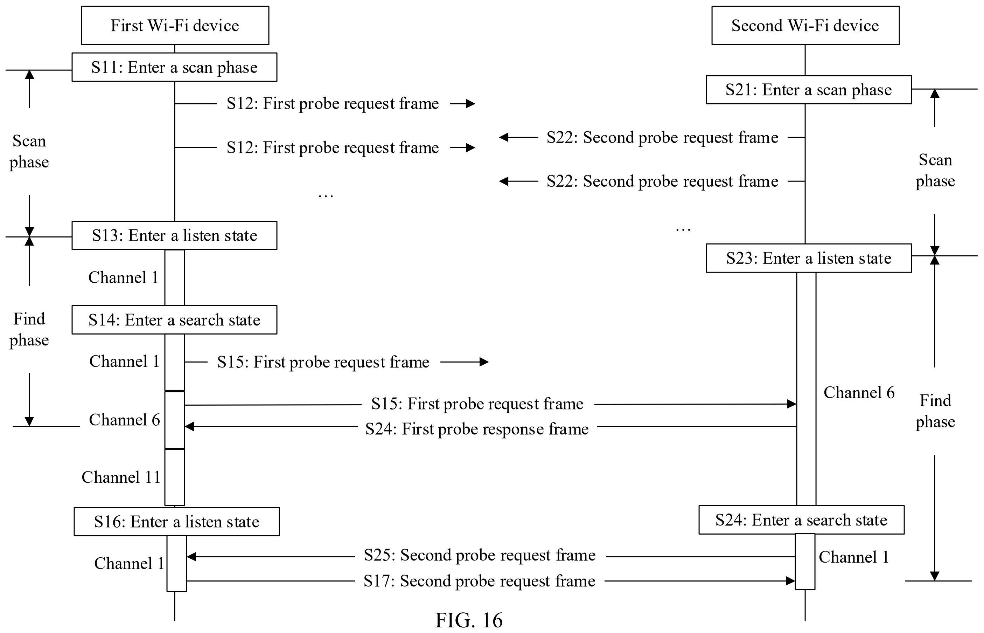

The following describes in detail a Wi-Fi P2P device discovery process with reference to FIG. 16.

FIG. 16 is a schematic flowchart of discovering two P2P devices according to an embodiment of this application. For example, as shown in FIG. 16, a first Wi-Fi device performs SS11 to S17, and a second Wi-Fi device performs S21 to S25.

Specifically, first, each Wi-Fi device enters a scan phase after discovery is started. In this phase, each Wi-Fi device sends a probe request frame on all frequency bands supported by the Wi-Fi device. In this case, as shown in FIG. 16, the first Wi-Fi device performs S11 and S12, and the second Wi-Fi device performs S21 and S22.

Then, after the scan phase is completed, each Wi-Fi device enters a find phase. In this phase, each Wi-Fi device alternately switches between a listen state and a search state. A listen channel of the first Wi-Fi device is a channel 1, and a listen channel of the second Wi-Fi device is a channel 6. In this case, as shown in FIG. 16, the first Wi-Fi device performs S13 and S17, and the second Wi-Fi device performs S23 and S25.

Finally, when each Wi-Fi device is in the search state in the find phase, the Wi-Fi device sends probe request frames on channels 1, 6, and 11. Only when two Wi-Fi devices are on a same channel, a frame sent by one party can be received by the other party.

As shown in FIG. 16, when the first Wi-Fi device enters the search state for the first time and sends a first probe request frame on the channel 6, the second Wi-Fi device just listens to a probe request frame on the channel 6. In this way, the second Wi-Fi device detects the first probe request frame, and sends a first probe response frame to the first Wi-Fi device on the channel 6. After the first Wi-Fi device receives the first probe response frame on the channel 6, the first Wi-Fi device completes the find phase.

As shown in FIG. 16, when the second Wi-Fi device enters the search state for the first time and sends a second probe request frame on the channel 1, the first Wi-Fi device just listens to a probe request frame on the channel 1. In this way, the first Wi-Fi device detects the second probe request frame, and sends a second probe response frame to the second Wi-Fi device on the channel 1. After the second Wi-Fi device receives the second probe response frame on the channel 1, the second Wi-Fi device completes the find phase.

According to the foregoing descriptions of the Wi-Fi P2P device discovery process, for a Wi-Fi device, to discover and connect to another Wi-Fi device, the Wi-Fi device needs to separately send probe request frames on a plurality of different channels, to receive a probe response frame from the another Wi-Fi device. In this case, scanning and discovery time of the Wi-Fi device is relatively long, power consumption of the Wi-Fi device is increased, and user experience is relatively poor.

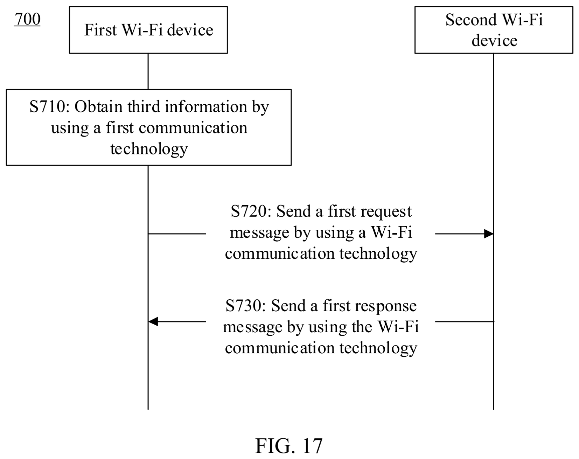

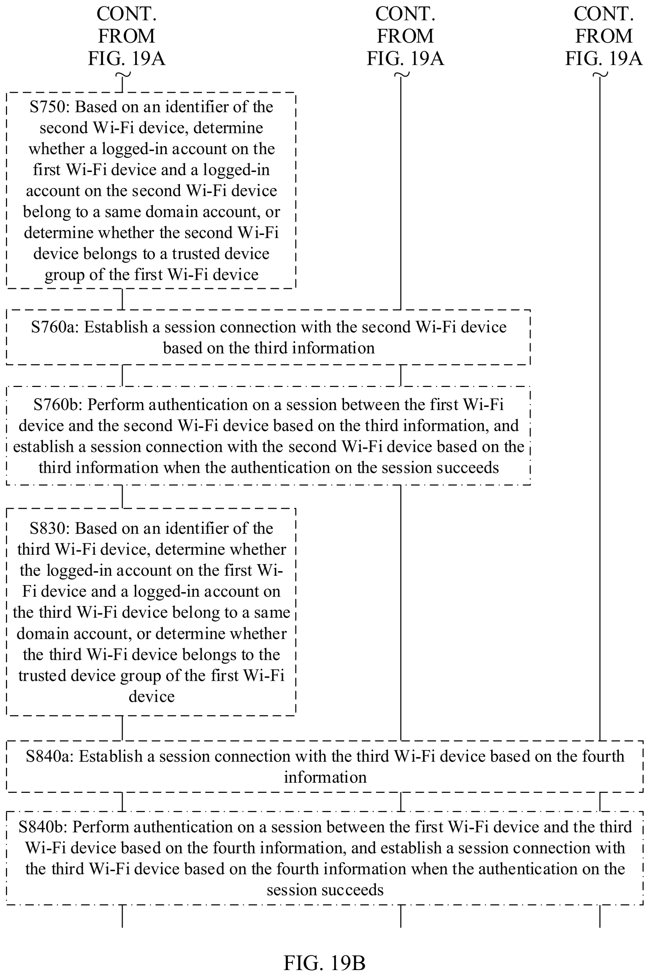

Therefore, embodiments of this application further provide another communication method. The following describes the another communication method in detail with reference to FIG. 17 to FIG. 19A and FIG. 19B.

Embodiments in FIG. 17 to FIG. 19A and FIG. 19B may be applied to a communication system including a first Wi-Fi device and a second Wi-Fi device. The second Wi-Fi device may provide a Wi-Fi network for the first Wi-Fi device. Optionally, in some embodiments, the communication system may further include another Wi-Fi device, for example, a third Wi-Fi device.

In an example, the communication system may be a communication system including an AP and a STA. In this case, the first Wi-Fi device may be a STA, and the second Wi-Fi device and the another Wi-Fi device may be APs.

In another example, the communication system may be a communication system including a P2P device. In this case, the first Wi-Fi device, the second Wi-Fi device, and the another Wi-Fi device may be the foregoing terminal device (the device 100 shown in FIG. 3). The first Wi-Fi device plays a role of a P2P GC (group client) (acting as a STA in a BBS), and the second Wi-Fi device and the another Wi-Fi device play a role of a P2P GO (group owner) (acting as an AP in the BBS).

It should be understood that a specific structure of an execution body of a method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a functional module that can invoke and execute a program in a first Wi-Fi device, a second Wi-Fi device, or a third Wi-Fi device.

FIG. 17 is a schematic flowchart of a communication method 700 according to an embodiment of this application.

For example, as shown in FIG. 17, the communication method 700 includes S710 to S630. The following describes S710 to S730 in detail.

S710: A first Wi-Fi device obtains third information by using a first communication technology.

The third information includes an identifier of a second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, and the first request message is used to request to discover a device that can provide a Wi-Fi network service.

The second Wi-Fi device may listen on the first target channel at a same interval or a different interval each time. This is not limited in this embodiment of this application. If at least two intervals at which the second Wi-Fi device listens on the first target channel are different, the interval at which the second Wi-Fi device listens on the first target channel in the third information may be a sequence including at least two interval values. In addition, in a phase in which the first Wi-Fi device discovers the second Wi-Fi device, the second Wi-Fi device alternately switches between a listen state and a search state, that is, the second Wi-Fi device performs search once between two adjacent times of listening on the first target channel. When a Wi-Fi device is in a listen state, the Wi-Fi device listens to a request message (that is, a probe request frame) sent by a surrounding device. When a Wi-Fi device is in a search state, the Wi-Fi device sends a request message (that is, a probe request frame) to a surrounding device.

It should be noted that the moment at which the second Wi-Fi device starts listening on the first target channel may be understood as a moment at which the second Wi-Fi device starts to listen to the first request message by using the Wi-Fi communication technology after a third target moment. The third target moment is a moment at which a transmitter (a device sending the third information) sends the third information. In addition, the first request message may also be referred to as a probe request frame sent by the first Wi-Fi device.

The first target channel may be understood as a channel occupied for transmitting the first request message, that is, a channel used by the first Wi-Fi device to send the first request message.

When the interval at which the second Wi-Fi device listens on the first target channel is 0, it may be considered that the second Wi-Fi device continuously listens on the first target channel. Optionally, when the interval at which the second Wi-Fi device listens on the first target channel is 0, the third information may not carry the interval at which the second Wi-Fi device listens on the first target channel.

Optionally, in some embodiments, the third information further includes duration for which the second Wi-Fi device listens on the first target channel, that is, duration for which the second Wi-Fi device listens to the first request message on the first target channel by using the Wi-Fi communication technology.

The second Wi-Fi device may listen on the first target channel for same duration or different duration. This is not limited in this embodiment of this application. If at least two pieces of duration for which the second Wi-Fi device listens on the first target channel are different, the duration for which the second Wi-Fi device listens on the first target channel in the third information may be a sequence including at least two duration values.

In an example, if the second Wi-Fi device supports the first communication technology, the second Wi-Fi device may include the third information in a fifth broadcast message, and broadcast the fifth broadcast message by using the first communication technology. In this case, in S710, the first Wi-Fi device may scan the fifth broadcast message by using the first communication technology, and obtain the third information from the fifth broadcast message after obtaining the fifth broadcast message through scanning.

For example, it may be predefined that a fifth flag bit in an identifier of a Wi-Fi device is used to identify whether a broadcast message carries a broadcast message related to listening to the first request message. In this way, the first Wi-Fi device may determine, based on content indicated by the fifth flag bit in the identifier of the Wi-Fi device, whether the broadcast message is a broadcast message that carries a broadcast message related to listening to the first request message.

A form of the fifth flag bit is not limited in this embodiment of this application. For example, the fifth flag bit may be a digit or a letter.

Optionally, in this example, an interval at which the second Wi-Fi device broadcasts the fifth broadcast message is related to quality of service or a performance status of the second Wi-Fi device.

Optionally, in this example, the second Wi-Fi device may broadcast the fifth broadcast message through at least one channel.

In another example, if the second Wi-Fi device does not support the first communication technology, the second Wi-Fi device may actively broadcast, by using the Wi-Fi communication technology, a message carrying the third information, or after receiving a request of a fourth Wi-Fi device that supports the first communication technology, the second Wi-Fi device returns, by using the Wi-Fi communication technology, a response message carrying the third information. In this way, after obtaining, through scanning by using the Wi-Fi communication technology, the message that carries the third information and that is sent by the second Wi-Fi device, the fourth Wi-Fi device may include the third information in a sixth broadcast message, and broadcast the sixth broadcast message by using the first communication technology. In this way, the first Wi-Fi device can discover more Wi-Fi devices and establish communication with more Wi-Fi devices. In this case, in 710, the first Wi-Fi device may scan the sixth broadcast message by using the first communication technology, and obtain the third information from the sixth broadcast message after obtaining the sixth broadcast message through scanning.

Optionally, in this example, an interval at which the fourth Wi-Fi device broadcasts the sixth broadcast message is related to quality of service or a performance status of the fourth Wi-Fi device.

Optionally, in this example, the fourth Wi-Fi device may broadcast the sixth broadcast message through at least one channel.

Optionally, in some embodiments, if a device (such as the first Wi-Fi device, the second Wi-Fi device, the third Wi-Fi device, or the fourth Wi-Fi device) supports a plurality of types of communication technologies (the plurality of types of communication technologies are first communication technologies), a user may further select one type of communication technology from the plurality of types of communication technologies as the first communication technology. For a specific example, refer to related descriptions in the foregoing method 500. Details are not described herein again.

S720: The first Wi-Fi device sends the first request message to the second Wi-Fi device based on the third information by using the Wi-Fi communication technology. Correspondingly, the second Wi-Fi device receives the first request message from the first Wi-Fi device by using the Wi-Fi communication technology.

The first request message may or may not carry an identifier of the first Wi-Fi device. This is not limited in this application. In addition, the first request message may or may not carry the identifier of the second Wi-Fi device. This is not limited in this application. When the first request message carries the identifier of the second Wi-Fi device, the first Wi-Fi device may send the first request message to the second Wi-Fi device in a unicast form based on the third information by using the Wi-Fi communication technology. When the first request message does not carry the identifier of the second Wi-Fi device, the first Wi-Fi device may send the first request message to the second Wi-Fi device in a broadcast form based on the third information by using the Wi-Fi communication technology.

In an example, if the third information includes the moment at which the second Wi-Fi device starts listening on the first target channel, in S720, the first Wi-Fi device may send the first request message on the first target channel based on the moment at which the second Wi-Fi device starts listening on the first target channel and the interval at which the second Wi-Fi device listens on the first target channel.

In another example, regardless of whether the third information includes the moment at which the second Wi-Fi device starts listening on the first target channel, in S720, the first Wi-Fi device may estimate a listening start moment of the second Wi-Fi device on the first target channel, and send the first request message on the first target channel based on the estimated listening start moment of the second Wi-Fi device on the first target channel and the interval at which the second Wi-Fi device listens on the first target channel. In this way, impact of a clock offset of the first Wi-Fi device and the second Wi-Fi device on sending of the first request message can be reduced, thereby reducing overheads of clock synchronization.

In this example, S720 specifically includes S721 and S722. The following describes S721 and S722 in detail.

S721: The first Wi-Fi device estimates the listening start moment of the second Wi-Fi device on the first target channel based on the time that has elapsed since the second Wi-Fi device starts listening on the first target channel last time, the interval at which the second Wi-Fi device listens on the first target channel, current local time of the first Wi-Fi device, and a moment at which the third information is obtained.

Specifically, the first Wi-Fi device estimates a $k^{th}$ listening start moment $t_k$ of the second Wi-Fi device on the first target channel according to the following formula:

$$t_k = \begin{cases} -(t - t_{r3} + t_{e3}) + \sum_{L=0}^{k} t_{b3}^{L}, k=1 \\ -\left[ (t - t_{r3} + t_{e3}) \bmod \sum_{L=0}^{k-1} t_{b3}^{L} \right] + \sum_{L=0}^{k} t_{b3}^{L}, k \geq 2 \end{cases}$$

Herein, t is the current local time of the first Wi-Fi device; $t_{r3}$ is a local moment at which the first Wi-Fi device obtains the third information; $t_{e3}$ is the time that has elapsed since the second Wi-Fi device starts listening on the first target channel last time; k=1, 2, 3, ...; L=0, 1, 2, 3, ...; and when L≥1, $t_{b3}^{L}$ is an interval at which the second Wi-Fi device listens on the first target channel for an $L^{th}$ time; or when L=0, $t_{b3}^{0} = 0$ .

It should be noted that, if the third information carries an interval sequence in which the second Wi-Fi device listens on the first target channel, when L≥1, $t_{b3}^{L}$ is a time interval between an $L^{th}$ time of listening and an $(L-1)^{th}$ time of listening of the Wi-Fi device on the first target channel, that is, a value corresponding to an $L^{th}$ element in the interval sequence in which the second Wi-Fi device listens on the first target channel.

S722: The first Wi-Fi device sends the first request message based on the estimated listening start moment of the second Wi-Fi device on the first target channel by using the Wi-Fi communication technology and the first target channel.

After the second Wi-Fi device detects the first request message on the first target channel, the second Wi-Fi device performs S730.

S730: The second Wi-Fi device sends a first response message to the first Wi-Fi device by using the Wi-Fi communication technology. Correspondingly, the first Wi-Fi device scans the first response message from the second Wi-Fi device by using the Wi-Fi communication technology.

The first response message is used to enable the second Wi-Fi device to be discoverable. The first response message is a response message of the first request message, and the first response message may be referred to as a probe response frame.

If the first request message includes the identifier of the first Wi-Fi device, the second Wi-Fi device sends the first response message to the first Wi-Fi device in a unicast form based on the identifier of the first Wi-Fi device in the first request message by using the Wi-Fi communication technology. If the first request message does not include the identifier of the first Wi-Fi device, the second Wi-Fi device sends the first response message to the first Wi-Fi device in a broadcast form by using the Wi-Fi communication technology.

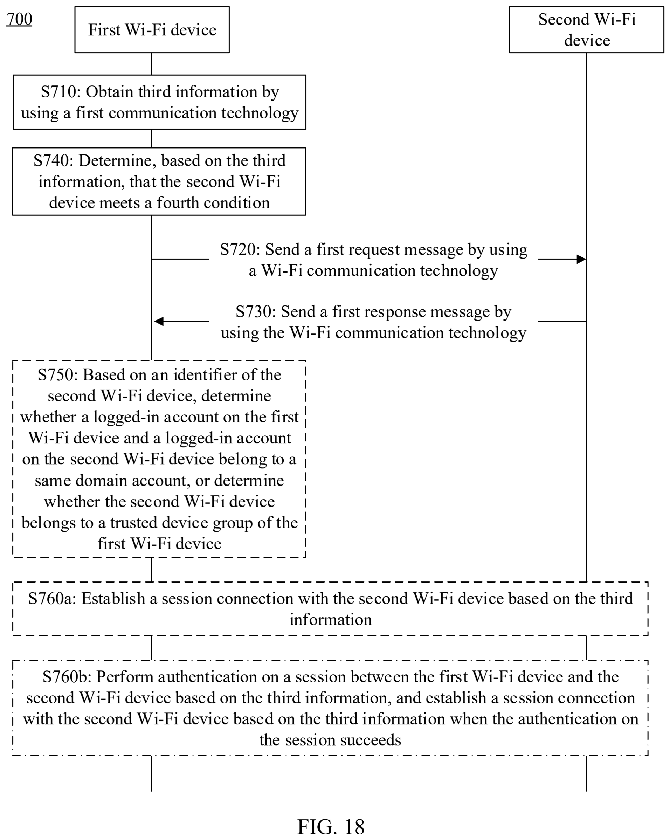

Optionally, in some embodiments, the third information further includes at least one of the following: quality of service QoS information of the second Wi-Fi device and information related to establishing a connection and/or communication with the second Wi-Fi device. In this way, as shown in FIG. 18, before S720, the method 700 may further include S740: Determine, based on the third information, that the second Wi-Fi device meets a fourth condition.

The fourth condition includes at least one of the following: belonging to a trusted device group of the first Wi-Fi device, belonging to a public reliable infrastructure, meeting a QoS requirement of the first Wi-Fi device, and being capable of providing a connection mode and/or a communication mode supported by the first Wi-Fi device.

For descriptions of S740, refer to the related descriptions of S540. Details are not described herein again. In addition, the solution of "the user sets the QoS parameter in the QoS requirement of the first STA" is also applicable to "the user sets a QoS parameter in the QoS requirement of the first Wi-Fi device". Therefore, for the solution of "the user sets the QoS parameter in the QoS requirement of the first Wi-Fi device", refer to related descriptions in the foregoing method 500. Details are not described herein again.

It should be noted that if it is determined, based on the third information, that the second Wi-Fi device does not meet the fourth condition, S720 does not need to be performed.

For example, the QoS information of the second Wi-Fi device includes a performance indicator of the second Wi-Fi device and/or a network change status of the second Wi-Fi device. For related descriptions of the performance indicator and the network change status, refer to related descriptions of S540. Details are not described herein again.

For example, the information related to establishing a connection and/or communication with the second Wi-Fi device includes: information related to at least one type of service supported by the second Wi-Fi device, at least one access and authentication type supported by the second Wi-Fi device, and/or a configuration parameter for performing authentication and session transmission with the second Wi-Fi device. For related descriptions of the access and authentication type and the configuration parameter, refer to related descriptions of S540. Details are not described herein again.

For example, the information related to the at least one type of service supported by the third Wi-Fi device includes: the information related to the at least one type of service supported by the second Wi-Fi device includes: a transmission parameter of the at least one type of service supported by the second Wi-Fi device, and/or a service policy of the at least one type of service supported by the second Wi-Fi device. For related descriptions of the transmission parameter and the service policy, refer to related descriptions of S540. Details are not described herein again.

In an embodiment in which the third information further includes the QoS information of the second Wi-Fi device, the QoS information of the second Wi-Fi device is carried in $P_1$ attribute fields of a fifth message. A value of each of the $P_1$ attribute fields and/or a value of $P_1$ are/is determined based on at least one of the following: a real-time running status of the second Wi-Fi device, a real-time connection mode of the second Wi-Fi device, and/or a real-time communication mode of the second Wi-Fi device.

In an embodiment in which the third information further includes the information related to establishing a connection and/or communication with the second Wi-Fi device, the information related to establishing a connection and/or communication with the second Wi-Fi device is carried in $P_2$ attribute fields of the fifth message. A value of each of the $P_2$ attribute fields and/or a value of $P_2$ are/is determined based on at least one of the following: a real-time running status of the second Wi-Fi device, a real-time connection mode of the second Wi-Fi device, and/or a real-time communication mode of the second Wi-Fi device.

The fifth message described above is a message carrying the third information. For example, the fifth message may be the fifth broadcast message or the sixth broadcast message described above.

The solution related to "the user selects one or more performance indicators from a plurality of performance indicators as the performance indicator of the first AP that should be included in the first information" is also applicable to a solution related to "the user selects one or more performance indicators from a plurality of performance indicators as the performance indicator of the second Wi-Fi device that should be included in the third information"; the solution related to "the user selects one or more service types from a plurality of service types supported by the first AP, and uses the first information to carry information related to the one or more selected services" is also applicable to a solution related to "the user selects one or more service types from a plurality of service types supported by the second Wi-Fi device, and uses the third information to carry information related to the one or more selected services"; the solution related to "the user selects one or more access and authentication types from a plurality of access and authentication types, and uses the first information to carry the access and authentication types" is also applicable to a solution related to "the user selects one or more access and authentication types from a plurality of access and authentication types, and uses the third information to carry the access and authentication types"; and the solution related to "the user selects one or more configuration parameters from a plurality of configuration parameters, and uses the first information to carry the configuration parameters" is also applicable to a solution related to "the user selects one or more configuration parameters from a plurality of configuration parameters, and uses the third information to carry the configuration parameters". Therefore, for related descriptions, refer to the descriptions in the method 500. Details are not described herein again.

In an embodiment in which the third information further includes the information related to establishing a connection and/or communication with the second Wi-Fi device, the first Wi-Fi device can directly establish a connection and communicate with the second Wi-Fi device based on the third information without performing a complex bidirectional interaction procedure (such as permission authentication, channel selection, and session negotiation) with the second Wi-Fi device, thereby accelerating a process of connection establishment and communication between the first Wi-Fi device and the second Wi-Fi device. In this case, as shown in FIG. 18, the method 700 further includes S750 and S760a, or the method 700 further includes S750 and S760b. The following describes S750, S760a, and S760b in detail.

S750: Based on the identifier of the second Wi-Fi device, the first Wi-Fi device determines whether a logged-in account on the first Wi-Fi device and a logged-in account on the second Wi-Fi device belong to a same domain account, or determines whether the second Wi-Fi device belongs to the trusted device group of the first Wi-Fi device.

For related descriptions of S750, refer to related descriptions of S740. Details are not described herein again.

When the logged-in account on the first Wi-Fi device and the logged-in account on the second Wi-Fi device belong to the same domain account, or the second Wi-Fi device belongs to the trusted device group of the first Wi-Fi device, S760a is performed: The first Wi-Fi device establishes a session connection with the second Wi-Fi device based on the third information.

When the logged-in account on the first Wi-Fi device and the logged-in account on the second Wi-Fi device do not belong to the same domain account, or the second Wi-Fi device does not belong to the trusted device group of the first Wi-Fi device, S760b is performed: The first Wi-Fi device performs authentication on a session between the first Wi-Fi device and the second Wi-Fi device based on the third information, and establishes a session connection with the second Wi-Fi device based on the third information when the authentication on the session succeeds.

For example, that the first Wi-Fi device establishes the session connection with the second Wi-Fi device based on the third information includes: establishing the session connection with the second Wi-Fi device based on the third information and a third performance status.

The third performance status includes a current performance status of the first Wi-Fi device and/or a current performance status of the second Wi-Fi device.

For example, the current performance status of the second Wi-Fi device may be (directly or indirectly) obtained by the first Wi-Fi device from the second Wi-Fi device. For example, the third information includes the current performance status of the second Wi-Fi device.

When the third performance status meets a fifth condition, a transmission channel corresponding to a service is created based on the third information. When the third performance status does not meet a fifth condition, a transmission channel of a target type is created based on the third information. The fifth condition includes at least one of the following: communication quality of the first Wi-Fi device is greater than a ninth threshold, communication quality of the second Wi-Fi device is greater than a tenth threshold, resource usage of the first Wi-Fi device is less than an eleventh threshold, and resource usage of the second Wi-Fi device is less than a twelfth threshold.

For example, the first Wi-Fi device may obtain the transmission channel corresponding to the service or the transmission channel of the target type based on the third information.

Optionally, in some embodiments, in addition to obtaining the third information related to the second Wi-Fi device, the first Wi-Fi device may further obtain information related to another Wi-Fi device. A quantity of other Wi-Fi devices is not limited in this embodiment of this application. The following uses an example in which the another Wi-Fi device is a third Wi-Fi device for description.

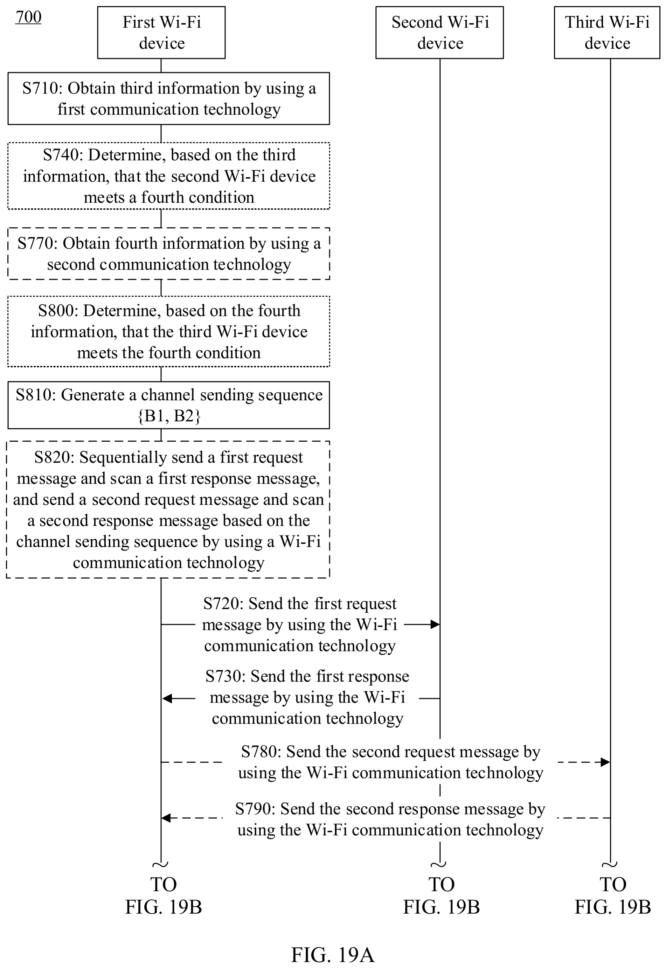

Optionally, as shown in FIG. 19A and FIG. 19B, the method 700 further includes S770 to S790. An execution sequence between S770 to S790 and S710 to S730 is not limited. The following describes S770 to S790 in detail.

S770: The first Wi-Fi device obtains fourth information by using a second communication technology.

The fourth information includes an identifier of the third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, and the fourth information further includes quality of service QoS information of the third Wi-Fi device and information related to establishing a connection and/or communication with the third Wi-Fi device. The second request message is used to request to discover a device that can provide a Wi-Fi network service.

The third Wi-Fi device may listen on the second target channel at a same interval or a different interval each time. This is not limited in this embodiment of this application. If at least two intervals at which the third Wi-Fi device listens on the second target channel are different, the interval at which the third Wi-Fi device listens on the second target channel in the third information may be a sequence including at least two interval values. In addition, in a phase in which the first Wi-Fi device discovers the first AP, the third Wi-Fi device alternately switches between a listen state and a search state, that is, the third Wi-Fi device performs search once between two adjacent times of listening on the second target channel.

It should be noted that the moment at which the third Wi-Fi device starts listening on the second target channel may be understood as a moment at which the third Wi-Fi device starts to listen to the first request message by using the Wi-Fi communication technology after a third target moment. The third target moment is a moment at which a transmitter (a device sending the third information) sends the third information. In addition, the first request message may also be referred to as a probe request frame sent by the first Wi-Fi device.

The second target channel may be understood as a channel occupied for transmitting the first request message, that is, a channel used by the first Wi-Fi device to send the first request message.

When the interval at which the third Wi-Fi device listens on the second target channel is 0, it may be considered that the third Wi-Fi device continuously listens on the second target channel. Optionally, when the interval at which the third Wi-Fi device listens on the second target channel is 0, the fourth information may not carry the interval at which the third Wi-Fi device listens on the second target channel.

Optionally, in some embodiments, the fourth information further includes duration for which the third Wi-Fi device listens on the second target channel, that is, duration for which the third Wi-Fi device listens to the second request message on the second target channel by using the Wi-Fi communication technology.

The third Wi-Fi device may listen on the second target channel for same duration or different duration. This is not limited in this embodiment of this application. If at least two pieces of duration for which the third Wi-Fi device listens on the second target channel are different, the duration for which the third Wi-Fi device listens on the second target channel in the third information may be a sequence including at least two duration values.

With reference to an example, the following describes how the third information is specifically transmitted in this embodiment.

In some embodiments, if the third Wi-Fi device supports the second communication technology, the third Wi-Fi device may include the fourth information in a seventh broadcast message, and broadcast the seventh broadcast message by using the second communication technology. In this case, in S770, the first Wi-Fi device may scan the seventh broadcast message by using the second communication technology, and obtain the fourth information from the seventh broadcast message after obtaining the seventh broadcast message through scanning.

In this embodiment, if the second Wi-Fi device does not support the first communication technology, and the third Wi-Fi device does not support the first communication technology, the third Wi-Fi device may be an example of the fourth Wi-Fi device described above. In this case, both the third information and the fourth information are broadcast by the third Wi-Fi device. In this case, in an example, the seventh broadcast message and the sixth broadcast message may be one message. In this case, the third Wi-Fi device includes the fourth information and the third information in one broadcast message for broadcasting. In another example, the seventh broadcast message and the sixth broadcast message may alternatively be different messages. In this case, the third Wi-Fi device includes the fourth information and the third information in different broadcast messages for broadcasting.

Optionally, in this embodiment, an interval at which the third Wi-Fi device broadcasts the seventh broadcast message is related to quality of service or a performance status of the third Wi-Fi device.

Optionally, in this example, the third Wi-Fi device broadcasts the seventh broadcast message through at least one channel corresponding to the first communication technology.

For a structure of the seventh broadcast message, refer to the foregoing related descriptions of the first broadcast message. Details are not described herein again.

It should be noted that, if the third Wi-Fi device also supports the first communication technology, even if the second Wi-Fi device supports the first communication technology, the third information may not be sent by the second Wi-Fi device, but sent by the third Wi-Fi device. For how the third Wi-Fi device transmits the fourth information to the second Wi-Fi device and how the second Wi-Fi device transmits the fourth information to the first Wi-Fi device, refer to the foregoing descriptions provided when the second Wi-Fi device does not support the first communication technology. Details are not described herein again.

If the second Wi-Fi device also supports the second communication technology, even if the third Wi-Fi device supports the second communication technology, the fourth information may not be sent by the third Wi-Fi device, but sent by the second Wi-Fi device. For how the third Wi-Fi device transmits the fourth information to the second Wi-Fi device and how the second Wi-Fi device transmits the fourth information to the first Wi-Fi device, refer to the following descriptions of related solutions provided when the third Wi-Fi device does not support the second communication technology. Details are not described herein again.

In some other embodiments, if the third Wi-Fi device does not support the second communication technology, the third Wi-Fi device may actively broadcast, by using the Wi-Fi communication technology, a message carrying the fourth information, or after receiving a request of a fifth Wi-Fi device that supports the second communication technology, the third Wi-Fi device returns, to the fifth Wi-Fi device by using the Wi-Fi communication technology, a response message carrying the fourth information. In this way, after obtaining, through scanning by using the Wi-Fi communication technology, the message that carries the fourth information and that is sent by the third Wi-Fi device, the fifth Wi-Fi device may include the fourth information in an eighth broadcast message, and broadcast the eighth broadcast message by using the second communication technology. In this way, the first Wi-Fi device can discover more Wi-Fi devices (for example, the second Wi-Fi device and the third Wi-Fi device), and establish communication with more Wi-Fi devices (for example, the second Wi-Fi device or the third Wi-Fi device). In this case, in S770, the first Wi-Fi device may scan the eighth broadcast message by using the second communication technology, and obtain the fourth information from the eighth broadcast message after obtaining the eighth broadcast message through scanning.

In this embodiment, if the fifth Wi-Fi device is the second Wi-Fi device described above, in this case, the second Wi-Fi device supports the second communication technology, that is, both the third information and the fourth information are broadcast by the second Wi-Fi device. In this case, if the first communication technology and the second communication technology are a same communication technology, in an example, the eighth broadcast message and the fifth broadcast message may be one message. In this case, the second Wi-Fi device includes the fourth information and the third information in one broadcast message for broadcasting. In another example, the eighth broadcast message and the fifth broadcast message may alternatively be different messages. In this case, the second Wi-Fi device includes the fourth information and the third information in different broadcast messages for broadcasting. In this case, if the first communication technology and the second communication technology are different communication technologies, the eighth broadcast message and the fifth broadcast message are different messages.

Optionally, in this embodiment, an interval at which the fifth Wi-Fi device broadcasts the eighth broadcast message is related to quality of service or a performance status of the fifth Wi-Fi device.

Optionally, in this embodiment, the fifth Wi-Fi device may broadcast the eighth broadcast message through at least one channel.

For a structure of the eighth broadcast message, refer to the foregoing related descriptions of the structure of the first broadcast message. Details are not described herein again.

In addition, the first Wi-Fi device may further adjust, based on a moving speed of the first Wi-Fi device, an interval for obtaining the third information by using the first communication technology and/or an interval for obtaining the fourth information by using the second communication technology.

S780: The first Wi-Fi device sends the second request message to the third Wi-Fi device based on the fourth information by using the Wi-Fi communication technology. Correspondingly, the third Wi-Fi device receives the second request message from the first Wi-Fi device by using the Wi-Fi communication technology.

The second request message may or may not carry an identifier of the first Wi-Fi device. This is not limited in this application. In addition, the second request message may or may not carry the identifier of the third Wi-Fi device. This is not limited in this application. When the second request message carries the identifier of the third Wi-Fi device, the first Wi-Fi device may send the second request message to the third Wi-Fi device in a unicast form based on the fourth information by using the Wi-Fi communication technology. When the second request message does not carry the identifier of the third Wi-Fi device, the first Wi-Fi device may send the second request message to the third Wi-Fi device in a broadcast form based on the fourth information by using the Wi-Fi communication technology.

In an example, if the fourth information includes the moment at which the third Wi-Fi device starts listening on the second target channel, in S780, the first Wi-Fi device may send the second request message on the second target channel based on the moment at which the third Wi-Fi device starts listening on the second target channel and the interval at which the third Wi-Fi device listens on the second target channel.

In another example, regardless of whether the fourth information includes the moment at which the third Wi-Fi device starts listening on the second target channel, in S780, the first Wi-Fi device may estimate the moment at which the third Wi-Fi device starts listening on the second target channel, and send the second request message on the second target channel based on the estimated sending moment of the second request message and the interval at which the third Wi-Fi device listens on the second target channel. In this way, impact of a clock offset of the first Wi-Fi device and the third Wi-Fi device on sending of the second request message can be reduced, thereby reducing overheads of clock synchronization. In addition, accurate and high-precision clock synchronization and frequent clock synchronization operations do not need to be performed between the first Wi-Fi device and the third Wi-Fi device.

In this example, S780 specifically includes S781 and S782. The following describes S781 and S782 in detail.

S781: The first Wi-Fi device estimates a listening start moment of the third Wi-Fi device on the second target channel based on the time that has elapsed since the third Wi-Fi device starts listening on the second target channel last time, the interval at which the third Wi-Fi device listens on the second target channel, the current local time of the first Wi-Fi device, and a moment at which the fourth information is obtained, that is, estimates a moment at which the third Wi-Fi device expects to listen to the second request message on the second target channel.

Specifically, the first Wi-Fi device estimates a $u^{th}$ listening start moment $t_u$ of the third Wi-Fi device on the second target channel according to the following formula:

$$t_u = \begin{cases} -(t - t_{r4} + t_{e4}) + \sum_{L=0}^{u} t_{b4}^{L}, u = 1 \\ -\left[ (t - t_{r4} + t_{e4}) \bmod \sum_{L=0}^{u-1} t_{b4}^{L} \right] + \sum_{L=0}^{u} t_{b4}^{L}, u \geq 2 \end{cases}$$

Herein, t is the current local time of the first Wi-Fi device; $t_{r4}$ is a local moment at which the first Wi-Fi device obtains the fourth information; $t_{e4}$ is the time that has elapsed since the third Wi-Fi device starts listening on the second target channel last time; u=1, 2, 3, ...; L=0, 1, 2, 3, ...; and when L≥1, $t_{b4}^{L}$ is an interval at which the third Wi-Fi device listens on the second target channel for an $L^{th}$ time; or when L=0, $t_{b4}^{0} = 0$ .

It should be noted that, if the fourth information carries an interval sequence in which the third Wi-Fi device listens on the second target channel, when L≥1, $t_{b4}^{L}$ is a time interval between an $L^{th}$ time of listening and an $(L-1)^{th}$ time of listening of the third Wi-Fi device on the second target channel, that is, a value corresponding to an $L^{th}$ element in the interval sequence in which the third Wi-Fi device listens on the second target channel.

S782: The first Wi-Fi device sends the second request message based on the estimated listening start moment of the third Wi-Fi device on the second target channel by using the Wi-Fi communication technology and the second target channel.

After the third Wi-Fi device detects the second request message on the second target channel, the third Wi-Fi device performs S790.

S790: The third Wi-Fi device sends a second response message to the first Wi-Fi device by using the Wi-Fi communication technology. Correspondingly, the first Wi-Fi device scans the second response message from the third Wi-Fi device by using the Wi-Fi communication technology.

The second response message is used to enable the third Wi-Fi device to be discoverable. The second response message is a response message of the second request message, and the second response message may be referred to as a probe response frame.

If the second request message includes the identifier of the first Wi-Fi device, the third Wi-Fi device sends the second response message to the first Wi-Fi device in a unicast form based on the identifier of the first Wi-Fi device in the second request message by using the Wi-Fi communication technology. If the second request message does not include the identifier of the first Wi-Fi device, the third Wi-Fi device sends the second response message to the first Wi-Fi device in a broadcast form by using the Wi-Fi communication technology.

Optionally, in some embodiments, the fourth information further includes at least one of the following: quality of service QoS information of the third Wi-Fi device and information related to establishing a connection and/or communication with the third Wi-Fi device. In this way, as shown in FIG. 18, before S780, the method 700 further includes S800: The first Wi-Fi device determines, based on the fourth information, that the third Wi-Fi device meets the fourth condition.

It should be noted that if it is determined, based on the fourth information, that the third Wi-Fi device does not meet the fourth condition, S780 does not need to be performed.

For example, the QoS information of the third Wi-Fi device includes a performance indicator of the third Wi-Fi device and/or a network change status of the third Wi-Fi device.

For example, the information related to establishing a connection and/or communication with the third Wi-Fi device includes: information related to at least one type of service supported by the third Wi-Fi device, at least one access and authentication type supported by the third Wi-Fi device, and/or a configuration parameter for performing authentication and session transmission with the third Wi-Fi device.

For example, the information related to the at least one type of service supported by the third Wi-Fi device includes: a transmission parameter of the at least one type of service supported by the third Wi-Fi device, and/or a service policy of the at least one type of service supported by the third Wi-Fi device.

It should be noted that for examples of the configuration parameter, the transmission parameter, and the service policy, refer to the foregoing related descriptions. Details are not described herein again.

In an embodiment in which the fourth information further includes the QoS information of the third Wi-Fi device, the QoS information of the third Wi-Fi device is carried in $R_1$ attribute fields of a sixth message. A value of each of the $R_1$ attribute fields and/or a value of $R_1$ are/is determined based on at least one of the following: a real-time running status of the third Wi-Fi device, a real-time connection mode of the third Wi-Fi device, and/or a real-time communication mode of the third Wi-Fi device.

In an embodiment in which the fourth information further includes the information related to establishing a connection and/or communication with the third Wi-Fi device, the information related to establishing a connection and/or communication with the third Wi-Fi device is carried in $R_2$ attribute fields of the sixth message. A value of each of the $R_2$ attribute fields and/or a value of $R_2$ are/is determined based on at least one of the following: a real-time running status of the third Wi-Fi device, a real-time connection mode of the third Wi-Fi device, and/or a real-time communication mode of the third Wi-Fi device.

The sixth message described above is information carrying the fourth information. For example, the sixth message may be the seventh broadcast message or the eighth broadcast message described above.

The solution related to "the user selects one or more performance indicators from a plurality of performance indicators as the performance indicator of the first AP that should be included in the first information" is also applicable to a solution related to "the user selects one or more performance indicators from a plurality of performance indicators as the performance indicator of the third Wi-Fi device that should be included in the fourth information"; the solution related to "the user selects one or more service types from a plurality of service types supported by the first AP, and uses the first information to carry information related to the one or more selected services" is also applicable to a solution related to "the user selects one or more service types from a plurality of service types supported by the third Wi-Fi device, and uses the fourth information to carry information related to the one or more selected services"; the solution related to "the user selects one or more access and authentication types from a plurality of access and authentication types, and uses the first information to carry the access and authentication types" is also applicable to a solution related to "the user selects one or more access and authentication types from a plurality of access and authentication types, and uses the fourth information to carry the access and authentication types"; and the solution related to "the user selects one or more configuration parameters from a plurality of configuration parameters, and uses the first information to carry the configuration parameters" is also applicable to a solution related to "the user selects one or more configuration parameters from a plurality of configuration parameters, and uses the fourth information to carry the configuration parameters". Therefore, for related descriptions, refer to the descriptions in the method 500. Details are not described herein again.

Optionally, in some embodiments, as shown in FIG. 19A and FIG. 19B, after S710 and S770, and before S720 and S780, the first Wi-Fi device may further perform S810, and S720, S730, S780, and S790 may be specifically replaced with S820. The following describes S810 and S820 in detail.

S810: The first Wi-Fi device generates a channel sending sequence {B1, B2}.

Specifically, the first Wi-Fi device may first generate listen time mapping information of target channels (such as the first target channel and the second target channel) based on the moment at which the second Wi-Fi device starts listening on the first target channel (which may be carried in the third information or may be estimated by the first Wi-Fi device), the first target channel, the moment at which the third Wi-Fi device starts listening on the second target channel (which may be carried in the fourth information or may be estimated by the first Wi-Fi device), and the second target channel, where the listen time mapping information of the target channels indicates that other Wi-Fi devices (such as the second Wi-Fi device and the third Wi-Fi device) sequentially listen to a request message on a specific channel at specific time as time goes on. Then, the first Wi-Fi device generates the channel sending sequence {B1, B2} based on the listen time mapping information of the target channels and an optimization algorithm.

B1 is the first target channel, B2 is the second target channel, a third delay is less than a fourth delay, the third delay includes a delay, from a second moment, of first switching to the first target channel to send the first request message and scan the first response message and then switching to the second target channel to send the second request message and scan the second response message, and the fourth delay includes a delay, from the second moment, of first switching to the second target channel to send the second request message and scan the second response message and then switching to the first target channel to send the first request message and scan the first response message.

In other words, the first Wi-Fi device compares the delay, from the second moment, of first switching to the first target channel to send the first request message and scan the first response message and then switching to the second target channel to send the second request message and scan the second response message (one manner of sending a request message and scanning a response message) with the delay, from the second moment, of first switching to the second target channel to send the second request message and scan the second response message and then switching to the first target channel to send the first request message and scan the first response message (another manner of sending a request message and scanning a response message), and generates the channel sending sequence {B1, B2} based on a manner corresponding to a shorter delay. The channel sending sequence {B1, B2} indicates the first Wi-Fi device to sequentially send the first request message and scan the first response message on the first target channel, and send the second request message and scan the second response message on the second target channel as time goes on. This reduces a delay in obtaining, by the first Wi-Fi device through scanning, response messages of all Wi-Fi devices (such as the second Wi-Fi device and the third Wi-Fi device) that can provide a Wi-Fi network service, and reduces power consumption of the first Wi-Fi device, thereby helping further improve user experience.

The second moment in this embodiment of this application may be any moment, and a specific value of the first moment is not limited in this embodiment of this application.

S820: The first Wi-Fi device sequentially sends the first request message and scans the first response message, and sends the second request message and scans the second response message based on the channel sending sequence by using the Wi-Fi communication technology.

Specifically, the first Wi-Fi device first switches to the first target channel B1 to send the first request message, and then switches to the second target channel B2 to send the second request message.

Optionally, in some embodiments, in a gap of switching from the first target channel to the second target channel, sending of a request message (for example, the first request message and the second request message) and scanning for a response message (for example, the first response message and the second response message) by using the Wi-Fi communication technology are stopped.

For example, if the first Wi-Fi device includes a Wi-Fi radio frequency module, the first Wi-Fi device enables the Wi-Fi radio frequency module to be in a sleep state in the gap of switching from the first target channel to the second target channel. In this way, power consumption of the first Wi-Fi device can be further reduced.

For another example, if the first Wi-Fi device includes a Wi-Fi radio frequency module, the first Wi-Fi device exchanges common data instead of sending a request message and scanning a response message by using the Wi-Fi radio frequency module in the gap of switching from the first target channel to the second target channel. In this way, impact of a Wi-Fi scanning operation on normal service communication can be reduced.

In an embodiment in which the fourth information includes the information related to establishing a connection and/or communication with the third Wi-Fi device, the first Wi-Fi device can directly establish a connection and communicate with the third Wi-Fi device based on the fourth information without performing a complex bidirectional interaction procedure (such as permission authentication, channel selection, and session negotiation) with the third Wi-Fi device, thereby accelerating a process of connection establishment and communication between the first Wi-Fi device and the third Wi-Fi device. In this case, the method 700 further includes S830 and S840a, or the method 700 further includes S830 and S840b. The following describes S830, S840a, and S840b in detail.

S830: Based on the identifier of the third Wi-Fi device, the first Wi-Fi device determines whether the logged-in account on the first Wi-Fi device and a logged-in account on the third Wi-Fi device belong to a same domain account, or determines whether the third Wi-Fi device belongs to the trusted device group of the first Wi-Fi device.

When the logged-in account on the first Wi-Fi device and the logged-in account on the third Wi-Fi device belong to the same domain account, or the third Wi-Fi device belongs to the trusted device group of the first Wi-Fi device, S840a is performed: Establish a session connection with the third Wi-Fi device based on the fourth information.

When the logged-in account on the first Wi-Fi device and the logged-in account on the third Wi-Fi device do not belong to the same domain account, or the third Wi-Fi device does not belong to the trusted device group of the first Wi-Fi device, S840b is performed: Perform authentication on a session between the first Wi-Fi device and the third Wi-Fi device based on the fourth information, and establish a session connection with the third Wi-Fi device based on the fourth information when the authentication on the session succeeds.

For example, establishing the session connection with the third Wi-Fi device based on the fourth information includes: establishing the session connection with the third Wi-Fi device based on the fourth information and a fourth performance status, where the fourth performance status includes a current performance status of the first Wi-Fi device and/or a current performance status of the third Wi-Fi device.

When the fourth performance status meets a sixth condition, a transmission channel corresponding to a service is created based on the fourth information. When the fourth performance status does not meet a sixth condition, a transmission channel of a target type is created based on the fourth information. The sixth condition includes: communication quality of the first Wi-Fi device is greater than a thirteenth threshold, communication quality of the third Wi-Fi device is greater than a fourteenth threshold, resource usage of the first Wi-Fi device is less than a fifteenth threshold, and resource usage of the third Wi-Fi device is less than a sixteenth threshold.

It should be noted that, in the method 700, the first Wi-Fi device may not support simultaneous establishment of connections with a plurality of other Wi-Fi devices in a same time period. For example, the first Wi-Fi device includes only a communication module that can provide one communication technology and one processor. In addition, if the first Wi-Fi device receives, from a plurality of other Wi-Fi devices, information related to listening to a request message by the Wi-Fi devices, for example, third information related to listening to the first request message by the second Wi-Fi device and third information related to listening to the second request message by the third Wi-Fi device, the first Wi-Fi device can establish a session connection with only one Wi-Fi device (the second Wi-Fi device or the third Wi-Fi device) in the plurality of other Wi-Fi devices in a same time period. For example, in the same time period, the first Wi-Fi device can perform only one of the foregoing steps S760a and S840a, or the first Wi-Fi device can perform only one of the foregoing steps S760a and S840b, or the first Wi-Fi device can perform only one of the foregoing steps S760b and S840a, or the first Wi-Fi device can perform only one of the foregoing steps S760b and S840b.

In the method 700, the first Wi-Fi device may support simultaneous establishment of connections with a plurality of other Wi-Fi devices in a same time period. For example, the first Wi-Fi device includes a plurality of communication modules that can provide a plurality of communication technologies and a plurality of processors. In addition, if the first Wi-Fi device receives, from a plurality of other Wi-Fi devices, information related to listening to a request message by the Wi-Fi devices, for example, third information related to listening to the first request message by the second Wi-Fi device and third information related to listening to the second request message by the third Wi-Fi device, the first Wi-Fi device can simultaneously establish session connections with the plurality of other Wi-Fi devices (the second Wi-Fi device and the third Wi-Fi device) in a same time period. For example, in the same time period, the first Wi-Fi device may simultaneously perform S760a and S840a described above, or may simultaneously perform S760a and S840b described above, or may simultaneously perform S760b and S840a described above, or may simultaneously perform S760b and S840b described above.

According to the method 700, after the user turns on a WLAN switch or start an application (such as a projection program or a distributed stream transfer (message or file cross-device transfer) program) of a mobile phone (an example of the first Wi-Fi device), the mobile phone may detect information (such as the third information and the fourth information described above) related to listening on a channel by a Wi-Fi device (such as a smart screen, which is an example of the second Wi-Fi device or the third Wi-Fi device) that can provide a Wi-Fi network service near the mobile phone, and send, based on the information related to listening on the channel by the Wi-Fi device that can provide a Wi-Fi network service, a request message to the Wi-Fi device that can provide a Wi-Fi network service, so as to obtain, through scanning, a response message of the Wi-Fi device that can provide a Wi-Fi network service. In this way, the mobile phone accesses a corresponding Wi-Fi network. In this way, a function of communication between the mobile phone and the Wi-Fi device that can provide a Wi-Fi network service can be implemented.

It should be noted that for a part that is not described in detail in the method 700, refer to corresponding descriptions in the method 500. In addition, for technical effects of the solutions in the method 700, refer to descriptions of technical effects of corresponding solutions in the method 500. Details are not described herein again.

The communication method 700 provided in embodiments of this application is described in detail above with reference to FIG. 17 to FIG. 19A and FIG. 19B. The communication method 700 is mainly described from a perspective of interaction between the first Wi-Fi device, the second Wi-Fi device, and the third Wi-Fi device. It may be understood that, to implement the foregoing functions, the first Wi-Fi device, the second Wi-Fi device, and the third Wi-Fi device include corresponding hardware structures and/or software modules for performing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

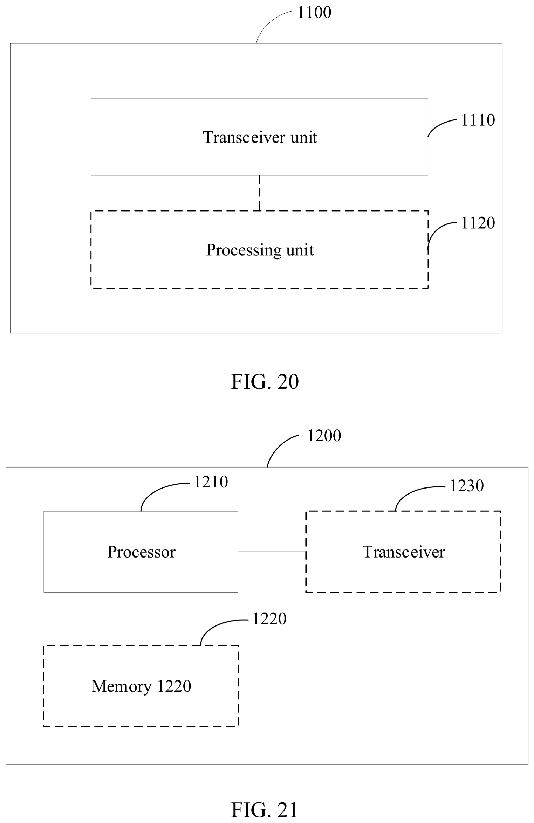

The communication apparatus provided in embodiments of this application is described below in detail with reference to FIG. 20 and FIG. 21. It should be understood that descriptions of apparatus embodiments correspond to the descriptions of the method embodiments. Therefore, for content that is not described in detail, refer to the foregoing method embodiments. For brevity, some content is not described again.

In embodiments of this application, a first STA, a first AP, or a second AP may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner. An example in which each functional module is obtained through division based on each corresponding function is used below for description.

FIG. 20 is a block diagram of a communication apparatus 1100 according to an embodiment of this application. The communication apparatus 1100 includes a transceiver unit 1110, and the transceiver unit 1110 may implement a corresponding communication function. The transceiver unit 1110 may also be referred to as a communication interface or a communication unit.

Optionally, the communication apparatus 1100 may further include a processing unit 1120, and the processing unit 1120 is configured to perform data processing.

Optionally, the communication apparatus 1100 may further include a storage unit. The storage unit may be configured to store instructions and/or data. The processing unit 1120 may read the instructions and/or the data in the storage unit, so that the apparatus implements the foregoing method embodiments.

In a design, the communication apparatus 1100 is configured to perform the action performed by the first STA in the foregoing method 500. In this case, the communication apparatus 1100 may be the first STA or a component that can be configured in the first STA. The transceiver unit 1110 is configured to perform receiving and sending-related operations on the first STA side in the foregoing method embodiments. The processing unit 1120 is configured to perform a processing-related operation on the first STA side in the foregoing method embodiments.

In a possible implementation, the transceiver unit 1110 is configured to: obtain first information by using a first communication technology, where the first information includes an identifier of a first AP, a sending moment of a first message or time that has elapsed since last transmission of the first message, a channel occupied by the first message, and a sending interval of the first message, the first message is used to enable the first AP to be discoverable, and the first message is broadcast by the first AP by using a Wi-Fi communication technology; and scan the first message based on the first information by using the Wi-Fi communication technology.

The communication apparatus 1100 may implement a step or a procedure performed by the first STA in the method 500 according to embodiments of this application, and the communication apparatus 1100 may include units configured to perform the method performed by the first STA in the method 500. In addition, the units in the communication apparatus 1100 and the foregoing other operations and/or functions are separately used to implement corresponding procedures of the method embodiment of the first STA in the method 500.

When the communication apparatus 1100 is configured to perform the method 500 in FIG. 6, the transceiver unit 1110 may be configured to perform sending and receiving steps in the method, for example, step S530; and the processing unit 1120 may be configured to perform processing steps in the method, for example, step S510. When the communication apparatus 1100 is configured to perform the method 500 in FIG. 9, the transceiver unit 1110 may be configured to perform sending and receiving steps in the method, for example, step S530; and the processing unit 1120 may be configured to perform processing steps in the method, for example, steps S510, S540, S550, S560a, and S560b. When the communication apparatus 1100 is configured to perform the method 500 in FIG. 12A and FIG. 12B, the transceiver unit 1110 may be configured to perform sending and receiving steps in the method, for example, step S620; and the processing unit 1120 may be configured to perform processing steps in the method, for example, steps S510, S540, S570, S600 to S620, S550, S560a, S560b, S630, S640a, and S640b.

It should be understood that a specific process in which the units perform the foregoing corresponding steps is described in detail in the foregoing method embodiments. For brevity, details are not described herein.

In another design, the communication apparatus 1100 is configured to perform the action performed by the first AP in the foregoing method 500.

In a possible implementation, the transceiver unit 1110 is configured to: send first information by using a first communication technology, where the first information includes an identifier of the first AP, a sending moment of a first message or time that has elapsed since last transmission of the first message, a channel occupied by the first message, and a sending interval of the first message, and the first message is used to enable the first AP to be discoverable; and broadcast the first message by using a Wi-Fi communication technology.

The communication apparatus 1100 may implement a step or a procedure performed by the first AP in the method 500 according to embodiments of this application, and the communication apparatus 1100 may include units configured to perform the method performed by the first AP in the method 500. In addition, the units in the communication apparatus 1100 and the foregoing other operations and/or functions are separately used to implement corresponding procedures of the method embodiment of the first AP in the method 500.

When the communication apparatus 1100 is configured to perform the method 500 in FIG. 6, FIG. 9, or FIG. 12A and FIG. 12B, the transceiver unit 1110 may be configured to perform receiving and sending steps in the method, for example, step S520.

It should be understood that a specific process in which the units perform the foregoing corresponding steps is described in detail in the foregoing method embodiments. For brevity, details are not described herein.

In another design, the communication apparatus 1100 is configured to perform the action performed by the second AP in the foregoing method 500.

In a possible implementation, the transceiver unit 1110 is configured to: send second information by using a second communication technology, where the second information includes an identifier of the second AP, a sending moment of a second message or time that has elapsed since last transmission of the second message, a channel occupied by the second message, and a sending interval of the second message, and the second message is used to enable the second AP to be discoverable; and broadcast the second message by using a Wi-Fi communication technology.

The communication apparatus 1100 may implement a step or a procedure performed by the second AP in the method 500 according to embodiments of this application, and the communication apparatus 1100 may include units configured to perform the method performed by the second AP in the method 500. In addition, the units in the communication apparatus 1100 and the foregoing other operations and/or functions are separately used to implement corresponding procedures of the method embodiment of the second AP in the method 500.

When the communication apparatus 1100 is configured to perform the method 500 in FIG. 12A and FIG. 12B, the transceiver unit 1110 may be configured to perform receiving and sending steps in the method, for example, step S580.

It should be understood that a specific process in which the units perform the foregoing corresponding steps is described in detail in the foregoing method embodiments. For brevity, details are not described herein.

In another design, the communication apparatus 1100 is configured to perform the action performed by the first Wi-Fi device in the foregoing method 700. In this case, the communication apparatus 1100 may be the first Wi-Fi device or a component that can be configured in the first Wi-Fi device. The transceiver unit 1110 is configured to perform receiving and sending-related operations on the first Wi-Fi device side in the foregoing method embodiments. The processing unit 1120 is configured to perform a processing-related operation on the first Wi-Fi device side in the foregoing method embodiments.

In a possible implementation, the processing unit 1120 is configured to obtain third information by using a first communication technology, where the third information includes an identifier of a second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a Wi-Fi communication technology, the first request message is used to request to discover a device that can provide a Wi-Fi network service, and the first request message includes an identifier of the first Wi-Fi device; and the transceiver unit 1110 is configured to: send the first request message to the second Wi-Fi device based on the third information by using the Wi-Fi communication technology; and scan a first response message from the second Wi-Fi device by using the Wi-Fi communication technology, where the first response message is used to enable the second Wi-Fi device to be discoverable.

The communication apparatus 1100 may implement a step or a procedure performed by the first Wi-Fi device in the method 700 according to embodiments of this application, and the communication apparatus 1100 may include units configured to perform the method performed by the first Wi-Fi device in the method 700. In addition, the units in the communication apparatus 1100 and the foregoing other operations and/or functions are separately used to implement corresponding procedures of the method embodiment of the first Wi-Fi device in the method 500.

When the communication apparatus 1100 is configured to perform the method 700 in FIG. 17, the transceiver unit 1110 may be configured to perform sending and receiving steps in the method, for example, steps S720 and S730; and the processing unit 1120 may be configured to perform processing steps in the method, for example, step S710. When the communication apparatus 1100 is configured to perform the method 700 in FIG. 18, the transceiver unit 1110 may be configured to perform sending and receiving steps in the method, for example, steps S720 and S730; and the processing unit 1120 may be configured to perform processing steps in the method, for example, steps S710, S740, S750, S760a, and S760b. When the communication apparatus 1100 is configured to perform the method 700 in FIG. 19A and FIG. 19B, the transceiver unit 1110 may be configured to perform sending and receiving steps in the method, for example, steps S720, S730, S780, and S790; and the processing unit 1120 may be configured to perform processing steps in the method, for example, steps S710, S740, S770, S800 to S830, S750, S760a, S760b, S840a, and S840b.

It should be understood that a specific process in which the units perform the foregoing corresponding steps is described in detail in the foregoing method embodiments. For brevity, details are not described herein.

In another design, the communication apparatus 1100 is configured to perform the action performed by the second Wi-Fi device in the foregoing method 700.

In a possible implementation, the transceiver unit 1110 is configured to: send third information by using a first communication technology, where the third information includes an identifier of the second Wi-Fi device, a first target channel on which the second Wi-Fi device listens to a first request message, a moment at which the second Wi-Fi device starts listening on the first target channel or time that has elapsed since the second Wi-Fi device starts listening on the first target channel last time, and an interval at which the second Wi-Fi device listens on the first target channel, the first communication technology is a communication technology other than a wireless fidelity Wi-Fi communication technology, and the first request message is used to request to discover a device that can provide a Wi-Fi network service; listen to the first request message from a first Wi-Fi device on the first target channel by using the Wi-Fi communication technology; and send a first response message to the first Wi-Fi device based on the first request message by using the Wi-Fi communication technology, where the first response message is used to enable the second Wi-Fi device to be discoverable.

The communication apparatus 1100 may implement a step or a procedure performed by the second Wi-Fi device in the method 700 according to embodiments of this application, and the communication apparatus 1100 may include units configured to perform the method performed by the second Wi-Fi device in the method 700. In addition, the units in the communication apparatus 1100 and the foregoing other operations and/or functions are separately used to implement corresponding procedures of the method embodiment of the second Wi-Fi device in the method 700.

When the communication apparatus 1100 is configured to perform the method 700 in FIG. 17, the transceiver unit 1110 may be configured to perform receiving and sending steps in the method, for example, steps S720 and S730. When the communication apparatus 1100 is configured to perform the method 700 in FIG. 18 or FIG. 19A and FIG. 19B, the transceiver unit 1110 may be configured to perform sending and receiving steps in the method, for example, steps S720 and S730; and the processing unit 1120 may be configured to perform processing steps in the method, for example, steps S760a and S760b.

It should be understood that a specific process in which the units perform the foregoing corresponding steps is described in detail in the foregoing method embodiments. For brevity, details are not described herein.

In another design, the communication apparatus 1100 is configured to perform the action performed by the third Wi-Fi device in the foregoing method 700.

In a possible implementation, the transceiver unit 1110 is configured to: send fourth information by using a second communication technology, where the fourth information includes an identifier of the third Wi-Fi device, a second target channel on which the third Wi-Fi device listens to a second request message, a moment at which the third Wi-Fi device starts listening on the second target channel or time that has elapsed since the third Wi-Fi device starts listening on the second target channel last time, and an interval at which the third Wi-Fi device listens on the second target channel, and the second request message is used to request to discover a device that can provide a Wi-Fi network service; listen to the second request message from a first Wi-Fi device on the second target channel by using a Wi-Fi communication technology; and send a second response message to the first Wi-Fi device based on the second request message by using the Wi-Fi communication technology, where the second response message is used to enable the third Wi-Fi device to be discoverable.

The communication apparatus 1100 may implement a step or a procedure performed by the third Wi-Fi device in the method 700 according to embodiments of this application, and the communication apparatus 1100 may include units configured to perform the method performed by the third Wi-Fi device in the method 700. In addition, the units in the communication apparatus 1100 and the foregoing other operations and/or functions are separately used to implement corresponding procedures of the method embodiment of the third Wi-Fi device in the method 700.

When the communication apparatus 1100 is configured to perform the method 700 in FIG. 19A and FIG. 19B, the transceiver unit 1110 may be configured to perform receiving and sending steps in the method, for example, steps S780 and S790. The processing unit 1120 may be configured to perform processing steps in the method, for example, steps S840a and S840b.

It should be understood that a specific process in which the units perform the foregoing corresponding steps is described in detail in the foregoing method embodiments. For brevity, details are not described herein.

The processing unit 1120 in the foregoing embodiments may be implemented by at least one processor or a processor-related circuit. The transceiver unit 1110 may be implemented by a transceiver or a transceiver-related circuit. The storage unit may be implemented by at least one memory.

As shown in FIG. 21, an embodiment of this application further provides a communication apparatus 1200. The communication apparatus 1200 includes a processor 1210, and may further include one or more memories 1220. The processor 1210 is coupled to the memory 1220. The memory 1220 is configured to store a computer program or instructions and/or data. The processor 1210 is configured to execute the computer program or the instructions and/or the data stored in the memory 1220, so that the method in the foregoing method embodiments is performed. Optionally, the communication apparatus 1200 includes one or more processors 1210.

Optionally, the memory 1220 and the processor 1210 may be integrated together, or may be disposed separately.

Optionally, as shown in FIG. 21, the communication apparatus 1200 may further include a transceiver 1230. The transceiver 1230 is configured to receive a signal and/or send a signal. For example, the processor 1210 is configured to control the transceiver 1230 to receive a signal and/or send a signal.

In a solution, the communication apparatus 1200 is configured to implement the operations performed by the first STA in the foregoing method 500 or 700.

In another solution, the communication apparatus 1200 is configured to implement the operations performed by the first AP in the foregoing method 500.

In another solution, the communication apparatus 1200 is configured to implement the operations performed by the second AP in the foregoing method 500.

In another solution, the communication apparatus 1200 is configured to implement the operations performed by the first Wi-Fi device in the foregoing method 700.

In another solution, the communication apparatus 1200 is configured to implement the operations performed by the second Wi-Fi device in the foregoing method 700.

In another solution, the communication apparatus 1200 is configured to implement the operations performed by the third Wi-Fi device in the foregoing method 700.

An embodiment of this application provides a readable storage medium. The readable storage medium includes instructions. When the instructions are run on a device, the device is enabled to perform the technical solutions in the foregoing embodiments. Implementation principles and technical effects thereof are similar, and details are not described herein again. The device may include the first STA, the first AP, the second AP, the first Wi-Fi device, the second Wi-Fi device, or the third Wi-Fi device described in the foregoing embodiments.

An embodiment of this application provides a computer program product. When the computer program product runs on a device, the device is enabled to perform the technical solutions in the foregoing embodiments. Implementation principles and technical effects thereof are similar to those of the foregoing method embodiments. Details are not described herein again. The device may include the first STA, the first AP, the second AP, the first Wi-Fi device, the second Wi-Fi device, or the third Wi-Fi device described in the foregoing embodiments.

An embodiment of this application further provides a communication system. The communication system includes the first STA and the first AP in the foregoing method 500. Optionally, the communication system may further include the second AP in the foregoing method 500.

An embodiment of this application further provides another communication system. The communication system includes the first Wi-Fi device and the second Wi-Fi device described in the foregoing method 700. Optionally, the communication system may further include the third Wi-Fi device described in the foregoing method 700.

For explanations and beneficial effects of related content of any one of the apparatuses provided above, refer to the corresponding method embodiment provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, functional units in embodiments of this application may be integrated into one unit, or each unit may exist alone physically, or two or more units may be integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner.

The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the communication method is applied to a first station STA, and the communication method comprises:

    obtaining first information by using a first communication technology, wherein the first information comprises an identifier of a first access point AP, a sending moment of a first message or time that has elapsed since last transmission of the first message, a channel occupied by the first message, and a sending interval of the first message, the first communication technology is a communication technology other than a wireless fidelity Wi-Fi communication technology, the first message is used to enable the first AP to be discoverable, and the first message is broadcast by the first AP by using the Wi-Fi communication technology; and
    scanning the first message based on the first information by using the Wi-Fi communication technology.

2. The communication method according to claim 1, wherein the first information further comprises at least one of the following: quality of service QoS information of the first AP and information related to establishing a connection and/or communication with the first AP; and before scanning the first message based on the first information by using the Wi-Fi communication technology, the communication method further comprises:
    determining, based on the first information, that the first AP meets a first condition, wherein the first condition comprises at least one of the following: belonging to a trusted device group of the first STA, belonging to a public reliable infrastructure, meeting a QoS requirement of the first STA, and being capable of providing a connection mode and/or a communication mode supported by the first STA.

3. The communication method according to claim 1 or 2, wherein when the first information comprises the time that has elapsed since last transmission of the first message, scanning the first message based on the first information by using the Wi-Fi communication technology comprises:

    estimating the sending moment of the first message based on the time that has elapsed since last transmission of the first message, the sending interval of the first message, current local time of the first STA, and a moment at which the first information is obtained; and
    scanning the first message based on the estimated sending moment of the first message by using the Wi-Fi communication technology and the channel occupied by the first message.

4. The communication method according to any one of claims 1 to 3, wherein the communication method further comprises:

    obtaining second information by using a second communication technology, wherein the second information comprises an identifier of a second AP, a sending moment of a second message or time that has elapsed since last transmission of the second message, a channel occupied by the second message, and a sending interval of the second message, the second information further comprises at least one of the following: QoS information of the second AP and information related to establishing a connection and/or communication with the second AP, the second communication technology is a communication technology other than the Wi-Fi communication technology, the second message is used to enable the second AP to be discoverable, and the second message is broadcast by the second AP by using the Wi-Fi communication technology;
    determining, based on the second information, whether the second AP meets the first condition; and
    when the second AP meets the first condition, scanning the second message based on the second information by using the Wi-Fi communication technology; or

when the second AP does not meet the first condition, determining that the second message does not need to be scanned by using the Wi-Fi communication technology.

5. The communication method according to claim 4, wherein when the second information comprises the time that has elapsed since last transmission of the second message, scanning the second message based on the second information by using the Wi-Fi communication technology comprises:

estimating the sending moment of the second message based on the time that has elapsed since last transmission of the second message, the sending interval of the second message, the current local time of the first STA, and a moment at which the second information is obtained; and

scanning the second message based on the estimated sending moment of the second message by using the Wi-Fi communication technology and the channel occupied by the second message.

6. The communication method according to claim 4 or 5, wherein scanning the first message based on the first information by using the Wi-Fi communication technology, and scanning the second message based on the second information by using the Wi-Fi communication technology comprise:

generating a channel scan sequence {A1, A2}, wherein A1 is the channel occupied by the first message, A2 is the channel occupied by the second message, a first delay is less than a second delay, the first delay comprises a delay, from a first moment, of first switching to the channel occupied by the first message to scan the first message and then switching to the channel occupied by the second message to scan the second message, and the second delay comprises a delay, from the first moment, of first switching to the channel occupied by the second message to scan the second message and then switching to the channel occupied by the first message to scan the first message; and

sequentially scanning the first message and the second message based on the channel scan sequence by using the Wi-Fi communication technology.

7. The communication method according to claim 6, wherein the method further comprises:

stopping scanning a message by using the Wi-Fi communication technology in a gap of switching from the channel occupied by the first message to the channel occupied by the second message.

8. The communication method according to any one of claims 4 to 7, wherein the first communication technology is the same as the second communication technology; and

when the first AP supports the first communication technology and the second AP does not support the first communication technology, both the first information and the second information are broadcast by the first AP; or

when the first AP does not support the first communication technology and the second AP supports the first communication technology, both the first information and the second information are broadcast by the second AP.

9. The communication method according to claim 8, wherein the first information and the second information are carried in a same message or different messages.

10. The communication method according to claim 9, wherein a message broadcast interval of the first AP is related to quality of service or a performance status of the first AP; or

a message broadcast interval of the second AP is related to quality of service or a performance status of the second AP.

11. The communication method according to claim 9 or 10, wherein the first AP or the second AP broadcasts a message through at least one channel corresponding to the first communication technology.

12. The communication method according to any one of claims 2 to 11, wherein when the first information comprises the information related to establishing a connection and/or communication with the first AP, the communication method further comprises:

based on the identifier of the first AP, determining whether a logged-in account on the first STA and a logged-in account on the first AP belong to a same domain account, or determining whether the first AP belongs to the trusted device group of the first STA; and

when the logged-in account on the first STA and the logged-in account on the first AP belong to the same domain account, or the first AP belongs to the trusted device group of the first STA, establishing a session connection with the first AP based on the first information; or

when the logged-in account on the first STA and the logged-in account on the first AP do not belong to the same domain account, or the first AP does not belong to the trusted device group of the first STA, performing authentication on a session between the first STA and the first AP based on the first information, and establishing a session connection with the first AP based on the first information when the authentication on the session succeeds.

13. The communication method according to claim 12, wherein establishing the session connection with the first AP based on the first information comprises:
establishing the session connection with the first AP based on the first information and a first performance status, wherein the first performance status comprises a current performance status of the first STA and/or a current performance status of the first AP.

14. The communication method according to claim 13, wherein establishing the session connection with the first AP based on the first information and the first performance status comprises:

when the first performance status meets a second condition, creating a transmission channel corresponding to a service based on the first information; or

when the first performance status does not meet a second condition, creating a transmission channel of a target type based on the first information, wherein

the second condition comprises at least one of the following: communication quality of the first STA is greater than a first threshold, communication quality of the first AP is greater than a second threshold, resource usage of the first STA is less than a third threshold, and resource usage of the first AP is less than a fourth threshold.

15. The communication method according to any one of claims 4 to 11, wherein when the second AP meets the first condition, and the second information comprises the information related to establishing a connection and/or communication with the second AP, the communication method further comprises:

based on the identifier of the second AP, determining whether a logged-in account on the first STA and a logged-in account on the second AP belong to a same domain account, or determining whether the second AP belongs to the trusted device group of the first STA; and

when the logged-in account on the first STA and the logged-in account on the second AP belong to the same domain account, or the second AP belongs to the trusted device group of the first STA, establishing a session connection with the second AP based on the second information; or

when the logged-in account on the first STA and the logged-in account on the second AP do not belong to the same domain account, or the second AP does not belong to the trusted device group of the first STA, performing authentication on a session between the first STA and the second AP based on the second information, and establishing a session connection with the second AP based on the second information when the authentication on the session succeeds.

16. The communication method according to claim 15, wherein establishing the session connection with the second AP based on the second information comprises:
establishing the session connection with the second AP based on the second information and a second performance status, wherein the second performance status comprises a current performance status of the first STA and/or a current performance status of the second AP.

17. The communication method according to claim 16, wherein establishing the session connection with the second AP based on the second information and the second performance status comprises:

when the second performance status meets a third condition, creating a transmission channel corresponding to a service based on the second information; or

when the second performance status does not meet a third condition, creating a transmission channel of a target type based on the second information, wherein

the third condition comprises: communication quality of the first STA is greater than a fifth threshold, communication quality of the second AP is greater than a sixth threshold, resource usage of the first STA is less than a seventh threshold, and resource usage of the second AP is less than an eighth threshold.

18. The communication method according to any one of claims 1 to 17, wherein the communication method further comprises:
adjusting, based on a moving speed of the first STA, an interval for obtaining the first information by using the first communication technology and/or an interval for obtaining the second information by using the second communication technology.

19. The communication method according to any one of claims 2 to 18, wherein

the QoS information of the first AP is carried in N1 attribute fields of a third message; and/or
the information related to establishing a connection and/or communication with the first AP is carried in N2 attribute fields of the third message, wherein
the third message carries the first information; and
at least one of a value of each of the N1 attribute fields, a value of N1, a value of each of the N2 attribute fields, and a value of N2 is determined based on a real-time running status of the first AP, a real-time connection mode of the first AP, and/or a real-time communication mode of the first AP.

20. The communication method according to any one of claims 2 to 17 and 19, wherein

the QoS information of the first AP comprises a performance indicator of the first AP and/or a network change status of the first AP; and/or
the information related to establishing a connection and/or communication with the first AP comprises: information related to at least one type of service supported by the first AP, and/or at least one access and authentication type supported by the first AP.

21. The communication method according to claim 20, wherein the information related to the at least one type of service supported by the first AP comprises: a transmission parameter of the at least one type of service supported by the first AP, and/or a service policy of the at least one type of service supported by the first AP.

22. The communication method according to any one of claims 4 to 17, wherein

the QoS information of the second AP is carried in M1 attribute fields of a fourth message; and/or
the information related to establishing a connection and/or communication with the second AP is carried in M2 attribute fields of the fourth message, wherein
the fourth message carries the second information; and
at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

23. The communication method according to any one of claims 4 to 17 and 22, wherein

the QoS information of the second AP comprises a performance indicator of the second AP and/or a network change status of the second AP; and/or
the information related to establishing a connection and/or communication with the second AP comprises: information related to at least one type of service supported by the second AP, and/or at least one access and authentication type supported by the second AP.

24. The communication method according to claim 23, wherein the information related to the at least one type of service supported by the second AP comprises: a transmission parameter of the at least one type of service supported by the second AP, and/or a service policy of the at least one type of service supported by the second AP.

25. A communication method, wherein the communication method is applied to a first access point AP, and the communication method comprises:

sending first information by using a first communication technology, wherein the first information comprises an identifier of the first AP, a sending moment of a first message or time that has elapsed since last transmission of the first message, a channel occupied by the first message, and a sending interval of the first message, the first communication technology is a communication technology other than a wireless fidelity Wi-Fi communication technology, and the first message is used to enable the first AP to be discoverable; and

broadcasting the first message by using the Wi-Fi communication technology.

26. The communication method according to claim 25, wherein the first information further comprises at least one of the following: quality of service QoS information of the first AP and information related to establishing a connection and/or communication with the first AP.

27. The communication method according to claim 25 or 26, wherein the method further comprises:

obtaining second information from a second AP by using the Wi-Fi communication technology, wherein the second information comprises an identifier of the second AP, a sending moment of a second message or time that has elapsed since last transmission of the second message, a channel occupied by the second message, and a sending interval of the second message, the second message is used to enable the second AP to be discoverable, and the second message is broadcast by the second AP by using the Wi-Fi communication technology; and sending the second information by using a second communication technology, wherein the second communication technology is a communication technology other than the Wi-Fi communication technology.

28. The communication method according to claim 27, wherein
the second information further comprises at least one of the following: QoS information of the second AP, and information related to establishing a connection and/or communication with the second AP.

29. The communication method according to claim 27 or 28, wherein the second AP does not support the first communication technology.

30. The communication method according to any one of claims 27 to 29, wherein the second information and the first information are carried in a same message or different messages for sending.

31. The communication method according to any one of claims 27 to 30, wherein an interval at which the first AP sends the first information or the second information is related to quality of service or a performance status of the first AP.

32. The communication method according to any one of claims 27 to 31, wherein the first information or the second information is sent by the first AP through at least one channel corresponding to the first communication technology.

33. The communication method according to any one of claims 26 to 32, wherein

the QoS information of the first AP is carried in N1 attribute fields of a third message; and/or
the information related to establishing a connection and/or communication with the first AP is carried in N2 attribute fields of the third message, wherein
the third message carries the first information; and
at least one of a value of each of the N1 attribute fields, a value of N1, a value of each of the N2 attribute fields, and a value of N2 is determined based on a real-time running status of the first AP, a real-time connection mode of the first AP, and/or a real-time communication mode of the first AP.

34. The communication method according to any one of claims 26 to 33, wherein

the QoS information of the first AP comprises a performance indicator of the first AP and/or a network change status of the first AP; and/or
the information related to establishing a connection and/or communication with the first AP comprises: information related to at least one type of service supported by the first AP, and/or at least one access and authentication type supported by the first AP.

35. The communication method according to claim 34, wherein the information related to the at least one type of service supported by the first AP comprises: a transmission parameter of the at least one type of service supported by the first AP, and/or a service policy of the at least one type of service supported by the first AP.

36. The communication method according to any one of claims 27 to 32, wherein

the QoS information of the second AP is carried in M1 attribute fields of a fourth message; and/or
the information related to establishing a connection and/or communication with the second AP is carried in M2 attribute fields of the fourth message, wherein
the fourth message carries the second information; and
at least one of a value of each of the M1 attribute fields, a value of M1, a value of each of the M2 attribute fields, and a value of M2 is determined based on a real-time running status of the second AP, a real-time connection mode of the second AP, and/or a real-time communication mode of the second AP.

37. The communication method according to any one of claims 27 to 32 and 36, wherein

the QoS information of the second AP comprises a performance indicator of the second AP and/or a network change status of the second AP; and/or
the information related to establishing a connection and/or communication with the second AP comprises: information related to at least one type of service supported by the second AP, and/or at least one access and authentication type supported by the second AP.

38. The communication method according to claim 37, wherein the information related to the at least one type of service supported by the second AP comprises: a transmission parameter of the at least one type of service supported by the second AP, and/or a service policy of the at least one type of service supported by the second AP.

39. A communication apparatus, comprising:

one or more processors;
one or more memories; and
one or more computer programs, wherein the one or more computer programs are stored in the one or more memories, the one or more computer programs comprise instructions, and when the instructions are executed by the one or more processors, the communication apparatus is enabled to perform the communication method according to any one of claims 1 to 24.

40. A communication apparatus, comprising:

one or more processors;
one or more memories; and
one or more computer programs, wherein the one or more computer programs are stored in the one or more memories, the one or more computer programs comprise instructions, and when the instructions are executed by the one or more processors, the communication apparatus is enabled to perform the communication method according to any one of claims 25 to 38.

41. A communication system, wherein the communication system comprises a first STA and a first AP, wherein the first STA is configured to perform the communication method according to any one of claims 1 to 24, and/or the first AP is configured to perform the communication method according to any one of claims 25 to 38.

42. A computer-readable storage medium, comprising computer instructions, wherein when the computer instructions are run on a communication apparatus, the communication apparatus is enabled to perform the communication method according to any one of claims 1 to 38.

43. A chip, comprising at least one processor and an interface circuit, wherein the interface circuit is configured to provide program instructions or data for the at least one processor, and the at least one processor is configured to execute the program instructions, to implement the communication method according to any one of claims 1 to 38.

44. A computer program product, wherein the computer program product comprises computer instructions; and when a part or all of the computer instructions are run on a computer, the communication method according to any one of claims 1 to 38 is performed.

(a)

(b)

FIG. 1

FIG. 2

Device 100

Antenna 1          Antenna 2

| Mobile communication module 2G/3G/4G/5G [150] | Wireless communication module BT/WLAN/GNSS/NFC/IR/FM [160] |

| Speaker [170A] | | |
| Receiver [170B] | Audio module [170] | |
| Microphone [170C] | | |
| Headset jack [170D] | | |

Displays 1 to N [194]

Cameras 1 to N [193]

Indicator [192]

Motor [191]

Button [190]

Internal memory [121]

SIM card interfaces 1 to N [195]

Interface [120] for external memory

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 3

Access point AP

| Physical layer (PHY) | Media access control (MAC) |

**FIG. 4**

Device 200

Antenna

| Network interface [220] | Communication module WLAN/BT/LoRa/UWB/WiMAX [230] |

Processor [210]

**FIG. 5**

FIG. 6

FIG. 7

FIG. 8(a)

FIG. 8(b)

500

First STA

First AP

S510: Obtain first information by using a first communication technology

S520: Broadcast a first message by using a Wi-Fi communication technology

S540: Determine, based on the first information, that the first AP meets a first condition

S530: Scan the first message based on the first information by using the Wi-Fi communication technology

S550: Based on an identifier of the first AP, determine whether a logged-in account on the first STA and a logged-in account on the first AP belong to a same domain account, or determine whether the first AP belongs to a trusted device group of the first STA

S560a: Establish a session connection with the first AP device based on the first information

S560b: Perform authentication on a session between the first STA and the first AP based on the first information, and establish a session connection with the first AP based on the first information when the authentication on the session succeeds

FIG. 9

330

**Quality of service parameter (assist in accessing Wi-Fi)**

3311

331     Rate

332     Throughput

333     Delay

+    Add

5G 5G     8:00

FIG. 10(a)

FIG. 10(b)

FIG. 10(c)

350
Performance indicator setting

351 Bandwidth 3511

352 Cache

353 Packet loss rate

+ Add

8:00

(a)

360
Bandwidth setting

Detection algorithm

Algorithm 1

Algorithm 2

Algorithm 3

+ Add

8:00

(b)

360
Algorithm setting

Algorithm 4    Download    361

Algorithm 5    Download    362

8:00

(c)

FIG. 11

500

| First STA | First AP | Second AP |

S510: Obtain first information by using a first communication technology

S520: Broadcast a first message by using a Wi-Fi communication technology

S540: Determine, based on the first information, that the first AP meets a first condition

S570: Obtain second information by using a second communication technology

S580: Broadcast a second message by using the Wi-Fi communication technology

S600: Determine, based on the second information, that the second AP meets the first condition

S610: Generate a channel scan sequence {A1, A2}

S620: Sequentially scan the first message and the second message based on the channel scan sequence by using the Wi-Fi communication technology

TO
FIG. 12B

TO
FIG. 12B

TO
FIG. 12B

FIG. 12A

CONT.
FROM
FIG. 12A

CONT.
FROM
FIG. 12A

CONT.
FROM
FIG. 12A

S550: Based on an identifier of the first AP, determine whether a logged-in account on the first STA and a logged-in account on the first AP belong to a same domain account, or determine whether the first AP belongs to a trusted device group of the first STA

S560a: Establish a session connection with the first AP based on the first information

S560b: Perform authentication on a session between the first STA and the first AP based on the first information, and establish a session connection with the first AP based on the first information when the authentication on the session succeeds

S630: Based on an identifier of the second AP, determine whether the logged-in account on the first STA and a logged-in account on the second AP belong to a same domain account, or determine whether the second AP belongs to the trusted device group of the first STA

S640a: Establish a session connection with the second AP based on the second information

S560b: Perform authentication on a session between the first STA and the second AP based on the second information, and establish a session connection with the second AP based on the second information when the authentication on the session succeeds

FIG. 12B

| Preamble | Access address | Protocol data unit | Check |
|---|---|---|---|

| Header | Length | Data | Header | Length | Data |
|---|---|---|---|---|---|

First part — Second part

**FIG. 13**

First message

Channel occupied by the first message

T1  ΔT1  T2  t

(a)

Channel occupied by the second message

ΔT3  T3  ΔT2  t

ΔT4

Second message

(b)

**FIG. 14**

FIG. 15

FIG. 16

700 | First Wi-Fi device

Second Wi-Fi device

S710: Obtain third information by using a first communication technology

S720: Send a first request message by using a Wi-Fi communication technology

S730: Send a first response message by using the Wi-Fi communication technology

FIG. 17

700

First Wi-Fi device

Second Wi-Fi device

S710: Obtain third information by using a first communication technology

S740: Determine, based on the third information, that the second Wi-Fi device meets a fourth condition

S720: Send a first request message by using a Wi-Fi communication technology

S730: Send a first response message by using the Wi-Fi communication technology

S750: Based on an identifier of the second Wi-Fi device, determine whether a logged-in account on the first Wi-Fi device and a logged-in account on the second Wi-Fi device belong to a same domain account, or determine whether the second Wi-Fi device belongs to a trusted device group of the first Wi-Fi device

S760a: Establish a session connection with the second Wi-Fi device based on the third information

S760b: Perform authentication on a session between the first Wi-Fi device and the second Wi-Fi device based on the third information, and establish a session connection with the second Wi-Fi device based on the third information when the authentication on the session succeeds

FIG. 18

700

| First Wi-Fi device | Second Wi-Fi device | Third Wi-Fi device |

S710: Obtain third information by using a first communication technology

S740: Determine, based on the third information, that the second Wi-Fi device meets a fourth condition

S770: Obtain fourth information by using a second communication technology

S800: Determine, based on the fourth information, that the third Wi-Fi device meets the fourth condition

S810: Generate a channel sending sequence {B1, B2}

S820: Sequentially send a first request message and scan a first response message, and send a second request message and scan a second response message based on the channel sending sequence by using a Wi-Fi communication technology

S720: Send the first request message by using the Wi-Fi communication technology

S730: Send the first response message by using the Wi-Fi communication technology

S780: Send the second request message by using the Wi-Fi communication technology

S790: Send the second response message by using the Wi-Fi communication technology

TO
FIG. 19B

TO
FIG. 19B

TO
FIG. 19B

FIG. 19A

CONT.
FROM
FIG. 19A

CONT.
FROM
FIG. 19A

CONT.
FROM
FIG. 19A

S750: Based on an identifier of the second Wi-Fi device, determine whether a logged-in account on the first Wi-Fi device and a logged-in account on the second Wi-Fi device belong to a same domain account, or determine whether the second Wi-Fi device belongs to a trusted device group of the first Wi-Fi device

S760a: Establish a session connection with the second Wi-Fi device based on the third information

S760b: Perform authentication on a session between the first Wi-Fi device and the second Wi-Fi device based on the third information, and establish a session connection with the second Wi-Fi device based on the third information when the authentication on the session succeeds

S830: Based on an identifier of the third Wi-Fi device, determine whether the logged-in account on the first Wi-Fi device and a logged-in account on the third Wi-Fi device belong to a same domain account, or determine whether the third Wi-Fi device belongs to the trusted device group of the first Wi-Fi device

S840a: Establish a session connection with the third Wi-Fi device based on the fourth information

S840b: Perform authentication on a session between the first Wi-Fi device and the third Wi-Fi device based on the fourth information, and establish a session connection with the third Wi-Fi device based on the fourth information when the authentication on the session succeeds

FIG. 19B

1100

Transceiver unit — 1110

Processing unit — 1120

FIG. 20

1200

Processor — 1210

Transceiver — 1230

Memory 1220 — 1220

FIG. 21

**EP 4 648 485 A1**

## INTERNATIONAL SEARCH REPORT

| International application No. |
|---|
| **PCT/CN2023/134780** |

| A. | CLASSIFICATION OF SUBJECT MATTER |
|---|---|

H04W 48/16(2009.01)i; H04W 48/10(2009.01)i; H04W 12/06(2021.01)i

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXT, DWPI, ENTXTC, CJFD, VEN: 接入点, 站点, 消息, 信息, 通信, 发送, 时刻, 时间, 间隔, 信道, 发现, 广播, 扫描, access point, AP, station, message, information, communication, transmission, time, interval, channel, discovery, broadcast, scanning

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 103716857 A (HUAWEI TECHNOLOGIES CO., LTD.) 09 April 2014 (2014-04-09) description, paragraphs 94-227 | 1-44 |
| X | CN 103199901 A (HTC CORP.) 10 July 2013 (2013-07-10) description, paragraphs 34-67 | 1-44 |
| A | US 2016270129 A1 (QUALCOMM INCORPORATED) 15 September 2016 (2016-09-15) entire document | 1-44 |
| A | US 2021045045 A1 (VENIAM, INC.) 11 February 2021 (2021-02-11) entire document | 1-44 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 January 2024** | **02 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134780**

| Patent document cited in search report | | | Publication date (day/month/year) | Patent family member(s) | | | Publication date (day/month/year) |
|---|---|---|---|---|---|---|---|
| CN | 103716857 | A | 09 April 2014 | WO | 2014048227 | A1 | 03 April 2014 |
| CN | 103199901 | A | 10 July 2013 | TW | 201330566 | A | 16 July 2013 |
| | | | | US | 2013178163 | A1 | 11 July 2013 |
| | | | | CN | 103199899 | A | 10 July 2013 |
| | | | | US | 2013178160 | A1 | 11 July 2013 |
| | | | | TW | 201330523A | A | 16 July 2013 |
| | | | | EP | 2615869 | A1 | 17 July 2013 |
| | | | | EP | 2615870 | A1 | 17 July 2013 |
| US | 2016270129 | A1 | 15 September 2016 | WO | 2016144487 | A1 | 15 September 2016 |
| US | 2021045045 | A1 | 11 February 2021 | WO | 2021026189 | A1 | 11 February 2021 |
| | | | | JP | 2022543625 | A | 13 October 2022 |
| | | | | EP | 4011040 | A1 | 15 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310153434